# EUROPÄISCHE PATENTSCHRIFT

(11) **EP 3 707 812 B1**
(45) Veröffentlichungstag und Bekanntmachung des Hinweises auf die Patenterteilung: **14.04.2021**
(21) Anmeldenummer: 18826322.2
(22) Anmeldetag: 19.12.2018
(51) Int. Cl.: H02K 41/03, H02K 11/33, H02K 11/215, G01B 7/02

(54) **STATORMODUL**
STATOR MODULE
MODULE DE STATOR

(30) Priorität: 27.12.2017 DE 102017131314
(43) Veröffentlichungstag der Anmeldung: 16.09.2020
(73) Patentinhaber: Beckhoff Automation GmbH, 33415 Verl (DE)
(72) Erfinder: PRUESSMEIER, Uwe, 32657 Lemgo (DE); BENTFELD, Lukas, 33098 Paderborn (DE); BRINKMANN, Rolf, 32107 Bad Salzuflen (DE); NEUFELD, Joerg, 33104 Paderborn (DE)
(74) Vertreter: Patentanwaltskanzlei WILHELM & BECK
(86) Internationale Anmeldenummer: PCT/EP2018/085787
(87) Internationale Veröffentlichungsnummer: WO 2019/129566

(56) Entgegenhaltungen:
- EP-A1- 3 107 195
- WO-A1-2017/004716
- US-A1- 2010 322 606

## Beschreibung

Die Erfindung betrifft ein Statormodul zum elektromagnetischen Antreiben eines Läufers eines Planarantriebssystems.

Planarantriebssysteme werden unter anderem in der Automatisierungstechnik, insbesondere der Fertigungstechnik, der Handhabungstechnik und der Verfahrenstechnik eingesetzt. Mittels Planarantriebssystemen kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor umfassen, wobei der Planarmotor einen Stator mit einer ebenen, planaren Oberfläche und einem über der Oberfläche in mindestens zwei linear unabhängigen Richtungen beweglichen und angetriebenen Läufer aufweist.

Diese Patentanmeldung beansprucht die Priorität der deutschen Patentanmeldung DE 10 2017 131 314.1, deren Offenbarungsgehalt hiermit durch Rückbezug aufgenommen wird.

Die Erfindung betrifft insbesondere ein Planarantriebssystem mit einem elektromagnetischen Planarmotor, bei dem die Antriebskraft auf den Läufer mittels ortsfest an dem Stator angeordneter und von einem Antriebsstrom durchflossener Leiter erzeugt wird und bei dem das durch den Antriebsstrom erzeugte Magnetfeld mit an dem Läufer angeordneten Antriebsmagneten wechselwirkt. Zur Erzeugung des für die Bewegung des Läufers benötigten Antriebsstroms weist der Stator in der Regel eine oder mehrere Stromerzeugungseinheiten auf. Um eine ausreichende Kraft auf den Läufer übertragen zu können, müssen mitunter Antriebsströme mit hoher Stromstärke erzeugt werden. Dies kann zu hohen Widerstandsverlusten in den durchflossenen Leitern und damit zu einer starken Erwärmung des Stators führen. Der Antriebsstrom wird zudem in der Regel gepulst als ein Wechselstrom erzeugt. Dies kann zu hohen elektromagnetischen Wechselfeldern führen, die an dem Stator angeordnete elektronische Komponenten stören können.

Zur Erfassung der Position des Läufers über dem Stator kann das Planarantriebssystem eine an dem Stator angeordnete Positionserfassungseinheit umfassen, die mit dem Läufer wechselwirkt. Eine derartige Wechselwirkung kann beispielsweise magnetisch mittels Magnetfeldsensoren und an dem Läufer angeordneter Magneten erfolgen. Für eine genaue Bestimmung der Position des Läufers sollte die Wechselwirkung zwischen dem Läufer und der Positionserfassungseinheit mit einem möglichst hohen Signal-Rausch-Verhältnis erfasst werden.

Der planare Stator des Antriebssystems kann ein Statormodul umfassen, welches eine Statoreinheit mit den stromdurchflossenen Leitern, sowie elektronische Komponenten zur Erzeugung des Antriebsstroms und zur Erfassung der Position des Läufers umfasst. An der Oberseite des Statormoduls ist in der Regel die Statoreinheit mit den von dem Antriebsstrom durchflossenen Leitern angeordnet. Die Statoreinheit weist in der Regel eine ebene, d.h. planare, Oberfläche auf, über welcher der Läufer im Betrieb antreibbar ist. Die elektronischen Komponenten zur Erzeugung des Antriebsstroms und zur Erfassung der Position des Läufers sind in der Regel unterhalb der Statoreinheit in dem Statormodul angeordnet.

Die Druckschriften WO 2013/059934 A1, WO 2015/017933 A1, WO 2015/179962 A1, WO 2015/184553 A1, WO 2015/188281 A1, WO 2017/004716 A1 beschreiben jeweils ein Planarantriebssystem (*displacement devices*), welches einen elektromagnetischen Planarmotor mit einem permanenterregten Läufer und einen Stator mit mehreren bestrombaren Leitern umfasst.

Aus der WO 2017/004716 A1 ist ein Statormodul mit dem Oberbegriff des Anspruchs 1 bekannt. Weiterer Stand der Technik ist in der US 2010/322606 A1 und der EP 3 107 195 A1 enthalten.

Aufgabe der vorliegenden Erfindung ist es, ein verbessertes Statormodul für ein Planarantriebssystem anzugeben.

Diese Aufgabe wird durch ein Statormodul gemäß dem unabhängigen Anspruch gelöst. Weiterbildungen sind in den abhängigen Ansprüchen angeben.

Ein Statormodul zum elektromagnetischen Antreiben eines Läufers eines Planarantriebssystems umfasst ein Anschlussmodul, das dazu ausgebildet ist, eine Antriebsenergie bereitzustellen. Das Statormodul umfasst außerdem ein Leistungsmodul, das eine Stromerzeugungseinheit aufweist, die dazu ausgebildet ist, einen den Läufer antreibenden Antriebsstrom aus der Antriebsenergie zu erzeugen. Das Statormodul umfasst eine Statoreinheit, welche einen mit dem Antriebsstrom beaufschlagbaren Spulenleiter zur Erzeugung eines den Läufer antreibenden Magnetfeldes aufweist. Das Statormodul umfasst ferner ein Sensormodul, das eine Positionserfassungseinheit umfasst, die dazu ausgebildet ist, eine Position des Läufers über der Statoreinheit zu erfassen. Das Sensormodul ist in einem Modulgehäuse angeordnet und das Modulgehäuse umschließt das Sensormodul. Die Statoreinheit und das Leistungsmodul sind an einer Oberseite des Modulgehäuses und das Anschlussmodul ist an einer der Oberseite gegenüberliegenden Unterseite des Modulgehäuses angeordnet. Die Stromerzeugungseinheit des Leistungsmoduls und das Anschlussmodul sind über eine Antriebsenergieleitung zur Übertragung der bereitgestellten Antriebsenergie verbunden. Die Antriebsenergieleitung führt durch das Modulgehäuse und ist von dem Sensormodul in dem Modulgehäuse elektrisch isoliert ausgebildet.

Eine direkte Antriebsenergieleitung zwischen dem Anschlussmodul und dem Leistungsmodul kann mit einer hohen Leitfähigkeit ausgebildet werden, so dass in der Antriebsenergieleitung lediglich geringe ohmsche Verluste auftreten. Dadurch wird einer Erwärmung des Statormoduls bei hohen Stromflüssen, insbesondere bei hohen Antriebsströmen, vorgebeugt. Außerdem muss bei einer direkten Verbindung von Leistungsmodul und Anschlussmodul die Antriebsenergie nicht über das Sensormodul geführt werden, so dass auch eine Erwärmung des Sensormoduls bei hohen Stromstärken verhindert wird. Über das Modulgehäuse kann zudem eine Verlustwärme, die durch den Antriebsstrom in der Statoreinheit an der Oberseite des Gehäuses erzeugt wird, effizient an die Unterseite des Modulgehäuses abgeführt werden. Dadurch kann das Statormodul über die Unterseite gekühlt werden und es sind keine weiteren Kühlkomponenten an der dem Läufer zugewandten Oberseite des Statormoduls notwendig.

Die Positionserfassungseinheit in dem Modulgehäuse ist unterhalb des Leistungsmoduls und der Statoreinheit angeordnet. Bei einer Anordnung der Positionserfassungseinheit unter dem Leistungsmodul und in dem Modulgehäuse kann ein für eine zuverlässige Erfassung der Position des Läufers notwendiger Mindestabstand zwischen dem Läufer und der Positionserfassungseinheit eingehalten werden. Insbesondere bei einer Positionserfassungseinheit, deren Sensoren ein Magnetfeld detektieren, das von an dem Läufer angeordneten Magneten erzeugt wird, könnte eine Anordnung der Positionserfassungseinheit an der Oberseite des Modulgehäuses oder an dem Leistungsmodul im Betrieb des Planarantriebssystems zu einer Sättigung der Sensoren führen.

Da das Anschlussmodul, das Sensormodul und das Leistungsmodul in einer von der Unterseite zu der Oberseite des Statormoduls orientierten vertikalen Richtung nacheinander bzw. übereinander angeordnet sind, kann das Modulgehäuse zudem besonders kompakt ausgebildet werden. Das Anschlussmodul, das Sensormodul und das Leistungsmodul können insbesondere jeweils als flache Quader oder Platten ausgebildet sein, die in der vertikalen Richtung eine geringere Ausdehnung aufweisen als in zu der vertikalen Richtung senkrecht orientierten horizontalen Richtungen. Beispielsweise können das Anschlussmodul, das Sensormodul und das Leistungsmodul jeweils in den horizontalen Richtungen ausgedehnte Leiterkarten oder Leiterplatten oder Platinen umfassen.

Bei dem Statormodul ist das Sensormodul durch das Modulgehäuse außerdem besonders gut gegen elektromagnetische Störungen abgeschirmt. Insbesondere schirmt das Modulgehäuse das Sensormodul und die Positionserfassungseinheit gegenüber Magnetfeldern ab, die durch den auf der Leistungsplatine erzeugten Antriebsstrom oder durch Ströme in dem Anschlussmodul verursacht werden. Indem die Antriebsenergieleitung von dem Anschlussmodul an der Unterseite des Modulgehäuses ohne elektrischen Kontakt mit dem Sensormodul durch das Modulgehäuse auf das Leistungsmodul an der Oberseite des Modulgehäuses geführt ist, werden die Auswirkungen von Störfeldern, die beim Übertragen der Antriebsenergie erzeugt werden, auf das Sensormodul ebenfalls gering gehalten.

Das Modulgehäuse kann beispielsweise ein Metall, insbesondere Aluminium, aufweisen oder aus einem solchen Metall bestehen.

Bei einer Weiterbildung des Statormoduls ist das Anschlussmodul dazu ausgebildet, der Stromerzeugungseinheit eine für die Erzeugung des Antriebsstroms aus der Antriebsenergie benötigte Betriebsenergie bereitzustellen. Das Anschlussmodul und die Stromerzeugungseinheit sind über eine Betriebsenergieleitung zur Übertragung der bereitgestellten Betriebsenergie verbunden. Die Betriebsenergieleitung führt durch das Modulgehäuse und ist von dem Sensormodul in dem Modulgehäuse elektrisch isoliert ausgebildet.

Bei einer Ausführung der Betriebsenergieleitung als direkte Verbindung zwischen dem Anschlussmodul und dem Leistungsmodul kann die Betriebsenergieleitung mit einer hohen Leitfähigkeit ausgeführt werden, so dass bei der Übertragung der Betriebsenergie lediglich geringe Widerstandsverluste auftreten. Mittels der Betriebsenergie kann beispielsweise eine für ein Schalten der Stromerzeugungseinheit benötigte Energie, insbesondere ein für ein Schalten der Stromerzeugungseinheit benötigter Strom, etwa ein Gatestrom für Leistungstransistoren der Stromerzeugungseinheit, bereitgestellt werden. Insbesondere beim Schalten hoher Antriebsströme können auch die zum Schalten benötigten Ströme vergleichsweise hoch sein.

Bei einer Weiterbildung des Statormoduls ist das Statormodul dazu ausgebildet, eine für den Betrieb der Positionserfassungseinheit benötigte Versorgungsenergie bereitzustellen. Das Leistungsmodul und das Sensormodul sind zur Bereitstellung der Versorgungsenergie über eine Versorgungsleitung miteinander verbunden. Ein Teil der Versorgungsleitung ist von dem Leistungsmodul durch die Oberseite des Modulgehäuses auf das Sensormodul in dem Modulgehäuse geführt.

Zur Bereitstellung der Versorgungsenergie kann die gesamte Versorgungsleitung oder auch nur Teile der Versorgungsleitung die Versorgungsenergie führen. Insbesondere kann zur Bereitstellung der Versorgungsenergie ein erster Teil der Versorgungsleitung die Betriebsenergie und ein zweiter Teil der Versorgungsleitung die Versorgungsenergie führen. Zwischen dem ersten und dem zweiten Teil der Versorgungsleitung kann eine Energieerzeugungseinheit zur Erzeugung der Versorgungsenergie aus der Betriebsenergie angeordnet sein.

Indem die Versorgungsleitung von dem Leistungsmodul auf das Sensormodul geführt ist, kann das Statormodul ohne eine direkte Verbindung, insbesondere ohne eine direkte Masseverbindung, zwischen dem Anschlussmodul und dem Sensormodul ausgebildet sein. Dadurch werden Masseschleifen in dem Statormodul vermieden und elektromagnetische Störungen auf dem Sensormodul können reduziert werden. Derartige Störungen könnten insbesondere dann auftreten, wenn die Versorgungsleitung direkt zwischen dem Anschlussmodul und dem Sensormodul ausgeführt ist und zusätzlich eine Masseverbindung zwischen dem Sensormodul und dem Leistungsmodul besteht, die zusammen mit einer Masseverbindung der Antriebsenergieleitung zwischen dem Leistungsmodul und dem Anschlussmodul eine zweite Masseverbindung zwischen dem Anschlussmodul und dem Sensormodul bildet.

Bei einer Weiterbildung des Statormoduls umfasst das Sensormodul eine Antriebssteuereinheit, die dazu ausgebildet ist, ein Steuersignal zur Steuerung der Stromerzeugungseinheit zu erzeugen. Die Antriebssteuereinheit ist zur Übertragung des Steuersignals über eine durch die Oberseite des Modulgehäuses geführte Steuerleitung mit der Stromerzeugungseinheit des Leistungsmoduls verbunden. Dadurch kann die Steuerleitung besonders kurz ausgeführt und eine Verfälschung des Steuersignals durch elektromagnetische Felder vermieden werden.

Bei einer Weiterbildung des Statormoduls ist das Anschlussmodul dazu ausgebildet, an ein externes Datennetzwerk angeschlossen zu werden. Das Sensormodul weist eine Positionsverarbeitungseinheit auf, welche dazu ausgebildet ist, eine von der Positionserfassungseinheit gewonnene Positionsinformation des Läufers über das externe Datennetzwerk auszutauschen. Das Anschlussmodul und das externe Datennetzwerk sind für den Austausch der Positionsinformation über eine Datenleitung mit der Positionsverarbeitungseinheit des Sensormoduls verbunden. Die Datenleitung ist von dem Anschlussmodul durch die Unterseite des Modulgehäuses auf das Sensormodul geführt.

Indem das Statormodul über das an der Unterseite des Modulgehäuses angeordnete Anschlussmodul an das externe Datennetzwerk angeschlossen ist, können alle für die Anbindung des Datennetzwerks benötigten Anschlüsse oder Anschlussmittel an einer Unterseite des Statormoduls ausgeführt werden, wobei die Unterseite der dem Läufer zugewandten Oberseite des Statormoduls in der vertikalen Richtung gegenüber liegt. Dadurch kann das Statormodul auf einfache Weise kontaktiert werden. Außerdem sind die Anschlüsse auch dann noch zugänglich, wenn mehrere der Statormodule nebeneinander und aneinander anschließend angeordnet sind.

Eine direkte Verbindung zwischen Anschlussmodul und Sensormodul durch die Datenleitung ermöglicht es, die Datenleitung kurz zu halten und so eine Störung oder Beeinflussung der Datenübertragung durch elektromagnetische Störfelder zu verhindern. Die Datenleitung kann galvanisch getrennt von Anschlussleitungen des externen Datennetzwerks ausgebildet sein. Dabei kann zwischen der Datenleitung und den Anschlussleitungen des externen Datennetzwerks eine Isoliereinheit angeordnet sein, welche, beispielsweise mittels eines Übertragers, eine galvanisch isolierte Verbindung für den Austausch der Positionsinformation bereitstellt. Die Isoliereinheit kann beispielsweise an dem Anschlussmodul angeordnet sein. Die Datenleitung kann als ein Teil des externen Datennetzwerks ausgeführt sein. Insbesondere kann bei der Datenübertragung über die Datenleitung die gleiche Signalkodierung und/oder das gleiche Netzwerkprotokoll wie bei der Datenübertragung über das externe Datennetzwerk verwendet werden. Die Positionsverarbeitungseinheit kann beispielsweise dazu ausgebildet sein, die Positionsinformation über das Datennetzwerk mit einer übergeordneten Steuereinheit für das Planarantriebssystem auszutauschen.

Bei einer Weiterbildung des Statormoduls ist die Antriebssteuereinheit dazu ausgebildet, über die Datenleitung und das externe Datennetzwerk Steuerdaten zur Ansteuerung der Stromerzeugungseinheit auszutauschen. Die Antriebssteuereinheit und die Positionsverarbeitungseinheit sind dabei dazu ausgebildet, jeweils als eigenständige Kommunikationsteilnehmer über das externe Datennetzwerk zu kommunizieren. Dadurch wird eine logische Trennung zwischen der Antriebssteuereinheit und der Positionsverarbeitungseinheit erreicht. Insbesondere können die Antriebssteuereinheit und die Positionsverarbeitungseinheit als getrennte Einheiten, etwa als getrennte integrierte Schaltungen (ICs), ausgeführt sein. Dies ermöglicht es, die Antriebssteuereinheit und die Positionsverarbeitungseinheit mittels einfacher integrierter Komponenten zu realisieren. Die Antriebssteuereinheit kann beispielsweise dazu ausgebildet sein, die Steuerdaten über das Datennetzwerk mit einer übergeordneten Steuereinheit für das Planarantriebssystem auszutauschen.

Eine Weiterbildung des Statormoduls umfasst einen Zwischenkreis, um die Antriebsenergie mittels einer Zwischenkreisspannung als Gleichspannung bereitzustellen. Die Stromerzeugungseinheit ist an den Zwischenkreis angeschlossen und dazu ausgebildet, als ein Wechselrichter den Antriebsstrom aus der Zwischenkreisspannung zu erzeugen. Der Zwischenkreis ist auf dem Leistungsmodul, der Antriebsenergieleitung und dem Anschlussmodul angeordnet.

Damit kann zur Übertragung der Antriebsenergie über die Antriebsenergieleitung eine Gleichspannung oder ein Gleichstrom verwendet werden. Dies reduziert die durch die Antriebsenergieleitung erzeugten Magnetfelder, insbesondere die erzeugten magnetischen Wechselfelder, und verringert bei der Übertragung der Antriebsenergie auftretende dielektrische Verluste. Außerdem können die von dem Gleichspannungszwischenkreis erzeugten Magnetfelder geringere elektromagnetische Störungen verursachen als elektromagnetische Wechselfelder.

Bei einer Weiterbildung des Statormoduls umfasst das Anschlussmodul eine Umwandeleinheit, die an den Zwischenkreis angeschlossen und dazu ausgebildet ist, als ein Gleichrichter die Zwischenkreisspannung aus einer über eine externe Energieversorgungsleitung bereitgestellten elektrischen Versorgungsenergie zu erzeugen. Dies erlaubt einen direkten Anschluss des Statormoduls an eine Wechselspannungsversorgung, beispielsweise an ein konventionelles Wechselstromnetz, insbesondere an ein Niederspannungsnetz.

Die Erfindung wird nachfolgend anhand von Ausführungsbeispielen und unter Bezugnahme auf Figuren näher erläutert. Dabei zeigen jeweils in schematischer Darstellung
- Fig. 1: ein Planarantriebssystem mit einem Statormodul;
- Fig. 2: ein weiteres Planarantriebssystem mit mehreren Statormodulen;
- Fig. 3: eine Seitenansicht des Statormoduls aus Figur 1;
- Fig. 4: eine teilweise geschnittene perspektivische Ansicht des Statormoduls von unten;
- Fig. 5: eine perspektivische Explosionsansicht des Statormoduls von oben;
- Fig. 6: eine perspektivische Explosionsansicht des Statormoduls von unten;
- Fig. 7: eine perspektivische Ansicht der Unterseite eines Anschlussmoduls des Statormoduls;
- Fig. 8: eine perspektivische Ansicht der Oberseite des Anschlussmoduls;
- Fig. 9: eine perspektivische Ansicht der Unterseite eines Gehäusebodens des Statormoduls;
- Fig. 10: eine perspektivische Ansicht der Oberseite des Gehäusebodens;
- Fig. 11: eine perspektivische Ansicht der Unterseite eines Sensormoduls des Statormoduls;
- Fig. 12: eine perspektivische Ansicht der Oberseite des Sensormoduls;
- Fig. 13: eine perspektivische Ansicht der Unterseite eines Gehäusedeckels des Statormoduls;
- Fig. 14: eine perspektivische Ansicht der Oberseite des Gehäusedeckels;
- Fig. 15: eine perspektivische Ansicht der Unterseite eines Leistungsmoduls des Statormoduls;
- Fig. 16: eine perspektivische Ansicht der Oberseite des Leistungsmoduls;
- Fig. 17: eine perspektivische Ansicht der Oberseite einer Statoreinheit des Statormoduls; und
- Fig. 18: eine perspektivische Explosionsansicht der Statoreinheit mit einzelnen Statorlagen;
- Fig. 19: eine perspektivische Ansicht der Unterseite der Statoreinheit;
- Fig. 20: eine perspektivische Ansicht der Unterseite des Leistungsmoduls mit der mit dem Leistungsmodul verbundenen Statoreinheit;
- Fig. 21: eine perspektivische Ansicht der Unterseite des Statormoduls;
- Fig. 22: eine geschnittene Seitenansicht des Statormoduls;
- Fig. 23: ein Blockschaltbild der elektrischen Verschaltung der einzelnen Module des Statormoduls zusammen mit elektronischen Komponenten des Statormoduls.

Die Erfindung betrifft im Wesentlichen Weiterentwicklungen der in den Veröffentlichungen WO 2013/059934 A1, WO 2015/017933 A1, WO 2015/179962 A1, WO 2015/184553 A1, WO 2015/188281 A1 und WO 2017/004716 A1 offenbarten Planarantriebssysteme. Der Offenbarungsgehalt der genannten Druckschriften wird durch Bezugnahme vollumfänglich auch zum Gegenstand der vorliegenden Beschreibung gemacht.

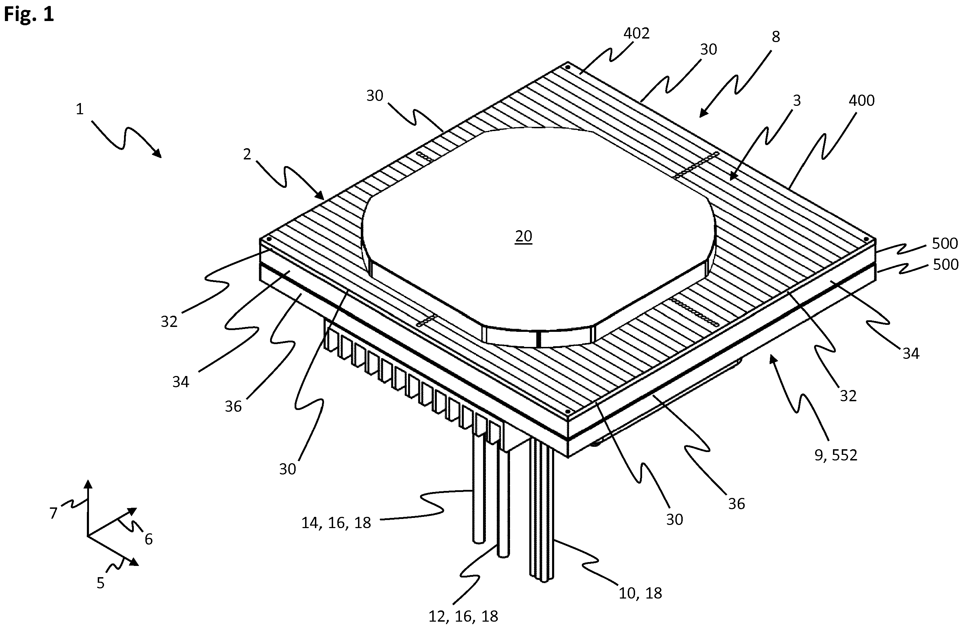

**Fig.** 1 zeigt ein Planarantriebssystem 1 mit einem Statormodul 2 und einem Läufer 20. Das Statormodul 2 umfasst ein Modulgehäuse 500 und eine Statoreinheit 400. Das Statormodul 2 weist eine Oberseite 8 und eine Unterseite 9 auf. Die Statoreinheit 400 ist in einer von der Unterseite 9 zu der Oberseite 8 orientierten vertikalen Richtung 7 oberhalb des Modulgehäuses 500 und an der Oberseite 8 des Statormoduls 2 angeordnet. Die Statoreinheit 400 ist als ein Planarstator ausgebildet und weist an der Oberseite 8 des Statormoduls 2 eine ebene, d.h. planare, Statorfläche 3 auf. Die Statorfläche 3 bildet zugleich eine Oberfläche des Statormoduls 2.

Die Statorfläche 3 ist senkrecht zu der vertikalen Richtung 7 orientiert und erstreckt sich über die gesamte Oberseite 8 der Statoreinheit 400 und des Statormoduls 2. Die Statoreinheit 400 umfasst an der Statorfläche 3 mindestens einen mit einem Antriebsstrom beaufschlagbaren Spulenleiter 402. Die Statoreinheit 400 kann, wie dargestellt, an der Statorfläche 3 eine Mehrzahl der Spulenleiter 402 aufweisen. Die Spulenleiter 402 können jeweils mit einem Antriebsstrom beaufschlagt werden. Mittels der Antriebsströme in den Spulenleitern 402 kann ein Magnetfeld erzeugt werden, welches den Läufer 20 in Wechselwirkung mit in Fig. 1 nicht dargestellten Antriebsmagneten des Läufers 20 antreibt. Der Läufer 20 und die Statoreinheit 400 mit den stromdurchflossenen Spulenleitern 402 bilden einen elektromagnetischen Planarmotor.

Der Läufer 20 ist im Betrieb beweglich über der Statorfläche 3 des Statormoduls 2 angeordnet und kann im Betrieb sowohl in einer ersten Richtung 5, als auch in einer zweiten Richtung 6 angetrieben werden. Die erste Richtung 5 und die zweite Richtung 6 sind linear unabhängig. Insbesondere können die erste Richtung 5 und die zweite Richtung 6, wie in Fig. 1 dargestellt, senkrecht zueinander ausgerichtet sein. Die erste Richtung 5 und die zweite Richtung 6 sind jeweils parallel zu der Statorfläche 3 und senkrecht zu der vertikalen Richtung 7 orientiert. Indem der Läufer 20 zugleich in der ersten Richtung 5, als auch in der zweiten Richtung 6 angetrieben wird, kann er über der Statorfläche 3 in einer beliebigen Richtung angetrieben werden. Der Läufer 20 kann im Betrieb schwebend über der Statorfläche 3 gehalten werden, beispielsweise durch eine magnetische Wechselwirkung zwischen den Antriebsmagneten und geeigneten Antriebsströmen in den Spulenleiter 402. Neben einem Antrieb des Läufers 20 in der ersten und zweiten Richtung 5, 6 ist auch ein Antrieb in der dritten, vertikalen Richtung 7 möglich.

Die Statorfläche 3 ist rechteckig ausgebildet. Insbesondere kann die Statorfläche 3, wie dargestellt, quadratisch ausgebildet sein. Die Statorfläche 3 wird durch vier jeweils gerade Außenkanten 30 begrenzt. Jeweils zwei einander gegenüberliegende Außenkanten 30 sind parallel zu der ersten Richtung 5 und zwei einander gegenüberliegende weitere Außenkanten 30 sind parallel zu der zweiten Richtung 6 orientiert.

Eine Ausdehnung der Statoreinheit 400 in der vertikalen Richtung 7 ist kleiner als eine Ausdehnung der Statoreinheit 400 in der ersten und der zweiten Richtung 5, 6. Die Statoreinheit 400 bildet daher einen flachen in der ersten und zweiten Richtung 5, 6 ausgedehnten Quader oder eine in der ersten und zweiten Richtung 5, 6 ausgedehnte Platte. Zwischen der Statorfläche 3 und einer der Statorfläche 3 gegenüberliegenden Unterseite der Statoreinheit 400 weist die Statoreinheit 400 vier jeweils ebene Seitenflächen 32 auf, die an der Statorfläche 3 mit den Außenkanten 30 der Statorfläche 3 bündig abschließen. Die Seitenflächen 32 der Statoreinheit 400 sind senkrecht zu der Statorfläche 3 orientiert.

Das Modulgehäuse 500 ist wie die Statorfläche 3 und die Statoreinheit 400 in einer Aufsicht auf die Statorfläche 3 rechteckig ausgebildet. Das Modulgehäuse 500 ist insbesondere in der Aufsicht auf die Statorfläche 3 quadratisch ausgebildet. Das Modulgehäuse 500 ist als ein flacher Quader bzw. als eine Platte ausgebildet, wobei die Ausdehnung des Modulgehäuse 500 in der vertikalen Richtung 7 kleiner ist als in der ersten und zweiten Richtung 5, 6. Eine der Statoreinheit 400 zugewandte Oberseite des Modulgehäuses 500 ist an die Unterseite der Statoreinheit 400 anschließend angeordnet. In der ersten und zweiten Richtung 5, 6 weisen die Statoreinheit 400 und das Modulgehäuse 500 im Wesentlichen die gleichen Abmessungen auf.

Zwischen der der Statoreinheit 400 zugewandten Oberseite des Modulgehäuse 500 und einer der Oberseite gegenüberliegenden Unterseite 552 des Modulgehäuse 500 weist das Modulgehäuse 500 vier jeweils ebene Seitenflächen 34 auf. Die Seitenflächen 34 des Modulgehäuses 500 können, wie dargestellt, senkrecht zu der Statorfläche 3 orientiert sein. Die Seitenflächen 34 des Modulgehäuses 500 können fluchtend mit den Seitenflächen 32 der Statoreinheit 400 ausgerichtet sein und an die Seitenflächen 32 der Statoreinheit 400 anschließen. Bei einer alternativen Ausführungsform des Statormoduls 2 können die Seitenflächen 34 des Modulgehäuses 500 auch gegenüber den Seitenflächen 32 der Statoreinheit 400 in das Innere des Statormoduls 2 zurückversetzt angeordnet sein. Bei einer weiteren alternativen Ausführungsform können die Seitenflächen 34 auch an der Oberseite des Modulgehäuses 500 an die Seitenflächen 32 der Statoreinheit 400 anschließend angeordnet sein und sich entgegen der vertikalen Richtung 7 zur Unterseite 552 des Modulgehäuses 500 hin in Richtung des Inneren des Statormoduls 2 verjüngen.

Das Statormodul 2 ist in einer Aufsicht auf die Statorfläche 3 rechteckig ausgebildet. Das Statormodul 2 weist zwischen der an der Oberseite 8 des Statormoduls 2 angeordneten Statorfläche 3 und der der Oberseite 8 gegenüberliegenden Unterseite 9 vier jeweils ebene Seitenflächen 36 auf. Die Seitenflächen 36 des Statormoduls 2 werden im Bereich der Statoreinheit 400 durch die Seitenflächen 32 der Statoreinheit 400 und im Bereich des Modulgehäuses 500 durch die Seitenflächen 34 des Modulgehäuses 500 gebildet.

Die Seitenflächen 36 des Statormoduls 2 schließen damit an der Statorfläche 3 mit den Außenkanten 30 der Statorfläche 3 ab und die Außenkanten 30 der Statorfläche 3 bilden an der Statorfläche 3 zugleich Außenkanten des Statormoduls 2. Insbesondere erstreckt sich die Statorfläche 3 in der ersten Richtung 5 und in der zweiten Richtung 6 jeweils zwischen zwei der Seitenflächen 36 des Statormoduls 2 und die Außenkanten 30 begrenzen die Ausdehnung der Statorfläche 3, der Statoreinheit 400 und des Statormoduls 2 an den Seitenflächen 36 des Statormoduls 2 in der ersten Richtung 5 und in der zweiten Richtung 6.

Die Seitenflächen 36 des Statormoduls 2 können, wie dargestellt, jeweils senkrecht zu der Statorfläche 3 ausgerichtet sein. Bei alternativen Ausführungsformen des Statormoduls 2 können die Seitenflächen 36 des Statormoduls 2 im Bereich des Modulgehäuses 500 auch in Richtung des Inneren des Statormoduls 2 zurückversetzt sein oder sich von der Oberseite 8 zur Unterseite 9 hin in Richtung des Inneren des Statormoduls 2 verjüngen.

Während das Statormodul 2 an seiner durch die Statorfläche 3 gebildeten Oberfläche eben ausgebildet ist, kann das Statormodul 2 an der der Statorfläche 3 gegenüberliegenden Unterseite 9 nicht eben bzw. uneben ausgebildet sein. Insbesondere können an der Unterseite 9 des Statormoduls 2 oder an der Unterseite 552 des Modulgehäuses 500 weitere Komponenten an dem Modulgehäuse 500 oder dem Statormodul 2 angeordnet sein. Diese weiteren Komponenten reichen in der ersten Richtung 5 oder in der zweiten Richtung 6 höchstens bis an die Außenkanten 30 der Statoreinheit 3, so dass die weiteren Komponenten die Außenkanten 30 in der ersten oder der zweiten Richtung 5, 6 nicht überragen.

An der Unterseite 552 des Modulgehäuses 500 sind in Fig. 1 nicht dargestellte Anschlüsse angeordnet zur Verbindung des Statormoduls 2 mit mehreren Anschlussleitungen 18. Die Anschlussleitungen 18 können beispielsweise, wie dargestellt, eine Eingangsleitung 12 eines Datennetzwerks 16, eine Ausgangsleitung 14 des Datennetzwerks 16 und eine Energieversorgungsleitung 10 zur Versorgung des Statormoduls 2 mit elektrischer Energie umfassen. Insbesondere kann dem Statormodul 2 über die Energieversorgungsleitung 10 elektrische Energie zur Erzeugung der Antriebsströme zugeführt werden. Die über die Energieversorgungsleitung 10 zugeführte elektrische Energie kann auch zur Erzeugung einer Betriebsenergie und/oder einer Versorgungsenergie elektronischer Komponenten des Statormoduls 2 genutzt werden.

Die Statorfläche 3 kann in der ersten Richtung 5 eine Ausdehnung zwischen 100mm und 500mm aufweisen, insbesondere zwischen 120mmm und 350mm, insbesondere von 240mm. Die Statorfläche 3 kann in der zweiten Richtung 6 eine Ausdehnung zwischen 100mm und 500mm, insbesondere zwischen 120mm und 350mm, insbesondere von 240mm aufweisen. Das Statormodul 2 kann in der vertikalen Richtung 7 eine Ausdehnung zwischen 10mm und 100mm, insbesondere zwischen 15mm und 60mm, insbesondere von 30mm aufweisen. Das Modulgehäuse 500 kann in der vertikalen Richtung 7 eine Ausdehnung zwischen 8mm und 80mm, insbesondere zwischen 13mm und 55mm, insbesondere von 26,6mm aufweisen. Das Modulgehäuse 500 kann in der ersten und/oder zweiten Richtung 5, 6 die gleiche Ausdehnung aufweisen wie die Statorfläche 3.

Mehrere Exemplare des Statormoduls 2 können derart nebeneinander angeordnet werden, dass die Außenkanten 30 benachbarter Statormodule 2 aneinander liegen und die Statorflächen 3 der Statormodule 2 eine zusammenhängende Arbeitsfläche bilden, über die der Läufer 20 unterbrechungsfrei bewegt werden kann. Da die Seitenflächen 36 des Statormoduls 2 an den Außenkanten 30 bündig mit der Statorfläche 3 abschließen, können die Statorflächen 3 von zwei nebeneinander angeordneten Statormodulen 2 nahezu nahtlos aneinander anschließend angeordnet werden, indem die Statormodule 2 mit aneinanderliegenden Seitenflächen 32 der Statoreinheiten 400 oder aneinanderliegenden Außenkanten 30 der Statorflächen 3 angeordnet werden.

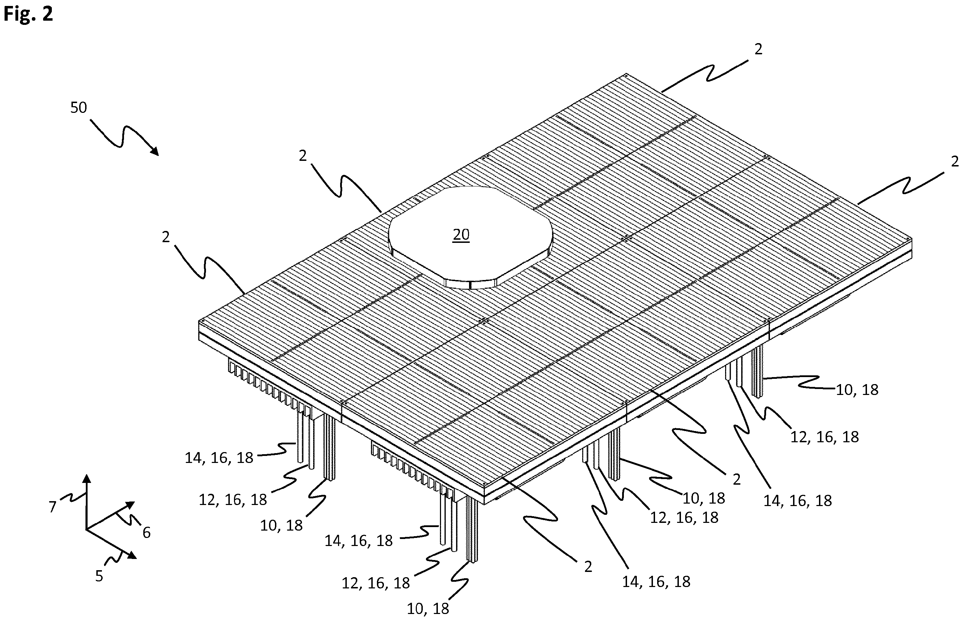

**Fig. 2** zeigt eine Ansicht eines weiteren Planarantriebssystems 50 mit sechs nebeneinander angeordneten Statormodulen 2. Die Statormodule 2 sind ausgebildet wie das in Fig. 1 dargestellte Statormodul 2. Die Statormodule 2 sind in zwei in der ersten Richtung 5 nebeneinanderliegenden und entlang der zweiten Richtung 6 ausgedehnten ersten Reihen und in drei in der zweiten Richtung 6 nebeneinanderliegenden und entlang der ersten Richtung 5 ausgedehnten zweiten Reihen oder Spalten nebeneinander angeordnet. Benachbarte Statormodule 2 sind jeweils derart aneinander anschließend angeordnet, dass die Außenkanten 30 der Statorflächen 3 benachbarter Statormodule 2 aneinander liegen. Dadurch bilden die Statorflächen 3 der Statormodule 2 eine zusammenhängende, planare Arbeitsfläche für den Läufer 20. Der Läufer 20 kann nahtlos von der Statorfläche 3 eines der Statormodule 2 auf die oder über die Statorfläche 3 des benachbarten Statormoduls 2 bewegt werden.

Über das Datennetzwerk 16 können die Statormodule 2 verbunden sein, um für den Betrieb des Planarantriebssystems 50 benötigte Daten miteinander auszutauschen. Außerdem können die Statormodule 2 über das Datennetzwerk 16 mit einer, in Fig. 2 nicht dargestellten, zentralen Steuereinheit verbunden sein. Die zentrale Steuereinheit kann dazu ausgebildet sein, für die Bewegung des Läufers benötigte Steuerdaten über das Datennetzwerk 16 zur Verfügung zu stellen. Die Statormodule 2 können insbesondere der Reihe nach an das Datennetzwerk 16 angeschlossen sein. Dabei kann jeweils die Ausgangsleitung 14 eines Statormoduls 2 mit der Eingangsleitung 12 eines benachbart angeordneten Statormoduls 2 verbunden sein. Auf diese Weise können beispielsweise die Statormodule 2 in den ersten oder zweiten Reihen der Reihe nach miteinander verbunden sein. Außerdem können an den Enden der ersten bzw. zweiten Reihen jeweils die letzten Statormodule 2 benachbarter erster bzw. zweiter Reihen über das Datennetzwerk 16 miteinander verbunden sein.

Die Statormodule 2 können der Reihe nach an die Energieversorgungsleitung 10 angeschlossen sein. Insbesondere können die Statormodule 2 in den ersten oder zweiten Reihen der Reihe nach an die Energieversorgungsleitung 10 angeschlossen sein. Außerdem können an den Enden der ersten bzw. zweiten Reihen jeweils die letzten Statormodule 2 benachbarter erster bzw. zweiter Reihen über die Energieversorgungsleitung 10 miteinander verbunden sein.

Die Statormodule 2 können in der ersten und zweiten Richtung 5, 6 prinzipiell zu Planarantriebssystemen beliebiger Größe zusammengefügt werden. Jedem der Statormodule 2 können über die Anschlussleitungen 18 Steuersignale und/oder Energie zugeführt werden.

Bei alternativen Ausführungsformen des weiteren Planarantriebssystems 50 können die Statormodule 2 auch sternförmig über jeweils eigene Anschlussleitungen 18 an eine zentrale Energieversorgungseinrichtung und/oder eine zentrale Steuereinheit angeschlossen sein.

Alternative, hier nicht dargestellte Ausführungsformen der Statormodule 2 können auch elektrische Verbindungselemente aufweisen, mittels derer Steuersignale und/oder elektrische Energie von einem Statormodul 2 zum benachbarten Statormodul 2 übertragen werden kann. Die elektrischen Verbindungselemente können derart ausgebildet sein, dass bei einem benachbarten Anordnen der Statormodule 2 eine datentechnische und/oder elektrische Verbindung zwischen benachbart angeordneter Statormodule 2 hergestellt wird. Derartige Verbindungselemente können beispielsweise an den Seitenflächen 36 der Statormodule 2 angeordnet sein. Die Verbindungselemente können beispielsweise als Steckverbinder oder als Kontaktflächen ausgebildet sein. Die Verbindungselemente können die Energieversorgungleitung 10 und/oder die Eingangsleitung 12 des Datennetzwerks 16 und/oder die Ausgangsleitung 14 des Datennetzwerks 16 umfassen.

Bei dem Planarantriebssystem 1 oder dem weiteren Planarantriebssystem 50 können neben den Statormodulen 2 auch weitere Netzwerkteilnehmer an das Datennetzwerk 16 angeschlossen sein. Die weiteren Netzwerkteilnehmer können beispielsweise als Eingangseinheiten zum Einlesen von Sensorsignalen und/oder als Ausgangseinheiten zum Ausgeben von Steuersignalen ausgebildet sein. Die Sensorsignale können von Sensoren eingelesen werden, die an den Planarantriebssystemen 1, 50 oder an Maschinen, die die Planarantriebssysteme 1, 50 umfassen, angeordnet sind. Die Steuersignale können an Aktoren ausgegeben werden, die an den Planarantriebssystemen 1, 50 oder an Maschinen, die die Planarantriebssysteme 1, 50 umfassen, angeordnet sind.

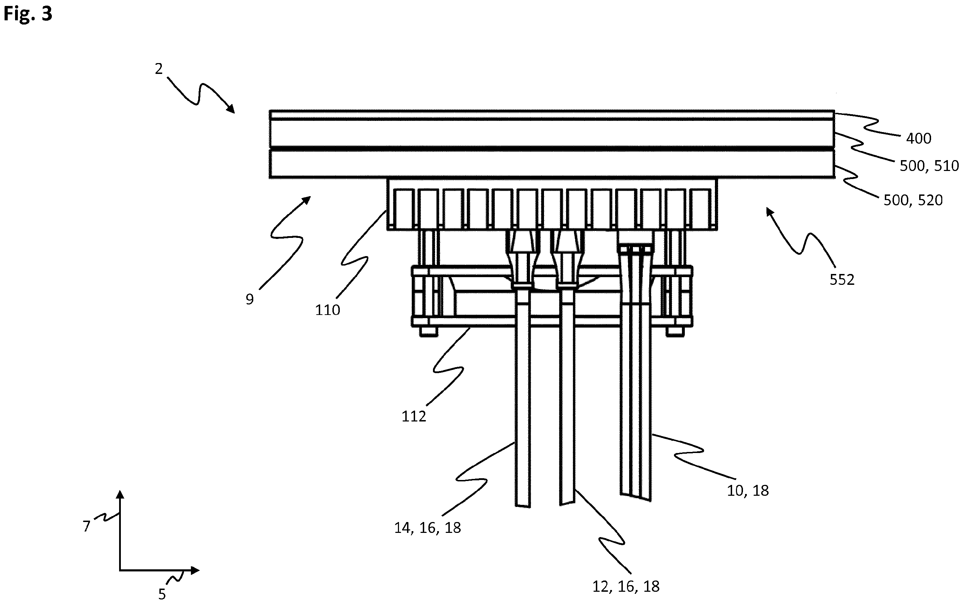

**Fig. 3** zeigt eine Seitenansicht des Statormoduls 2. Das Modulgehäuse 500 umfasst einen Gehäusedeckel 510 und einen Gehäuseboden 520. Der Gehäusedeckel 510 ist in der vertikalen Richtung 7 oberhalb des Gehäusebodens 520 angeordnet.

Eine Oberseite des Gehäusebodens 520 ist einer Unterseite des Gehäusedeckels 510 zugewandt angeordnet. An einer Oberseite des Gehäusedeckels 510 ist die Statoreinheit 400 mit den hier nicht dargestellten Spulenleitern 402 angeordnet. Eine Unterseite des Gehäusebodens 520 bildet die Unterseite 552 des Modulgehäuses 500.

An der Unterseite des Gehäusebodens 520 ist eine Modulabdeckung 110 angeordnet, wobei eine Oberseite der Modulabdeckung 110 der Unterseite des Gehäusebodens 520 zugewandt angeordnet ist. Die Modulabdeckung 110 umschließt einen an der Unterseite des Gehäusebodens 520 befindlichen Bauraum für ein in Fig. 3 nicht dargestelltes Anschlussmodul des Statormoduls 2. An einer Unterseite der Modulabdeckung 110 kontaktieren die Energieversorgungsleitung 10 und die Eingangs- und Ausgangsleitung 12, 14 des Datennetzwerks 16 das Statormodul 2. An der Unterseite 552 des Modulgehäuses 500 oder an der Unterseite der Modulabdeckung 110 kann, wie in Fig. 3 dargestellt, ein Lüfter 112 angeordnet sein, um die Unterseite 9 des Statormoduls 2 und die Unterseite der Modulabdeckung 110 zu kühlen.

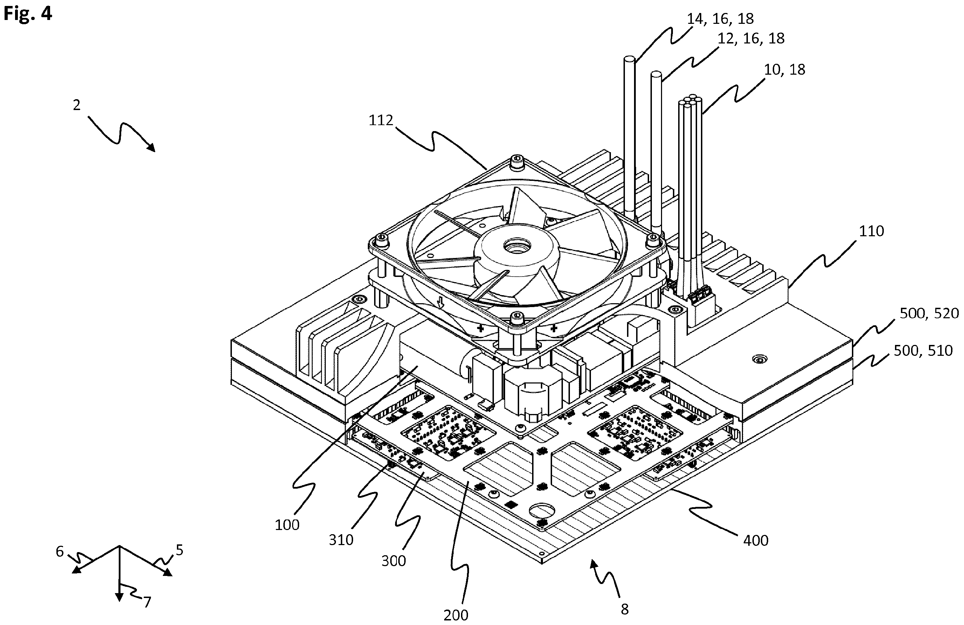

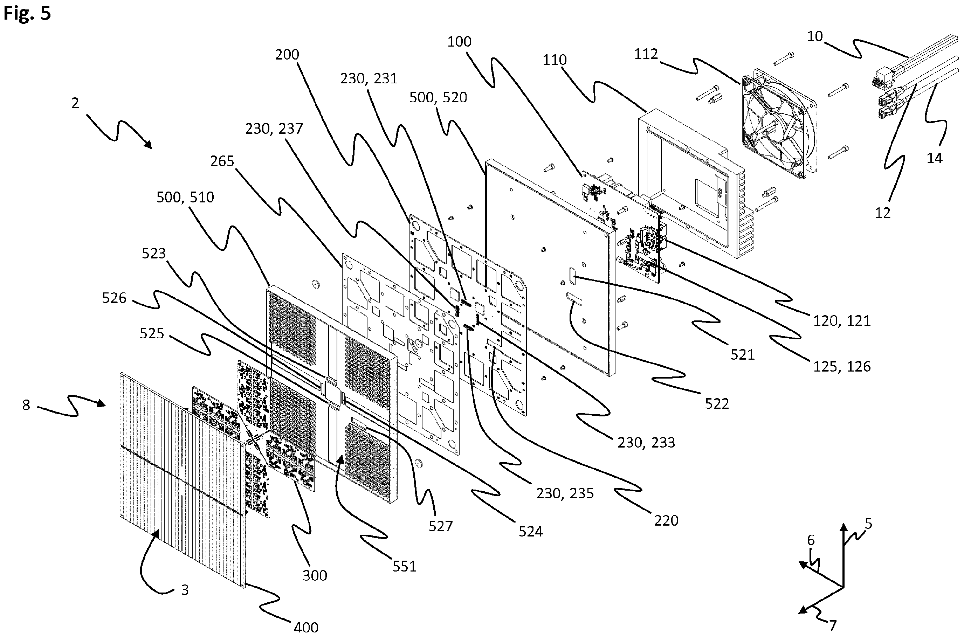

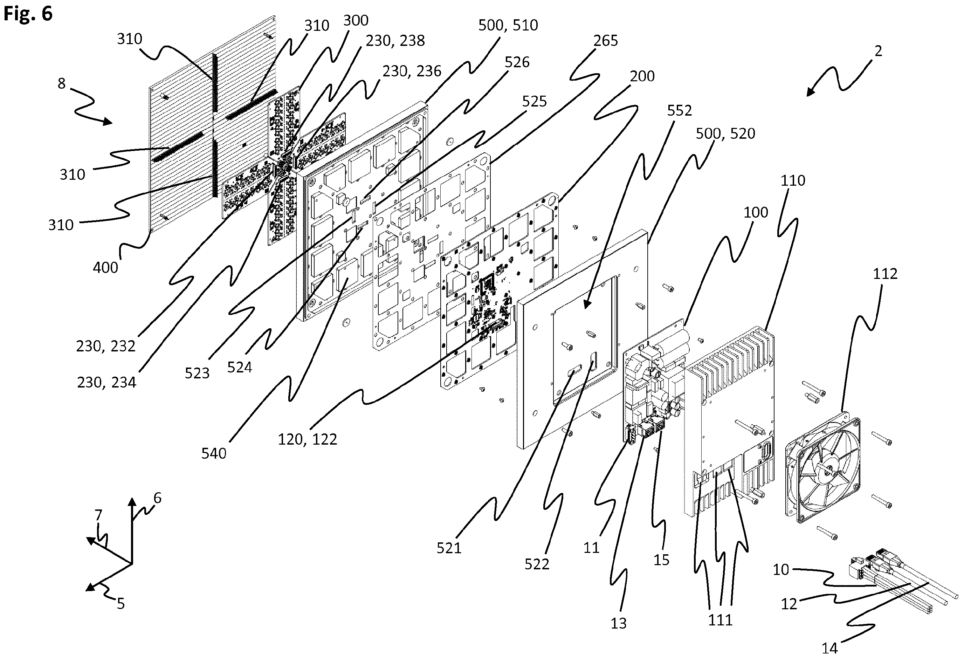

**Fig. 4** zeigt eine teilweise geschnittene perspektivische Ansicht des Statormoduls 2 von unten. **Fig. 5** zeigt eine perspektivische Explosionsansicht des Statormoduls 2 von oben, wobei unter anderem jeweils die Oberseiten der von dem Statormodul 2 umfassten Komponenten oder Module zu sehen sind. **Fig. 6** zeigt eine perspektivische Explosionsansicht des Statormoduls 2 von unten, wobei unter anderem jeweils die Unterseiten der von dem Statormodul 2 umfassten Komponenten oder Module zu sehen sind. Die Komponenten oder Module des Statormoduls 2 sind jeweils derart orientiert, dass die vertikale Richtung 7 jeweils von der Unterseite zur Oberseite der einzelnen Komponenten oder Module orientiert ist. Um Wiederholungen zu vermeiden, bezieht sich folgende Beschreibung auf alle drei Figuren 4, 5 und 6, ohne dass im Einzelnen nochmals auf die jeweilige Figur verwiesen wird.

An der Oberseite 8 des Statormoduls 2 ist die Statoreinheit 400 angeordnet, welche wiederum an ihrer Oberseite die Statorfläche 3 aufweist. In der vertikalen Richtung 7 unterhalb der Statoreinheit 400 ist ein Leistungsmodul 300 angeordnet. Das Leistungsmodul 300 ist an der Unterseite der Statoreinheit 400 und die Statoreinheit 400 ist an einer Oberseite des Leistungsmoduls 300 angeordnet. In der vertikalen Richtung 7 unterhalb des Leistungsmoduls 300 ist der Gehäusedeckel 510 des Modulgehäuses 500 angeordnet. Der Gehäusedeckel 510 und das Modulgehäuse 500 sind an einer Unterseite des Leistungsmoduls 300 angeordnet. Das Leistungsmodul 300 ist an der Oberseite 551 des Gehäusedeckels 510 und des Modulgehäuses 500 angeordnet. Das Leistungsmodul 300 wird an der Oberseite 551 des Gehäusedeckels 510 von dem Gehäusedeckel 510 teilweise umschlossen. Insbesondere wird das Leistungsmodul 300 in der ersten Richtung 5 und in der zweiten Richtung 6 von dem Gehäusedeckel 510 umschlossen. Dadurch ist das Leistungsmodul 300 an der Oberseite 551 des Gehäusedeckels 510 in den Gehäusedeckel 510 eingebettet.

In der vertikalen Richtung 7 ist unterhalb des Gehäusedeckels 510 ein Sensormodul 200 angeordnet. Das Sensormodul 200 ist an der Unterseite des Gehäusedeckels 510 angeordnet und der Gehäusedeckel 510 ist an einer Oberseite des Sensormoduls 200 angeordnet. Insbesondere ist das Sensormodul 200 in einer an der Unterseite des Gehäusedeckels 510 ausgebildeten Aussparung angeordnet. Das Sensormodul 200 wird an den Seitenflächen 34 des Modulgehäuses 500 von dem Gehäusedeckel 510, insbesondere von einem die Aussparung umgebenden Rand des Gehäusedeckels 510, umschlossen.

Zwischen der Unterseite des Gehäusedeckels 510 und der Oberseite des Sensormoduls 200 ist eine Isolationsschicht 265 angeordnet. Die Isolationsschicht 265 ist dazu ausgebildet, das Sensormodul 200 elektrisch von dem Gehäusedeckel 510 zu isolieren. Die Isolationsschicht 265 kann als eine dünne, elektrisch isolierende Folie ausgebildet sein. Die Isolationsschicht 265 kann bei geschlossenem Modulgehäuse 500 sowohl an der Oberseite des Sensormoduls 200, als auch an der Unterseite des Gehäusedeckels 510 anliegen.

In der vertikalen Richtung 7 ist unterhalb des Sensormoduls 200 der Gehäuseboden 520 angeordnet. Der Gehäuseboden 520 ist an einer Unterseite des Sensormoduls 200 angeordnet und das Sensormodul 200 ist an der Oberseite des Gehäusebodens 520 angeordnet. Der Gehäuseboden 520 liegt an der Unterseite des Gehäusedeckels 510 an dem Gehäusedeckel 510 an und deckt die an der Unterseite des Gehäusedeckels 510 ausgebildete Aussparung ab. Das durch den Gehäusedeckel 510 und den Gehäuseboden 520 gebildete Modulgehäuse 500 umschließt damit das Sensormodul 200 sowohl seitlich, als auch an dessen Ober- und Unterseite. Das Sensormodul 200 ist im Inneren des Modulgehäuses 500 angeordnet. Bei anderen, nicht gezeigten, Ausführungsformen des Modulgehäuses 500 kann auch der Gehäuseboden 520 an seiner Oberseite eine Aussparung aufweisen, in der das Sensormodul 200 angeordnet ist. In diesem Fall kann zusätzlich der Gehäusedeckel 510 an seiner Unterseite ohne Aussparung ausgebildet sein, so dass der Gehäusedeckel 510 die Aussparung an der Oberseite des Gehäusebodens 520 lediglich abdeckt.

In der vertikalen Richtung 7 ist unterhalb des Gehäusebodens 520 das Anschlussmodul 100 angeordnet. Das Anschlussmodul 100 ist an der Unterseite 552 des Gehäusebodens 520 und des Modulgehäuses 500 angeordnet. Der Gehäuseboden 520 ist an einer Oberseite des Anschlussmoduls 100 angeordnet. An der Unterseite 552 des Gehäusebodens 520 ist eine Aussparung in dem Gehäuseboden 520 ausgebildet, die einen Bauraum zur Anordnung des Anschlussmoduls 100 ausbildet. Das Anschlussmodul 100 ist zumindest teilweise in dem Bauraum angeordnet. Das Anschlussmodul 100 kann an der Unterseite 552 des Gehäusebodens 520 mittels Befestigungsmitteln, etwa Schrauben, befestigt sein.

Das Anschlussmodul 100 ist von einer an der Unterseite 552 des Gehäusebodens 520 angeordneten Modulabdeckung 110 umgeben. Eine Oberseite der Modulabdeckung 110 ist der Unterseite des Gehäusebodens 520 zugewandt angeordnet. An der Oberseite der Modulabdeckung 110 ist eine Aussparung ausgebildet, die das Anschlussmodul 100 zumindest teilweise umgibt. Ein die Aussparung in der Oberseite der Modulabdeckung 110 umgebender Rand der Modulabdeckung 110 liegt an der Unterseite 552 des Gehäusebodens 520 an dem Gehäuseboden 520 an und umgibt den an der Unterseite 552 des Gehäusebodens 520 ausgebildeten Bauraum. Der Bauraum und das in dem Bauraum angeordnete Anschlussmodul 100 werden damit durch die Modulabdeckung 110 abgedeckt.

Bei einer alternativen, nicht dargestellten Ausführungsform des Statormoduls 2 kann die Unterseite 552 des Gehäusebodens 520 auch eben ausgebildet sein und keine Aussparung aufweisen. In diesem Fall kann das Anschlussmodul 100 vollständig in der an der Oberseite der Modulabdeckung 110 ausgebildeten Aussparung und in dem durch die Aussparung gebildeten Bauraum angeordnet sein. Bei einer weiteren alternativen, nicht dargestellten Ausführungsform des Statormoduls 2 kann das Anschlussmodul 100 auch vollständig in der in der Unterseite 552 des Gehäusebodens 520 ausgebildeten Aussparung und in dem durch diese Aussparung gebildeten Bauraum angeordnet sein. Die Oberseite der Modulabdeckung 110 kann eben, insbesondere ohne die Aussparung, ausgebildet sein und die Aussparung in der Unterseite 552 des Gehäusebodens 520 abdecken. Dabei kann die Modulabdeckung 110 als eine Platte ausgebildet sein.

An einer Unterseite der Modulabdeckung 110 ist der Lüfter 112 angeordnet. Zwischen dem Lüfter 112 und der Modulabdeckung 110 können, wie in den Figuren 5 und 6 dargestellt, Abstandshalter angeordnet sein, um den Lüfter 112 beabstandet von der Modulabdeckung 110 anzuordnen. Die Abstandshalter können beispielsweise als Schraubbolzen ausgebildet sein.

Das Modulgehäuse 500 mit dem Gehäusedeckel 510 und/oder dem Gehäuseboden 520 und/oder die Modulabdeckung 110 können ein Metall, insbesondere Stahl, etwa unmagnetischer Edelstahl oder Aluminium, aufweisen oder aus einem solchen Metall bestehen.

Auf die weiteren in den Figuren 4, 5 und 6 dargestellten und mit Bezugszeichen versehenen Bauelemente wird im Rahmen der weiteren Beschreibung noch detaillierter eingegangen, so dass an dieser Stelle darauf verzichtet wird, um Wiederholungen zu vermeiden.

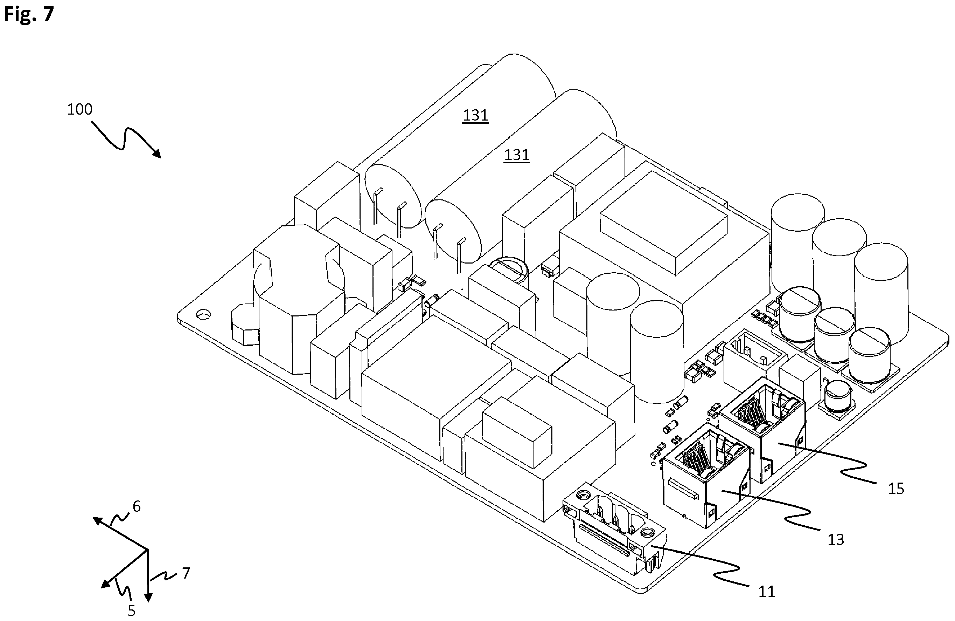

**Fig. 7** zeigt eine schematische perspektivische Darstellung der Unterseite des Anschlussmoduls 100. Das Anschlussmodul 100 ist als eine Platte ausgebildet, deren Ausdehnung in der vertikalen Richtung 7 geringer ist als in der ersten und zweiten Richtung 5, 6. Das Anschlussmodul 100 kann beispielsweise als eine mit elektronischen Bauteilen bestückte Leiterplatte ausgebildet sein und ein isolierendes Material aufweisen. Das Anschlussmodul 100 weist in der durch die erste und zweite Richtung 5, 6 aufgespannten Ebene eine im Wesentlichen rechteckige Form auf. Das Anschlussmodul 100 umfasst an dessen Unterseite angeordnete elektronische Bauteile. Außerdem sind an der Unterseite ein erstes Anschlussmittel 11 zum Anschluss der Energieversorgungsleitung 10, ein zweites Anschlussmittel 13 zum Anschluss der Eingangsleitung 12 des Datennetzwerks 16 und ein drittes Anschlussmittel 15 zum Anschluss der Ausgangsleitung 14 des Datennetzwerks 16 an dem Anschlussmodul 100 angeordnet.

Die Anschlussmittel 11, 13, 15 sind dazu ausgebildet, einen elektrischen Kontakt zwischen den Anschlussleitungen 18 und dem Anschlussmodul 100 herzustellen. Die Anschlussmittel 11, 13, 15 können, wie dargestellt, als Elemente einer Steckverbindung, insbesondere als Buchsen, ausgebildet sein. Das zweite Anschlussmittel 13 und das dritte Anschlussmittel 15 können als Netzwerkbuchsen, insbesondere als RJ-45 Buchsen, ausgebildet sein. Die Anschlussmittel 11, 13, 15 sind jeweils über an der Unterseite der Modulabdeckung 110 in der Modulabdeckung 110 ausgebildete und in Fig. 6 dargestellte Durchbrüche 111 von außerhalb des Statormoduls 2 zugänglich. Die Anschlussmittel 11, 13, 15 sind jeweils derart auf dem Anschlussmodul 100 angeordnet, dass sie in der vertikalen Richtung 7 oberhalb der Durchbrüche 111 liegen.

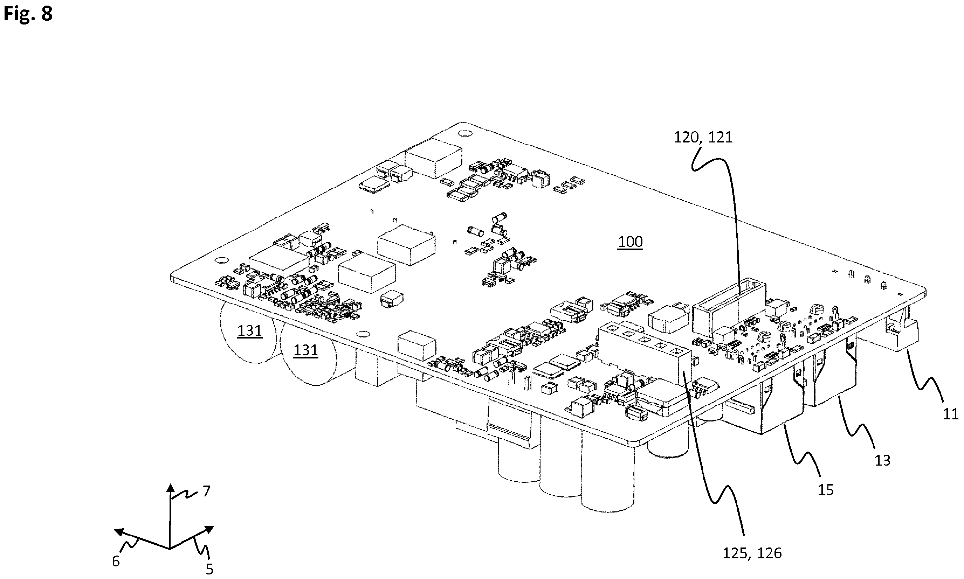

**Fig. 8** zeigt eine schematische perspektivische Darstellung der Oberseite des Anschlussmoduls 100. An der Oberseite des Anschlussmoduls 100 können ebenfalls elektronische Bauteile angeordnet sein. An der Oberseite sind ein erstes Koppelelement 121 einer ersten Verbindungsleitung 120 und ein erstes Koppelelement 126 einer zweiten Verbindungsleitung 125 an dem Anschlussmodul 100 angeordnet. Die ersten Koppelemente 121, 126 können, wie dargestellt, als Elemente einer Steckverbindung ausgebildet sein. Insbesondere können die ersten Koppelelemente 121, 126 als Buchsen ausgebildet sein. Alternativ kann das erste Koppelelement 121 der ersten Verbindungsleitung 120 und/oder das erste Koppelelement 126 der zweiten Verbindungsleitung 125 auch als ein Stecker ausbildet sein. Die Steckverbindung der ersten Verbindungsleitung 120 kann als eine geschirmte Steckverbindung ausgebildet sein. Die Steckverbindung der zweiten Verbindungsleitung 125 kann als eine ungeschirmte Steckverbindung ausgebildet sein.

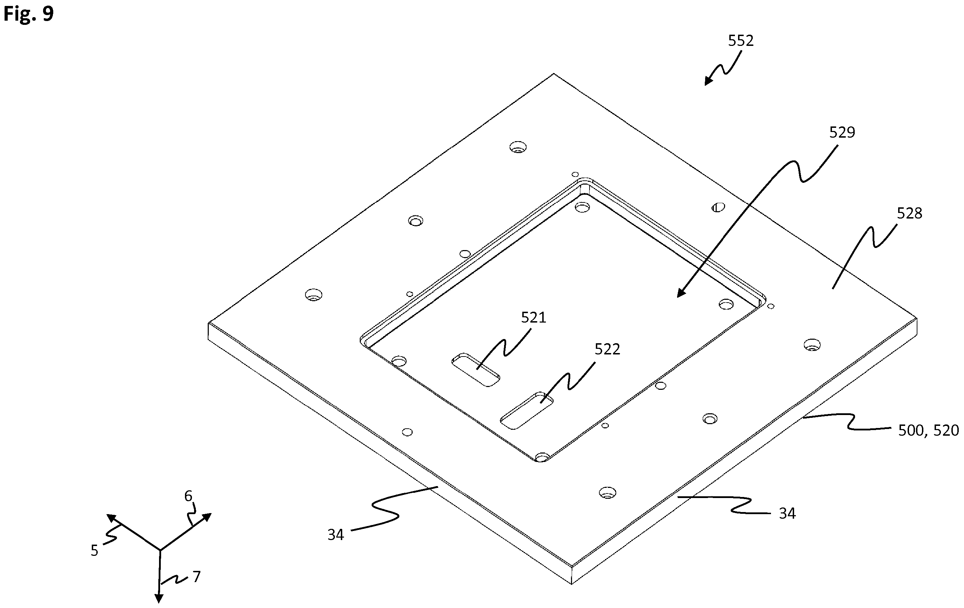

**Fig. 9** zeigt eine schematische perspektivische Darstellung der Unterseite 552 des Gehäusebodens 520 und des Modulgehäuses 500. Der Gehäuseboden 520 ist als eine Platte ausgebildet. Eine Ausdehnung des Gehäusebodens 520 in der ersten und zweiten Richtung 5, 6 ist jeweils größer als eine Ausdehnung des Gehäusebodens 520 in der vertikalen Richtung 7. Der Gehäuseboden 520 weist in der durch die erste und zweite Richtung 5, 6 aufgespannten Ebene eine im Wesentlichen rechteckige, insbesondere quadratische, Form auf. Der Gehäuseboden 520 weist an seiner Unterseite 552 eine Bodenfläche 528 auf. Die Bodenfläche 528 ist im Wesentlichen eben ausgebildet und schließt an ihren Rändern an die unteren Kanten der Seitenflächen 34 des Modulgehäuses 500 an.

An der Unterseite 552 des Gehäusebodens 520 ist die Aussparung 529 zur Aufnahme des Anschlussmoduls 100 in der Bodenfläche 528 des Gehäusebodens 520 ausgebildet. Die Aussparung 529 ist im Wesentlichen rechteckig mit vier rechtwinklig zueinander angeordneten Kanten ausgebildet. Die Aussparung 529 ist in der ersten und zweiten Richtung 5, 6 im Wesentlichen mittig in der Bodenfläche 528 angeordnet. Die Bodenfläche 528 umgibt die Aussparung 529 an allen vier Kanten, so dass die Bodenfläche 528 einen um die Aussparung 529 umlaufenden Rand bildet. Die Aussparung 529 bildet zumindest einen Teil des Bauraums zur Aufnahme des Anschlussmoduls 100 aus. Ein weiterer Teil des Bauraums kann durch das Innere der Modulabdeckung 110 gebildet werden.

Der Gehäuseboden 520 ist dazu ausgebildet, das oberhalb des Gehäusebodens 520 angeordnete Sensormodul 200 gegenüber dem Anschlussmodul 100 elektrisch und/oder magnetisch abzuschirmen. Insbesondere bildet der sich im Bereich der Aussparung 529 zwischen dem Anschlussmodul 100 und dem Sensormodul 200 befindliche Teil des Gehäusebodens 520 eine derartige elektrische und/oder magnetische Abschirmung.

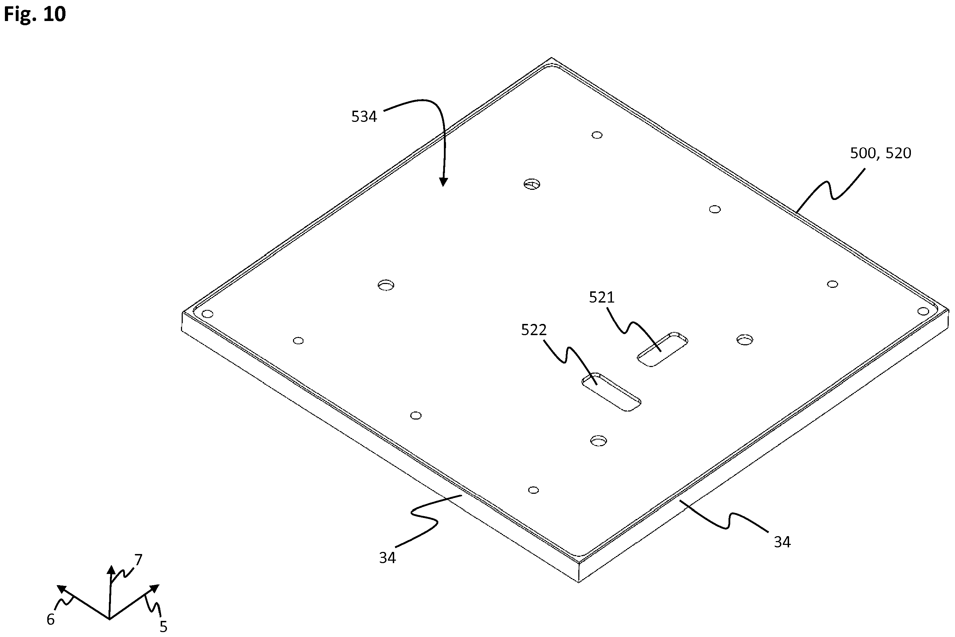

**Fig. 10** zeigt eine schematische perspektivische Darstellung der Oberseite des Gehäusebodens 520. An der Oberseite ist der Gehäuseboden 520 im Wesentlichen eben mit einer ebenen Oberfläche 534 ausgebildet. Die Oberfläche 534 ist im Wesentlichen rechteckig ausgebildet und wird an ihren Rändern von einem in der vertikalen Richtung 7 erhöhten umlaufenden Rand umgeben.

In dem Gehäuseboden 520 sind eine erste Verbindungsöffnung 521 und eine zweite Verbindungsöffnung 522 ausgebildet. Wie aus Fig. 5 ersichtlich ist, ist die erste Verbindungsöffnung 521 in der vertikalen Richtung 7 oberhalb des ersten Koppelelements 121 der ersten Verbindungsleitung 120 angeordnet, so dass das erste Koppelelement 121 der ersten Verbindungsleitung 120 über die erste Verbindungsöffnung 521 von der Oberseite des Gehäusebodens 520 aus zugänglich ist. Außerdem ist die zweite Verbindungsöffnung 522 in der vertikalen Richtung 7 oberhalb des ersten Koppelelements 126 der zweiten Verbindungsleitung 125 angeordnet, so dass das erste Koppelelement 126 der zweiten Verbindungsleitung 125 über die zweite Verbindungsöffnung 522 von der Oberseite des Gehäusebodens 520 aus zugänglich ist.

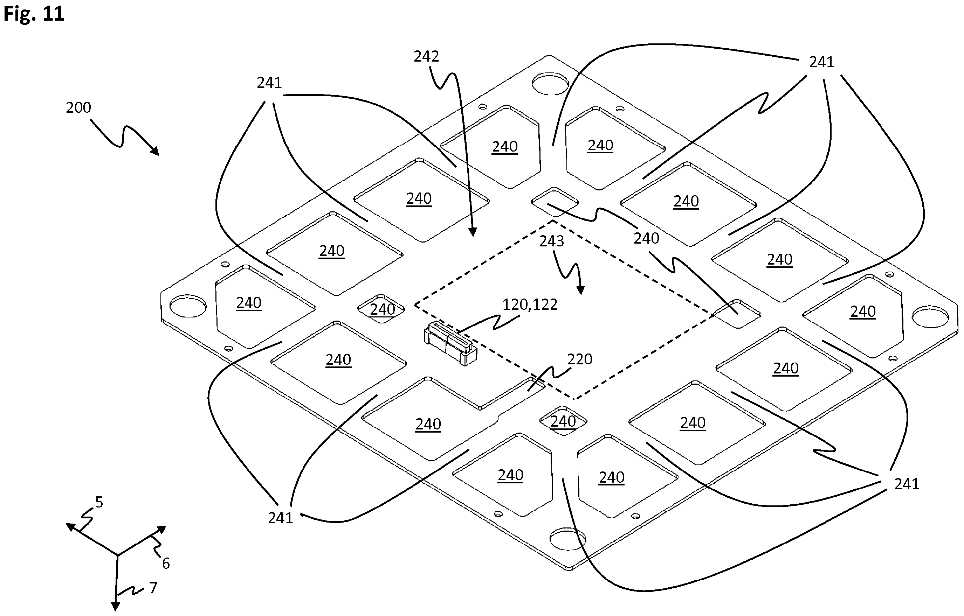

**Fig. 11** zeigt eine schematische perspektivische Darstellung der Unterseite des Sensormoduls 200. Das Sensormodul 200 ist als eine Platte ausgebildet, deren Ausdehnung in der vertikalen Richtung 7 geringer ist als in der ersten und zweiten Richtung 5, 6. Das Sensormodul 200 weist in der durch die erste und zweite Richtung 5, 6 aufgespannten Ebene eine im Wesentlichen rechteckige, insbesondere quadratische, Form auf. Das Sensormodul 200 kann beispielsweise als eine mit elektronischen Bauteilen oder Komponenten bestückte Leiterplatte ausgebildet sein und ein isolierendes Material aufweisen. Die, in Fig. 11 nicht dargestellten, elektronischen Bauteile können unter anderem an der Unterseite des Sensormoduls 200 angeordnet sein.

Das Sensormodul 200 ist über die erste Verbindungsleitung 120 elektrisch leitend mit dem Anschlussmodul 100 verbunden. Die erste Verbindungsleitung 120 ist von dem Anschlussmodul 100 durch die Unterseite 522 des Gehäusebodens 520 auf das Sensormodul 200 geführt. Insbesondere führt die erste Verbindungsleitung 120 durch die erste Verbindungsöffnung 521 in dem Gehäuseboden 520. Wie in Fig. 11 dargestellt ist, kann an der Unterseite des Sensormoduls 200 ein zweites Koppelelement 122 der ersten Verbindungsleitung 120 angeordnet sein. Wie aus den Fig. 5 und 6 ersichtlich ist, ist das zweite Koppelelement 122 der ersten Verbindungsleitung 120 derart angeordnet, dass es durch die erste Verbindungsöffnung 521 in dem Gehäuseboden 520 das an der Oberseite des Anschlussmoduls 100 angeordnete erste Koppelelement 121 der ersten Verbindungsleitung 120 elektrisch leitend kontaktiert. Ist die erste Verbindungsleitung 120 als eine Steckverbindung ausgebildet, kann das zweite Koppelelement 122 der ersten Verbindungsleitung 120 als ein Stecker oder als eine Buchse ausgebildet sein.

Alternativ kann die erste Verbindungsleitung 120 auch als eine Kabelverbindung ausgebildet sein. Eine derartige Kabelverbindung kann ein mehradriges Kabel, insbesondere ein mehradriges Flachbandkabel, umfassen. Das Kabel kann an beiden Enden jeweils ein Verbindungselement, etwa einen Stecker oder eine Buchse umfassen, die das erste und zweite Koppelelement 121, 122 der ersten Verbindungsleitung 120 elektrisch leitend kontaktieren. Alternativ kann das Statormodul 2 entweder ohne das erste Koppelelement 121 oder ohne das zweite Koppelelement 122 der ersten Verbindungsleitung 120 ausgeführt sein und das Kabel der ersten Verbindungsleitung 120 kann entweder an dem Anschlussmodul 100 oder an dem Sensormodul 200 befestigt sein, beispielsweise mittels einer Lötverbindung. Die erste Verbindungsleitung 120 kann als eine ungeschirmte Leitung ausgebildet sein, insbesondere kann die erste Verbindungsleitung 120 ungeschirmte Steckverbinder und/oder Kabel umfassen.

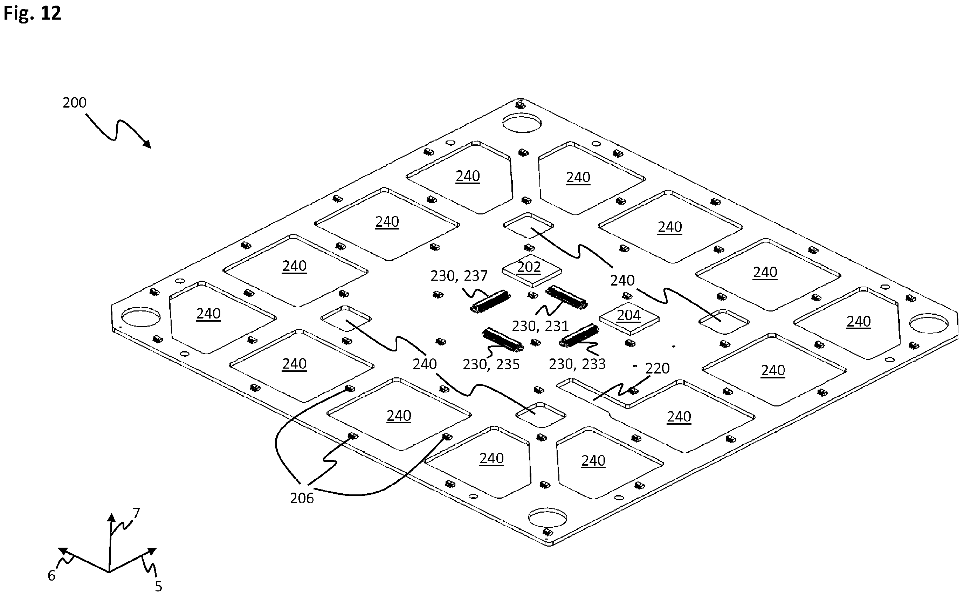

**Fig. 12** zeigt eine schematische perspektivische Darstellung der Oberseite des Sensormoduls 200. An einer im Wesentlichen ebenen Oberfläche des Sensormoduls 200 ist eine Positionserfassungseinheit 206 angeordnet. Außerdem ist eine Mehrzahl weiterer Positionserfassungseinheiten 206 an der Oberfläche des Sensormoduls 200 angeordnet. Die Positionserfassungseinheiten 206 sind in regelmäßigen Abständen voneinander und über die gesamte Oberfläche des Sensormoduls 200 verteilt auf dem Sensormodul 200 angeordnet. Die Positionserfassungseinheiten 206 können beispielsweise in einem regelmäßigen Gitter angeordnet sein. Die Positionserfassungseinheiten 206 können auch in mehreren, insbesondere zwei, zueinander versetzten regelmäßigen Gittern angeordnet sein.

Die Positionserfassungseinheiten 206 sind dazu ausgebildet, eine Position des Läufers 20 über der Statoreinheit 400 zu erfassen. Die Positionserfassungseinheiten 206 können beispielsweise dazu ausgebildet sein, ein die Position des Läufers 20 repräsentierendes Sensorsignal zu erzeugen. Die Positionserfassungseinheiten 206 können beispielsweise dazu ausgebildet sein, ein Magnetfeld, welches von an dem Läufer 20 angeordneten Magneten erzeugt wird, zu detektieren. Bei den an dem Läufer 20 angeordneten Magneten kann es sich beispielsweise um Antriebsmagneten des Läufers 20 handeln. Die Positionserfassungseinheiten 206 können beispielsweise als Magnetfeldsensoren, etwa als digitale oder analoge Hall-Sensoren, ausgebildet sein. Die Positionserfassungseinheiten 206 können dazu ausgebildet sein, Feldkomponenten des detektierten Magnetfeldes in ein, zwei oder drei linear unabhängigen Raumrichtungen zu erfassen. Beispielsweise können die Positionserfassungseinheiten 206 dazu ausgebildet sein, die Feldkomponenten in der ersten Richtung 5 und/oder der zweiten Richtung 6 und/oder der vertikalen Richtung 7 zu detektieren.

An der Oberseite des Sensormoduls 200 können neben den Positionserfassungseinheiten 206 weitere elektronische Komponenten auf dem Sensormodul 200 angeordnet sein. Beispielsweise können, wie in Fig. 12 dargestellt, eine erste Verarbeitungseinheit 202 und eine zweite Verarbeitungseinheit 204 auf der Oberfläche des Sensormoduls 200 angeordnet sein. Die erste und zweite Verarbeitungseinheit 202, 204 können als integrierte Schaltung, etwa als Mikroprozessor, FPGA oder Mikrocontroller, ausgebildet sein. Abgesehen von den Positionserfassungseinheiten 206 und dem Verarbeitungseinheiten 202, 204 kann die Oberfläche des Sensormoduls 200 frei von elektronischen Komponenten sein.

Bei alternativen, nicht dargestellten Ausführungsformen des Statormoduls 200 können die Positionserfassungseinheiten 206 und/oder die erste Verarbeitungseinheit 202 und/oder die zweite Verarbeitungseinheit 204 auch auf der Unterseite des Sensormoduls 200 angeordnet sein. Bei weiteren alternativen Ausführungsformen können die erste Verarbeitungseinheit 202 und/oder die zweite Verarbeitungseinheit 204 auch an einer anderen Stelle in dem Statormodul 2 angeordnet sein, etwa an dem Anschlussmodul 100 oder dem Leistungsmodul 300.

Das Sensormodul 200 ist mit dem Leistungsmodul 300 über eine dritte Verbindungsleitung 230 elektrisch leitend verbunden. Die dritte Verbindungsleitung 230 kann eine oder mehrere Steckverbindungen umfassen. Die in Fig. 12 dargestellte dritte Verbindungsleitung 230 umfasst ein erstes Koppelelement 231, welches an der Oberseite des Sensormoduls 200 angeordnet ist und Teil einer ersten Steckverbindung ist. Die dritte Verbindungsleitung 230 kann weiterhin ein zweites Koppelelement 233 als Teil einer zweiten Steckverbindung, ein drittes Koppelelement 235 als Teil einer dritten Steckverbindung und ein viertes Koppelelement 237 als Teil einer vierten Steckverbindung umfassen. Die zweiten bis vierten Koppelelemente 233, 235, 237 sind wie das erste Koppelelement 231 an der Oberseite des Sensormoduls 200 angeordnet. Die Koppelelemente 231, 233, 235, 237 können, wie dargestellt, als Stecker ausgebildet sein. Die Koppelelemente 231, 233, 235, 237 können aber auch als Buchsen ausgebildet sein. Bei alternativen, nicht dargestellten Ausführungsformen des Sensormoduls 200 kann die dritte Verbindungsleitung 230 auch weniger als vier Koppelelemente, beispielsweise nur das erste Koppelelement 231, oder mehr als vier Koppelelemente umfassen. Die dritte Verbindungsleitung 230, insbesondere die Koppelelemente 231, 233, 235, 237 der dritten Verbindungsleitung 230, sind in der ersten und zweiten Richtung 5, 6 in der Mitte des Sensormoduls 200 angeordnet.

Wie aus den Figuren 11 und 12 ersichtlich ist, weist das Sensormodul 200 einen Verbindungsausschnitt 220 auf. Der Verbindungsausschnitt 220 kann als ein Durchbruch bzw. als eine Durchgangsöffnung in dem Sensormodul 200 ausgebildet sein. Wie aus den Fig. 5 und 6 ersichtlich ist, ist der Verbindungsausschnitt 220 über der zweiten Verbindungsöffnung 522 des Gehäusebodens 520 und über dem ersten Koppelelement 126 der zweiten Verbindungsleitung 125 angeordnet. Das erste Koppelelement 126 der zweiten Verbindungsleitung 125 ist von der Oberseite des Sensormoduls 200 aus über den Verbindungsauschnitt 220 zugänglich.

Die Leiterplatte des Sensormoduls 200 kann eine oder mehrere Kupferlagen aufweisen, in denen Leiterbahnen zur Kontaktierung der auf der Leiterplatte angeordneten elektronischen Bauteile ausgebildet sind. Die Kupferlagen können eine Dicke von 10 µm bis 50 µm, insbesondere von 20 µm bis 40 µm, insbesondere von 35 µm aufweisen. Die elektronischen Bauteile können über in der oder den Kupferlagen ausgebildete feinstrukturierte Leiterbahnen kontaktiert sein. Die feinstrukturierten Leiterbahnen können eine Breite zwischen 50 µm und 250 µm, insbesondere zwischen 100 µm und 150 µm, insbesondere von 125 µm aufweisen.

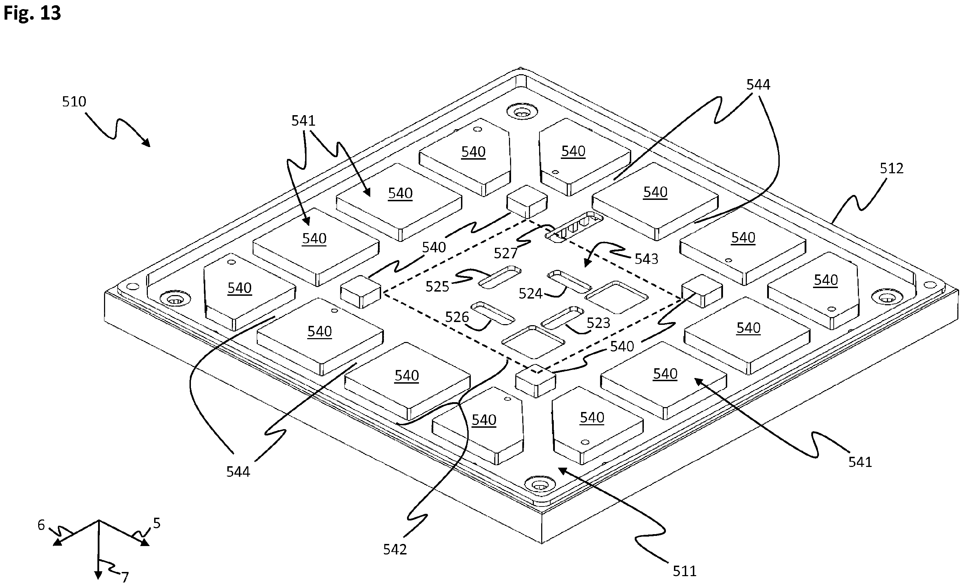

**Fig. 13** zeigt eine schematische perspektivische Darstellung der Unterseite des Gehäusedeckels 510. Der Gehäusedeckel 510 ist als eine Platte ausgebildet. Eine Ausdehnung des Gehäusedeckels 510 in der ersten und zweiten Richtung 5, 6 ist jeweils größer als eine Ausdehnung des Gehäusedeckels 510 in der vertikalen Richtung 7. Der Gehäusedeckel 510 weist in der durch die erste und zweite Richtung 5, 6 aufgespannten Ebene eine im Wesentlichen rechteckige, insbesondere eine quadratische, Form auf.

Der Gehäusedeckel 510 weist an seiner Unterseite die Aussparung 511 auf, welche von dem erhöhten Rand 512 umgeben ist. Der Rand 512 ist entlang der Außenseiten des Gehäusedeckels 510 umlaufend um die Aussparung 511 ausgebildet. Bei geschlossenem Modulgehäuse 500 kann der Rand 512 auf der Oberfläche 534 des Gehäusebodens 520 aufliegen. Alternativ oder zusätzlich kann der an der Oberfläche 534 des Gehäusebodens 520 ausgebildete umlaufende Rand bei geschlossenem Modulgehäuse 500 an dem Gehäusedeckel 510 aufliegen. Der an der Oberfläche 534 des Gehäusebodens 520 ausgebildete umlaufende Rand kann gegenüber dem an der Unterseite des Gehäusedeckels 510 ausgebildeten Rand 512 in Richtung des Inneren des Modulgehäuses 500 versetzt angeordnet sein. Alternativ kann auch der an der Unterseite des Gehäusedeckels 510 ausgebildete Rand 512 gegenüber dem an der Oberfläche 534 des Gehäusebodens 520 ausgebildeten umlaufenden Rand in Richtung des Inneren des Modulgehäuses 500 versetzt angeordnet sein. Allgemein können also der an der Unterseite des Gehäusedeckels 510 ausgebildete Rand 512 und der an der Oberfläche 534 des Gehäusebodens 520 ausgebildete umlaufende Rand in der durch die erste und zweite Richtung 5, 6 aufgespannten Ebene gegeneinander versetzt angeordnet sein. Die Aussparung 511 ist derart ausgeformt, dass das Sensormodul 200 in die Aussparung 511 einlegbar ist. Das Sensormodul 200 ist, wenn es in die Aussparung 511 eingelegt ist, von dem Rand 512 umgeben.

Das Statorgehäuse 500 umfasst Wärmeleitelemente 540. Die Wärmeleitelemente 540 sind innerhalb des Statorgehäuses 500, insbesondere innerhalb des an dem Gehäusedeckel 510 ausgebildeten Rands 512 und innerhalb des an dem Gehäuseboden 520 ausgebildeten umlaufenden Rands, angeordnet. Die Wärmeleitelemente 540 sind getrennt von dem an dem Gehäusedeckel 510 ausgebildeten Rand 512 und dem an dem Gehäuseboden 520 ausgebildeten umlaufenden Rand ausgebildet. Die Wärmeleitelemente 540 sind dazu ausgebildet, eine wärmeleitende Verbindung zwischen der Oberseite 551 des Modulgehäuses 500 und der Unterseite 552 des Modulgehäuses 500, herzustellen.

Die Wärmeleitelemente 540 sind an der Unterseite des Gehäusedeckels 520 ausgebildet. Die Wärmeleitelemente 540 sind innerhalb der Aussparung 511 angeordnet und als entgegen der vertikalen Richtung 7 erhabene Erhebungen mit einer flachen und ebenen Deckfläche 541 ausgebildet. Die Wärmeleitelemente 540 können aus dem gleichen Material wie der Gehäusedeckel 520 bestehen. Die Wärmeleitelemente 540 können insbesondere materialeinheitlich mit dem Gehäusedeckel 520 verbunden sein.

Die Wärmeleitelemente 540 sind in einem Randbereich 542 der Aussparung 511 und des Gehäusedeckels 510 angeordnet. Der Randbereich 542 kann eine konstante Breite aufweisen und mehr als 50%, insbesondere mehr als 75%, insbesondere mehr als 85% der Gesamtfläche des Gehäusedeckels 510 in der ersten und zweiten Richtung 5, 6 umfassen. Insbesondere ist ein von dem Randbereich 542 umgebener Mittenbereich 543 des Gehäusedeckels 510 frei von den Wärmeleitelementen 540. Der Mittenbereich 543 ist mittig in der Aussparung 511 angeordnet. Der Mittenbereich umfasst die von dem Randbereich in der ersten und zweiten Richtung 5, 6 nicht abgedeckte Fläche des Gehäusedeckels 510. Die Wärmeleitelemente 540 sind in dem Randbereich 542 nebeneinander und entlang des Randes des Gehäusedeckels 510 umlaufend angeordnet. Benachbarte Wärmeleitelemente 540 sind jeweils voneinander beabstandet angeordnet, so dass zwischen benachbarten Wärmeleitelementen 540 jeweils ein Zwischenraum 544 ausgebildet ist.

Wie aus den Figuren 11 und 12 ersichtlich ist, weist das Sensormodul 200 Gehäusedurchlässe 240 auf. Die Gehäusedurchlässe 240 sind als in dem Sensormodul 200 ausgebildete Durchgangsöffnungen ausgebildet. Insbesondere sind die Gehäusedurchlässe 240 als in der Leiterplatte des Sensormoduls 200 ausgebildete Durchgangsöffnungen ausgebildet. Die Gehäusedurchlässe 240 sind derart ausgeformt und angeordnet, dass jedes der Wärmeleitelemente 540 jeweils in einem der Gehäusedurchlässe 240 angeordnet ist, wenn das Sensormodul 200 in dem geschlossenen Modulgehäuse 500 angeordnet ist. Die Gehäusedurchlässe 240 bilden damit Durchgriffe für die Wärmeleitelemente 540 in dem Sensormodul 200 aus.

Wie die Wärmeleitelemente 540 sind die Gehäusedurchlässe 240 in der ersten und zweiten Richtung 5, 6 in einem am Rand des Sensormoduls 200 umlaufenden Randbereich 242 angeordnet.

Zwischen benachbarten Gehäusedurchlässen 240 sind jeweils Stege 241 ausgebildet, die von den Außenkanten des Sensormoduls 200 in einen Mittenbereich 243 des Sensormoduls 200 verlaufen. Der Mittenbereich 243 ist mittig in dem Sensormodul 200 ausgebildet und wird von dem Randbereich 242 umgeben. Der Randbereich 242 und der Mittenbereich 243 des Sensormoduls 200 weisen im Wesentlichen die gleichen Abmessungen auf wie der Randbereich 542 und der Mittenbereich 543 des Gehäusedeckels 510.

Ein erster Teil der Stege 241 verläuft jeweils parallel zu der ersten oder zweiten Richtung 5, 6 und damit senkrecht zu derjenigen Außenkante des Sensormoduls 200, an der der betreffende Steg 241 angeordnet ist. Ein zweiter Teil der Stege 241, bestehend aus zwei Stegen 241, verläuft im Randbereich jeweils diagonal von einer der vier Ecken des Sensormoduls 200 in Richtung der gegenüberliegenden Ecke des Sensormoduls 200. Die Gehäusedurchlässe 240 sind jeweils derart angeordnet, dass jedem der Stege 241 des ersten Teils an der gegenüberliegenden Außenkante des Sensormoduls 200 jeweils einer der Gehäusedurchlässe 240 mittig gegenüberliegt. Auf den Stegen 241 des ersten Teils ist jeweils eine der Positionserfassungseinheiten 206 angeordnet. Wenn das Sensormodul 200 in dem Modulgehäuse 500 angeordnet ist, befinden sich die Stege 241 innerhalb der Zwischenräume 544 zwischen den Wärmeleitelementen 540.

Die Wärmeleitelemente 540 sind dazu ausgebildet, bei geschlossenem Modulgehäuse 500 an dem Gehäuseboden 520 aufzuliegen, so dass über die Wärmeleitelemente 540 eine wärmeleitfähige Verbindung zwischen dem Gehäuseboden 520 und dem Gehäusedeckel 510 ausgebildet wird. Insbesondere liegen die Deckflächen 541 der Wärmeleitelemente 540 bei geschlossenem Modulgehäuse 500 an dem Gehäuseboden 520 an. Beispielsweise können die Deckflächen 541 flächig an dem Gehäuseboden 520 anliegen. Bei dem Statormodul 2 liegen die Deckflächen 541 flächig auf der Oberfläche 534 des Gehäusebodens 520 auf.

Bei alternativen, nicht dargestellten Ausführungsformen des Statormoduls 2 können die Wärmeleitelemente 540 auch eine wärmeleitende Verbindung zwischen der Oberseite 551 und der Unterseite 552 des Modulgehäuses 500 herstellen, indem sie mit dem Gehäuseboden 520 materialeinheitlich verbunden sind und bei geschlossenem Modulgehäuse 500 an dem Gehäusedeckel 510 anliegen, etwa an der Unterseite des Gehäusedeckels 510. Zur Verbesserung der Wärmeleitung kann an den Stellen, an denen die Wärmeleitelemente 540 an dem Gehäuseboden 520 oder dem Gehäusedeckel 510 anliegen, eine Wärmeleitpaste zwischen den Wärmeleitelementen 540 und dem Modulgehäuse 500 angeordnet oder aufgetragen sein.

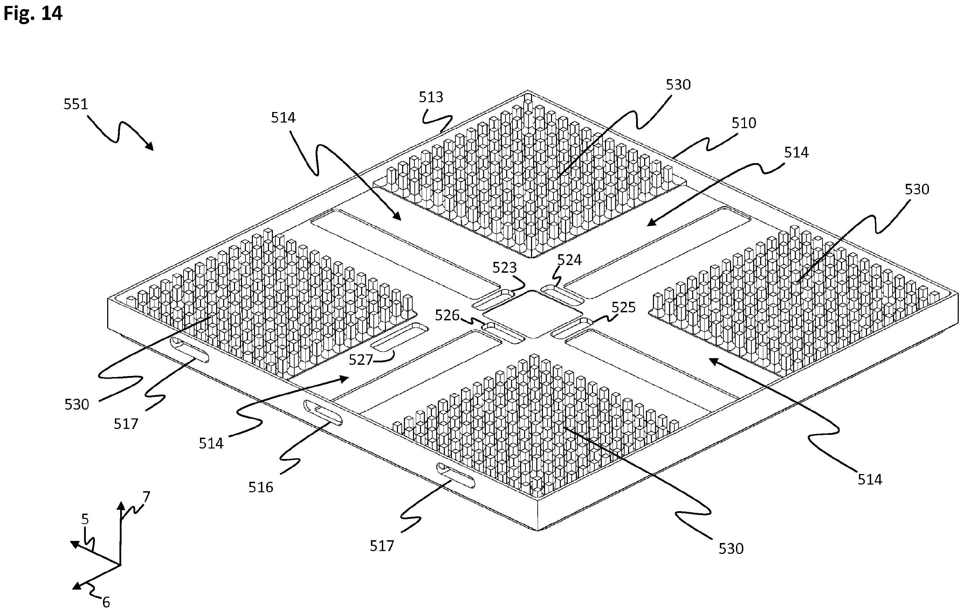

**Fig. 14** zeigt eine schematische perspektivische Darstellung der Oberseite des Gehäusedeckels 510. Die Oberseite des Gehäusedeckels 510 bildet zugleich die Oberseite 551 des Modulgehäuses 500. Der Gehäusedeckel 510 weist an der Oberseite einen Bauraum 514 für das Leistungsmodul 300 auf. Der Bauraum 514 ist kreuzförmig ausgebildet und wird von einem an den Außenkanten des Gehäusedeckels 510 umlaufenden erhöhten Rand 513 umgeben. Der Bauraum 514 verläuft in der ersten Richtung 5 und in der zweiten Richtung 6 jeweils in der Mitte des Gehäusedeckels 510 von einer der Außenkanten zur gegenüberliegenden Außenkante.

Der Gehäusedeckel 510 weist an der Oberseite 551 außerdem vier Wärmeleitstrukturen 530 auf. In jeder der vier Ecken des Gehäusedeckels 510 ist jeweils eine der Wärmeleitstrukturen 530 angeordnet. Die Wärmeleitstrukturen 530 sind in der Aufsicht auf die Oberseite 551 des Gehäusedeckels 510 jeweils rechteckig ausgebildet. Die Wärmeleitstrukturen 530 können in der ersten und zweiten Richtung 5, 6 jeweils gleiche Abmessungen aufweisen und in der Aufsicht auf die Oberseite 551 des Gehäusedeckels 510 quadratisch ausgebildet sein. Zwischen den in den Ecken des Gehäusedeckels 510 angeordneten Wärmeleitstrukturen 530 erstreckt sich der kreuzförmige Bauraum 514 für das Leistungsmodul 300. Die Wärmeleitstrukturen 530 weisen in der vertikalen Richtung 7 eine Höhe auf, die der Höhe des Rands 513 in der vertikalen Richtung 7 entspricht.

Die Wärmeleitstrukturen 530 weisen an ihrer Oberseite ebene Auflageflächen auf, welche an der Unterseite der Statoreinheit 400 an einer Bodenfläche der Statoreinheit 400 anliegen. Die Wärmeleitstrukturen 530 können als Quader ausgebildet sein und in der ersten Richtung 5 und in der zweiten Richtung 6 geschlossen und ohne Unterbrechungen ausgebildet sein. In diesem Fall können Deckflächen der Quader die Auflageflächen ausbilden.

Die Wärmeleitstrukturen 530 können aber auch in der ersten Richtung 5 und/oder in der zweiten Richtung 6 Unterbrechungen aufweisen. Insbesondere können die Wärmeleitstrukturen 530, wie in Fig. 14 dargestellt, jeweils eine Vielzahl von entlang der vertikalen Richtung 7 orientierten Stäben bzw. Zylindern aufweisen. Die Stäbe können jeweils in der ersten Richtung 5 und in der zweiten Richtung 6 voneinander beabstandet in einem regelmäßigen Gitter angeordnet sein. Insbesondere können die Stäbe in der ersten und der zweiten Richtung 5, 6 jeweils den gleichen Abstand zueinander aufweisen. Die Stäbe bzw. Zylinder weisen an der Oberseite jeweils ebene Auflageflächen auf.

Die Stäbe bzw. Zylinder können in der Aufsicht auf die Oberfläche des Gehäusedeckels 510 jeweils, wie in Fig. 14 dargestellt, quadratische Auflageflächen aufweisen. Die Auflageflächen können jeweils Grundflächen der Stäbe bzw. Zylinder bilden. Bei alternativen, nicht dargestellten Ausführungsformen des Gehäusedeckels 510 können die Stäbe auch eine runde, rautenförmige oder sechseckige Auflagefläche oder Grundfläche aufweisen. Die Stäbe bzw. Zylinder können in der ersten und zweiten Richtung 5, 6, wie in Fig. 14 dargestellt, jeweils eine geringere Ausdehnung als in der vertikalen Richtung 7 aufweisen. Bei alternativen, nicht dargestellten Ausführungsformen können die Stäbe bzw. Zylinder in der ersten und zweiten Richtung 5, 6 auch eine größere Ausdehnung aufweisen als in der vertikalen Richtung 7.

Bei alternativen, nicht dargestellten Ausführungsformen des Gehäusedeckels 510 mit Wärmeleitstrukturen 530, die in der ersten und/oder der zweiten Richtung 5, 6 Unterbrechungen aufweisen, können die Wärmeleitstrukturen 530 auch in der vertikalen Richtung 7 erhöhte Stege umfassen, die eine Wabenstruktur, eine Gitterstruktur aus gekreuzten Stegen oder eine Linienstruktur aus nebeneinander angeordneten und parallelen Stegen ausbilden. Dabei umfassen die Stege an ihrer Oberseite jeweils ebene Auflageflächen.

Die Wärmeleitstrukturen 530 können mit dem Gehäusedeckel 510, wie in Fig. 14 dargestellt, materialeinheitlich verbunden sein. Bei alternativen, nicht dargestellten Ausführungsformen des Statormoduls 2 können die Wärmeleitstrukturen 530 auch getrennt von dem Gehäusedeckel 510 und aus einem Metall, beispielsweise Stahl, Kupfer oder Aluminium ausgebildet sein. Die getrennt von dem Gehäusedeckel 510 ausgebildeten Wärmeleitstrukturen können an den gleichen Stellen wie die in Fig. 14 dargestellten Wärmeleitstrukturen 530 an der Oberseite 551 des Gehäusedeckels 510 angeordnet und/oder befestigt sein. Alternativ oder zusätzlich können auch die im Inneren des Modulgehäuses 500 angeordneten Wärmeleitelemente 540 getrennt von dem Gehäusedeckel 510 und/oder dem Gehäuseboden 520 ausgebildet und an den gleichen Stellen wie die materialeinheitlich mit dem Gehäusedeckel 510 verbunden ausgebildeten Wärmeleitelemente 540 angeordnet sein.

Wie aus den Figuren 13 und 14 ersichtlich ist, weist der Gehäusedeckel 510 eine dritte Verbindungsöffnung 523, eine vierte Verbindungsöffnung 524, eine fünfte Verbindungsöffnung 525 und eine sechste Verbindungsöffnung 526 auf. Die dritten bis sechsten Verbindungsöffnungen 523, 524, 525, 526 sind als Durchgangslöcher in der Mitte des Gehäusedeckels 510 ausgebildet. Die dritte Verbindungsöffnung 523 ist oberhalb des ersten Koppelelements 231 der dritten Verbindungsleitung 230, die vierte Verbindungsöffnung 524 ist oberhalb des zweiten Koppelelements 233 der dritten Verbindungsleitung 230, die fünfte Verbindungsöffnung 525 ist oberhalb des dritten Koppelelements 235 der dritten Verbindungsleitung 230 und die sechste Verbindungsöffnung 526 ist oberhalb des vierten Koppelelements 237 der dritten Verbindungsleitung 230 angeordnet. Die ersten bis vierten Koppelelemente 231, 233, 235, 237 sind von der Oberseite 551 des Modulgehäuses 500 und des Gehäusedeckels 510 aus durch die dritten bis sechsten Verbindungsöffnungen 523, 524, 525, 526 zugänglich.

Der Gehäusedeckel 510 weist außerdem eine siebte Verbindungsöffnung 527 auf. Die siebte Verbindungsöffnung 527 ist oberhalb des Verbindungsauschnitts 220 in dem Sensormodul 200, oberhalb der zweiten Verbindungsöffnung 522 in dem Gehäuseboden 520 und oberhalb des an der Oberseite des Anschlussmoduls 100 angeordneten ersten Koppelelements 126 der zweiten Verbindungsleitung 125 angeordnet. Über die siebte Verbindungsöffnung 527, den Verbindungsauschnitt 220 und die zweite Verbindungsöffnung 522 ist das erste Koppelelement 126 der zweiten Verbindungsleitung 125 von der Oberseite 551 des Modulgehäuses 500 und des Gehäusedeckels 510 aus zugänglich.

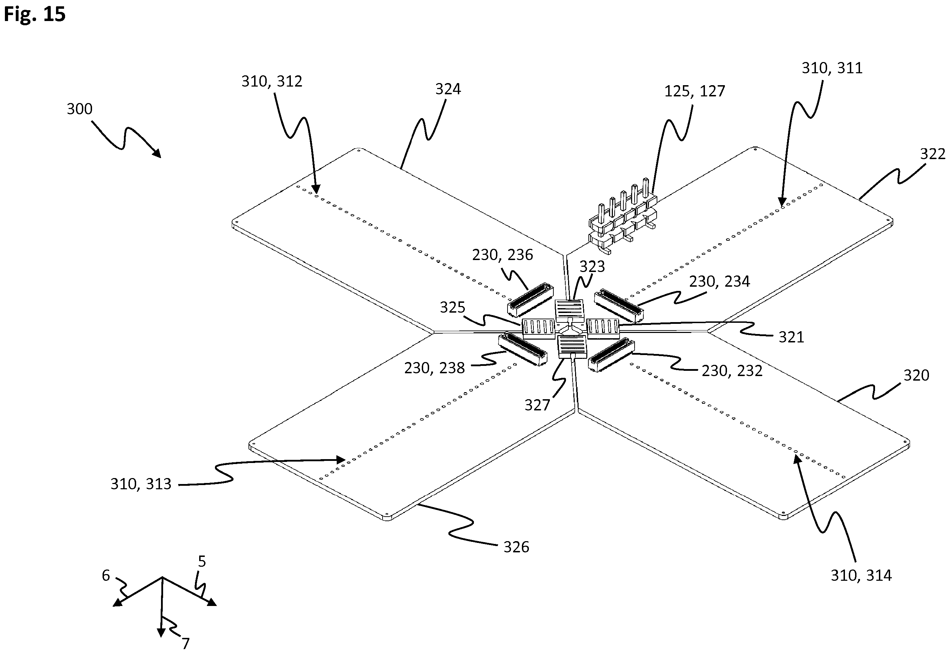

**Fig. 15** zeigt eine schematische perspektivische Darstellung der Unterseite des Leistungsmoduls 300. Das Leistungsmodul 300 ist an seiner Unterseite im Wesentlichen eben ausgebildet. Auf der Unterseite können in Fig. 15 nicht dargestellte elektronische Bauteile oder Komponenten an dem Leistungsmodul 300 angeordnet sein. Das Leistungsmodul 300 ist als eine Platte ausgebildet. Eine Ausdehnung des Leistungsmoduls 300 in der ersten und zweiten Richtung 5, 6 ist jeweils größer als eine Ausdehnung des Leistungsmoduls 300 in der vertikalen Richtung 7. Das Leistungsmodul 300 kann eine Leiterplatte mit auf der Leiterplatte angeordneten elektronischen Bauteilen oder Komponenten umfassen.

Die Leiterplatte des Leistungsmoduls 300 kann eine oder mehrere Kupferlagen aufweisen, in denen Leiterbahnen zur Kontaktierung der auf der Leiterplatte angeordneten elektronischen Bauteile ausgebildet sind. Die Kupferlagen können eine Dicke von 10 µm bis 500 µm, insbesondere von 50 µm bis 100pm, insbesondere von 70 µm aufweisen. Die Leiterbahnen können eine Mindestbreite von 50 µm oder 100 µm, insbesondere von 200 µm oder von 300 µm aufweisen.

Das Leistungsmodul 300 ist in der durch die erste und zweite Richtung 5, 6 aufgespannten Ebene kreuzförmig mit zwei senkrecht zueinander orientierten und entlang der ersten und zweiten Richtung 5, 6 ausgerichteten Balken ausgebildet. Die Balken des Leistungsmoduls 300 weisen in der ersten Richtung 5 und in der zweiten Richtung 6 jeweils gleiche Ausdehnungen auf.

Das Leistungsmodul 300 umfasst eine erste Moduleinheit 320, eine zweite Moduleinheit 322, eine dritte Moduleinheit 324 und eine vierte Moduleinheit 326. Soweit im Folgenden keine Unterschiede beschrieben werden, sind die Moduleinheiten 320, 322, 324, 326 identisch ausgebildet. Die erste und dritte Moduleinheit 320, 324 bilden den entlang der ersten Richtung 5 ausgerichteten Balken des kreuzförmigen Leistungsmoduls 300, die zweite und vierte Moduleinheit 322, 326 bilden den entlang der zweiten Richtung 6 ausgerichteten Balken des kreuzförmigen Leistungsmoduls 300.

Die Moduleinheiten 320, 322, 324, 326 weisen in der durch die erste und zweite Richtung 5, 6 aufgespannten Ebene jeweils einen in der Aufsicht auf die Unterseite der Moduleinheiten 320, 322, 324, 326 rechteckig ausgebildeten Teil auf. An einer Seite des rechteckigen Teils schließt sich die Basis eines dreieckigen Teils an, welcher in der Aufsicht auf die Unterseite der Moduleinheiten 320, 322, 324, 326 im Wesentlichen die Form eines gleichschenkligen Dreiecks aufweist. Die Moduleinheiten 320, 322, 324, 326 sind kreuzförmig um einen gemeinsamen Mittelpunkt angeordnet, wobei die Spitzen der dreieckigen Teile der Moduleinheiten 320, 322, 324, 326 jeweils einander zugewandt an dem Mittelpunkt angeordnet sind. Die erste Moduleinheit 320 und die dritte Moduleinheit 324 sind in der ersten Richtung 5 einander gegenüberliegend angeordnet, wobei die Spitzen der dreieckigen Teile der ersten und dritten Moduleinheit 320, 324 jeweils einander zugewandt an dem Mittelpunkt angeordnet sind. Die zweite Moduleinheit 322 und die vierte Moduleinheit 326 sind in der zweiten Richtung 6 einander gegenüberliegend angeordnet, wobei die Spitzen der als gleichschenklige Dreiecke ausgebildeten Teile der zweiten und vierten Moduleinheit 322, 326 jeweils einander zugewandt an dem Mittelpunkt angeordnet sind.

Ein Schenkel des dreieckigen Teils der zweiten Moduleinheit 322 ist neben einem Schenkel des dreieckigen Teils der ersten Moduleinheit 320 angeordnet. Ein weiterer Schenkel des dreieckigen Teils der zweiten Moduleinheit 322 ist neben einem Schenkel des dreieckigen Teils der dritten Moduleinheit 324 angeordnet. Ein Schenkel des dreieckigen Teils der vierten Moduleinheit 326 ist neben einem weiteren Schenkel des dreieckigen Teils der ersten Moduleinheit 320 angeordnet. Ein weiterer Schenkel des dreieckigen Teils der vierten Moduleinheit 326 ist neben einem weiteren Schenkel des dreieckigen Teils der dritten Moduleinheit 324 angeordnet.

Die Moduleinheiten 320, 322, 324, 326 sind über Anschlussmittel 321, 323, 325, 327 elektrisch leitend miteinander verbunden. Zusätzlich können die Anschlussmittel 321, 323, 325, 327 dazu ausgebildet sein, die Moduleinheiten 320, 322, 324, 326 mechanisch starr miteinander zu verbinden. Ein erstes Anschlussmittel 321 verbindet die erste Moduleinheit 320 mit der zweiten Moduleinheit 322, ein zweites Anschlussmittel 323 verbindet die zweite Moduleinheit 322 mit der dritten Moduleinheit 324, ein drittes Anschlussmittel 325 verbindet die dritte Moduleinheit 324 mit der vierten Moduleinheit 326 und ein viertes Anschlussmittel 327 verbindet die vierte Moduleinheit 326 mit der ersten Moduleinheit 320. Bei alternativen, nicht dargestellten Ausführungsformen kann das Leistungsmodul 300 einstückig aus einer einzelnen zusammenhängenden Platte und ohne die Moduleinheiten 320, 322, 324, 326 und Anschlussmittel 321, 323, 325, 327 ausgebildet sein.

Die Anschlussmittel 321, 323, 325, 327 sind jeweils an den Schenkeln der dreieckigen Teile der Moduleinheiten 320, 322, 324, 326 angeordnet. Die Anschlussmittel 321, 323, 325, 327 verbinden jeweils nebeneinander angeordnete Schenkel benachbarter Moduleinheiten 320, 322, 324, 326.

Die Anschlussmittel 321, 323, 325, 327 können als elektrische Steckverbinder ausgebildet sein, etwa als Leiterplattenverbinder. Die Anschlussmittel 321, 323, 325, 327 können insbesondere auch als einpressbare Leiterplattenverbinder ausgebildet sein. Die Anschlussmittel 321, 323, 325, 327 können beispielsweise auf der Unterseite der Moduleinheiten 320, 322, 324, 326 in in den Moduleinheiten 320, 322, 324, 326 ausgebildete Kontaktlöcher eingepresst sein. Insbesondere können die Anschlussmittel 321, 323, 325, 327 eine lötfreie elektrisch leitende Verbindung zwischen den Moduleinheiten 320, 322, 324, 326 bilden.

Das Leistungsmodul 300 ist mit dem Anschlussmodul 100 über die zweite Verbindungsleitung 125 elektrisch leitend verbunden. Die zweite Verbindungsleitung 125 führt von dem Anschlussmodul 100 durch den Gehäuseboden 520, durch das Innere des Modulgehäuses 500 und durch den Gehäusedeckel 510 auf das Leistungsmodul 300. Insbesondere führt die zweite Verbindungsleitung 125 durch die zweite Verbindungsöffnung 522 in dem Gehäuseboden 520, durch den Verbindungsauschnitt 220 des Sensormoduls 200 und durch die siebte Verbindungsöffnung 527 in dem Gehäusedeckel 510.

Beispielsweise kann, wie in Fig. 15 dargestellt, an der Unterseite des Leistungsmoduls 300 ein zweites Koppelelement 127 der zweiten Verbindungsleitung 125 angeordnet sein. Das zweite Koppelelement 127 der zweiten Verbindungsleitung 125 kann auf der Unterseite der zweiten Moduleinheit 322 des Leistungsmoduls 300 angeordnet sein. Wie aus den Fig. 5 und 6 ersichtlich ist, ist das zweite Koppelelement 127 derart angeordnet, dass das zweite Koppelelement 127 der zweiten Verbindungsleitung 125 durch die siebte Verbindungsöffnung 527 in dem Gehäusedeckel 510, durch den Verbindungsausschnitt 220 in dem Sensormodul 200 und durch die zweite Verbindungsöffnung 522 in dem Gehäuseboden 520 das an der Oberseite des Anschlussmoduls 100 angeordnete erste Koppelelement 126 der zweiten Verbindungsleitung 125 elektrisch leitend kontaktiert. Ist die zweite Verbindungsleitung 125 als eine Steckverbindung ausgebildet, kann das zweite Koppelelement 127 der zweiten Verbindungsleitung 125 als ein Stecker oder als eine Buchse ausgebildet sein.

Wie die erste Verbindungsleitung 120, kann bei alternativen, nicht dargestellten Ausführungsformen des Statormoduls 2 die zweite Verbindungsleitung 125 auch als eine Kabelverbindung ausgebildet sein. Eine derartige Kabelverbindung kann ein mehradriges Kabel, insbesondere ein mehradriges Flachbandkabel, umfassen. Das Kabel kann an beiden Enden jeweils ein Verbindungselement, etwa einen Stecker oder eine Buchse umfassen, die das erste und zweite Koppelelement 126, 127 der zweiten Verbindungsleitung 125 elektrisch leitend kontaktieren. Alternativ kann das Statormodul 2 entweder ohne das erste Koppelelement 126 der zweiten Verbindungsleitung 125 oder ohne das zweite Koppelelement 127 der zweiten Verbindungsleitung 125 ausgeführt sein und das Kabel der zweiten Verbindungsleitung 125 kann entweder an dem Anschlussmodul 100 oder an dem Leistungsmodul 300 befestigt sein, beispielsweise mittels einer Lötverbindung. Die zweite Verbindungsleitung 125 kann als eine geschirmte Leitung ausgebildet sein, insbesondere kann die zweite Verbindungsleitung 125 geschirmte Steckverbinder und/oder Kabel umfassen.

Das Leistungsmodul 300 ist mit dem Sensormodul 200 über die dritte Verbindungsleitung 230 elektrisch leitend verbunden. Die dritte Verbindungsleitung 230 führt von dem Leistungsmodul 300 durch die Oberseite 551 des Modulgehäuses 500 auf das in dem Modulgehäuse 500 angeordnete Sensormodul 200. Insbesondere führt die Verbindungsleitung 230 durch den Gehäusedeckel 510, genauer durch die dritte, vierte, fünfte und sechste Verbindungsöffnung 523, 524, 525, 526 in dem Gehäusedeckel 510. Beispielsweise können, wie in Fig. 15 dargestellt, an der Unterseite des Leistungsmoduls 300 ein erstes Gegenelement 232, ein zweites Gegenelement 234, ein drittes Gegenelement 236 und ein viertes Gegenelement 238 der dritten Verbindungsleitung 230 angeordnet sein.

Wie aus den Fig. 5 und 6 ersichtlich ist, ist das erste Gegenelement 232 derart angeordnet, dass es durch die dritte Verbindungsöffnung 523 in dem Gehäusedeckel 510 das an der Oberseite des Sensormoduls 200 angeordnete erste Koppelelement 231 der dritten Verbindungsleitung 230 elektrisch leitend kontaktiert. Das zweite Gegenelement 234 ist derart angeordnet, dass es durch die vierte Verbindungsöffnung 524 in dem Gehäusedeckel 510 das an der Oberseite des Sensormoduls 200 angeordnete zweite Koppelelement 233 der dritten Verbindungsleitung 230 elektrisch leitend kontaktiert. Das dritte Gegenelement 236 ist derart angeordnet, dass es durch die fünfte Verbindungsöffnung 525 in dem Gehäusedeckel 510 das an der Oberseite des Sensormoduls 200 angeordnete dritte Koppelelement 235 der dritten Verbindungsleitung 230 elektrisch leitend kontaktiert. Das vierte Gegenelement 238 ist derart angeordnet, dass es durch die sechste Verbindungsöffnung 526 in dem Gehäusedeckel 510 das an der Oberseite des Sensormoduls 200 angeordnete vierte Koppelelement 237 der dritten Verbindungsleitung 230 elektrisch leitend kontaktiert. Ist die dritte Verbindungsleitung 230 als eine Steckverbindung ausgebildet, können die Gegenelemente 232, 234, 236, 238 als ein Stecker oder als eine Buchse ausgebildet sein.

Die Moduleinheiten 320, 322, 324, 326 sind jeweils separat und einzeln über elektrisch voneinander isolierte Teilleitungen der dritten Verbindungsleitung 230 mit dem Sensormodul 200 elektrisch leitend verbunden. Die Teilleitungen umfassen jeweils eines der Gegenelemente 232, 234, 236, 238 und das korrespondierende Koppelelement 231, 233, 235, 237 auf dem Sensormodul 200. Das erste Gegenelement 232 ist auf der ersten Moduleinheit 320, das zweite Gegenelement 234 auf der zweiten Moduleinheit 322, das dritte Gegenelement 236 auf der dritten Moduleinheit 324 und das vierte Gegenelement 238 auf der vierten Moduleinheit 326 angeordnet. Die dritte Verbindungsleitung 230 kontaktiert das Leistungsmodul 300 in der Mitte nahe seines Kreuzungspunktes. Hierzu sind die Gegenelemente 232, 234, 236, 238 in der Mitte des Leistungsmoduls 300 angeordnet. Die Gegenelemente 232, 234, 236, 238 sind in den dreieckigen Teilen der Moduleinheiten 320, 322, 324, 326 angeordnet.

Die Moduleinheiten 320, 322, 324, 326 können, bis auf das zweite Koppelelement 127 der zweiten Verbindungsleitung 125, jeweils identisch ausgebildet sein. Insbesondere können die Moduleinheiten 320, 322, 324, 326 jeweils identische Abmessungen aufweisen und/oder ein identisches Leiterbahnenlayout aufweisen und/oder identisch mit elektronischen Bauteilen bestückt sein. Außerdem können, bis auf das zweite Koppelelement 127 der zweiten Verbindungsleitung 125, alle übrigen Verbindungselemente, etwa die Gegenelemente 232, 234, 236, 238, jeweils an den gleichen Positionen an den Moduleinheiten 320, 322, 324, 326 angeordnet sein.

Bei alternativen, nicht dargestellten Ausführungsformen der Erfindung kann die dritte Verbindungsleitung 230, deren Steckverbinder oder deren Koppelelemente 231, 233, 235, 237 auch in einem äußeren Bereich, insbesondere in dem Randbereich 242, des Sensormoduls 200 angeordnet sein. In diesem Fall sind auch die dritte Verbindungsöffnung 523, die vierte Verbindungsöffnung 524, die fünfte Verbindungsöffnung 525 und die sechste Verbindungsöffnung 526 in einem äußeren Bereich, insbesondere in dem Randbereich 542, des Gehäusedeckels 510 angeordnet. Auf dem Leistungsmodul 300 ist die dritte Verbindungsleitung 230, deren Steckverbinder und/oder deren Gegenelemente 232, 234, 236, 238 in einem äußeren Bereich des Leistungsmoduls 300 angeordnet. Insbesondere können die Steckverbinder oder die Gegenelemente 232, 234, 236, 238 in dem rechteckigen Bereich der Moduleinheiten 320, 322, 324, 326 des Leistungsmoduls 300 angeordnet sein. Beispielsweise können die Steckverbinder oder die Gegenelemente 232, 234, 236, 238 an dem gemeinsamen Mittelpunkt der Moduleinheiten 320, 322, 324, 326 gegenüberliegenden äußeren Enden der Moduleinheiten 320, 322, 324, 326 angeordnet sein.

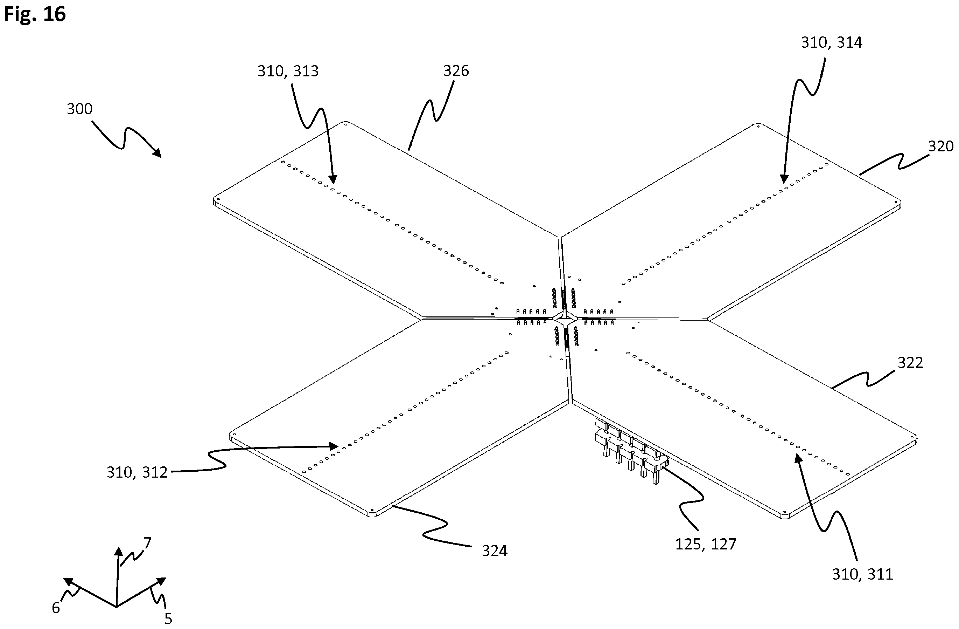

**Fig. 16** zeigt eine schematische perspektivische Darstellung der Oberseite des Leistungsmoduls 300. An der Oberseite ist das Leistungsmodul 300 im Wesentlichen eben ausgebildet. An der Oberseite können in Fig. 16 nicht dargestellte elektronische Bauteile oder Komponenten an dem Leistungsmodul 300 angeordnet sein.

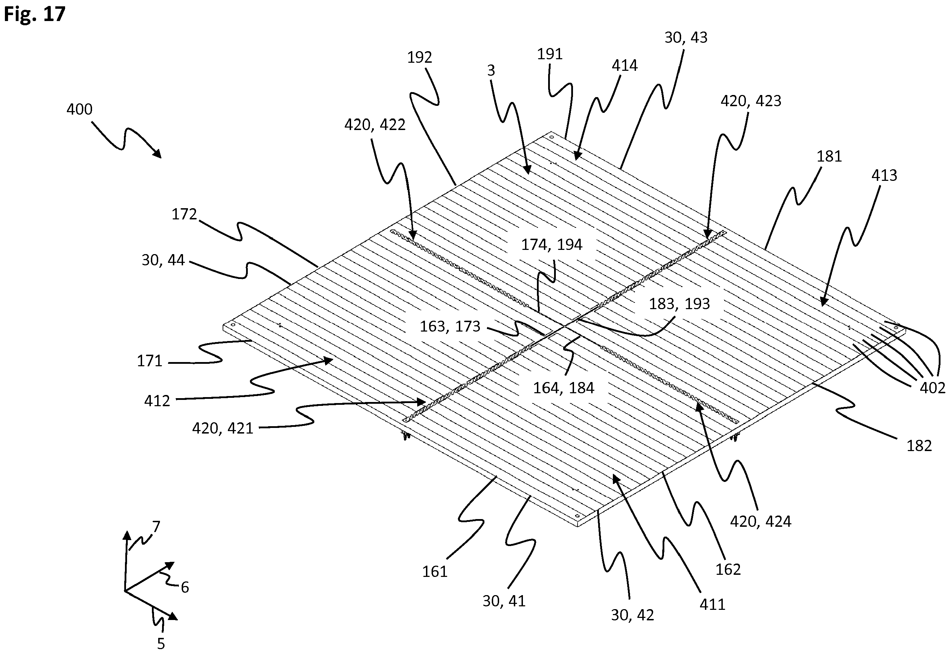

**Fig. 17** zeigt eine schematische perspektivische Darstellung der Oberseite der Statoreinheit 400. Die Statoreinheit 400 ist als eine quaderförmige Platte ausgebildet, deren Ausdehnung in der vertikalen Richtung 7 geringer ist als in der ersten und zweiten Richtung 5, 6. Die Statoreinheit 400 weist in der durch die erste und zweite Richtung 5, 6 aufgespannten Ebene eine im Wesentlichen rechteckige, insbesondere quadratische, Form auf. Die Statoreinheit 400 kann beispielsweise als eine, insbesondere mehrlagige, Leiterplatte ausgebildet sein und ein isolierendes Material aufweisen. Die ebene Statorfläche 3 bildet die Oberfläche der Statoreinheit 400.

Die Spulenleiter 402 der Statoreinheit 400 können als elektrisch leitende, insbesondere metallische, Leiterbahnen der Leiterplatte ausgebildet sein. Die Spulenleiter 402 können jeweils eine Dicke größer 10 µm, insbesondere größer 50 µm, insbesondere größer 100 µm aufweisen. Zusätzlich können die Spulenleiter 402 eine Dicke kleiner 1mm, insbesondere kleiner 500 µm aufweisen. Insbesondere können die Spulenleiter 402 eine Dicke von 250 µm oder 210 µm aufweisen.

Die Statoreinheit 400 umfasst einen ersten Statorsektor 411, einen zweiten Statorsektor 412, einen dritten Statorsektor 413 und einen vierten Statorsektor 414. Soweit im Folgenden keine Unterschiede beschrieben werden, sind die Statorsektoren 411, 412, 413, 414 jeweils identisch aufgebaut. Die Statorsektoren 411, 412, 413, 414 umfassen ihrerseits jeweils einen Teil der länglichen Spulenleiter 402. Jeder der Spulenleiter 402 ist vollständig in einem der Statorsektoren 411, 412, 413, 414 angeordnet.

Die Spulenleiter 402 der einzelnen Statorsektoren 411, 412, 413, 414 sind elektrisch isoliert von den Spulenleitern 402 der übrigen Statorsektoren 411, 412, 413, 414 ausgebildet. Insbesondere sind die Statorsektoren 411, 412, 413, 414 unabhängig voneinander bestrombar ausgebildet. Die Statorsektoren 411, 412, 413, 414 sind unabhängig voneinander kontaktierbar ausgebildet. Insbesondere besteht keine elektrisch leitende Verbindung zwischen den Statorsektoren 411, 412, 413, 414 oder den Spulenleitern 402 unterschiedlicher Statorsektoren 411, 412, 413, 414 auf der Statoreinheit 400.

Die Statorsektoren 411, 412, 413, 414 sind rechteckig ausgebildet. Insbesondere können die Statorsektoren 411, 412, 413, 414 quadratisch ausgebildet sein, so dass eine Ausdehnung der Statorsektoren 411, 412, 413, 414 in der ersten Richtung 5 einer Ausdehnung der Statorsektoren 411, 412, 413, 414 in der zweiten Richtung 6 entspricht. Die Statorsektoren 411, 412, 413, 414 weisen jeweils alle die gleichen Abmessungen in der ersten und zweiten Richtung 5, 6 auf.

Die Statorsektoren 411, 412, 413, 414 sind in der ersten Richtung 5 in zwei nebeneinanderliegenden Reihen und in der zweiten Richtung 6 ebenfalls in zwei nebeneinanderliegenden Reihen aneinander anschließend angeordnet. Die Statorsektoren 411, 412, 413, 414 benachbarter Reihen sind jeweils aneinander anschließend angeordnet. Entlang der ersten Richtung 5 umfasst die Statoreinheit 400 eine Reihe mit dem ersten Statorsektor 411 und dem zweiten Statorsektor 412 und eine weitere Reihe mit dem dritten Statorsektor 413 und dem vierten Statorsektor 414. Entlang der zweiten Richtung 6 umfasst die Statoreinheit 400 eine Reihe mit dem ersten Statorsektor 411 und dem dritten Statorsektor 413 und eine weitere Reihe mit dem zweiten Statorsektor 412 und dem vierten Statorsektor 414.

Die Statorsektoren 411, 412, 413, 414 weisen in der ersten Richtung 5 und in der zweiten Richtung 6 jeweils eine Ausdehnung auf, die halb so groß ist wie eine Ausdehnung der Statorfläche 3, der Statoreinheit 400 und des Statormoduls 2 in der entsprechenden Richtung. Die Grenzen der Statorsektoren 411, 412, 413, 414 verlaufen damit in der ersten und in der zweiten Richtung 5, 6 jeweils in der Mitte der Statorfläche 3 und der Statoreinheit 400 und schneiden sich im Zentrum der Statorfläche 3 und der Statoreinheit 400. Die Statorsektoren 411, 412, 413, 414 umfassen jeweils ein Viertel der Fläche, d.h. einen Quadranten, der Statorfläche 3 und der Statoreinheit 400.

Die Statorsektoren 411, 412, 413, 414 weisen jeweils zwei Außenkanten auf, wobei jeweils eine der Außenkanten entlang der ersten Richtung 5 und die andere der Außenkanten entlang der zweiten Richtung 6 orientiert sind. Die Außenkanten schließen jeweils bündig mit den Außenkanten 30 der Statorfläche 3 ab.

Insbesondere sind eine entlang der ersten Richtung 5 orientierte erste Außenkante 161 des ersten Statorsektors 411 und eine entlang der ersten Richtung 5 orientierte erste Außenkante 171 des zweiten Statorsektors 412 abschließend mit einer entlang der ersten Richtung 5 orientierten ersten Außenkante 41 der Statorfläche 3 angeordnet. Eine entlang der zweiten Richtung 6 orientierte zweite Außenkante 162 des ersten Statorsektors 411 und eine entlang der zweiten Richtung 6 orientierte zweite Außenkante 182 des dritten Statorsektors 413 sind abschließend mit einer entlang der zweiten Richtung 6 orientierten zweiten Außenkante 42 der Statorfläche 3 angeordnet. Eine entlang der ersten Richtung 5 orientierte erste Außenkante 181 des dritten Statorsektors 413 und eine entlang der ersten Richtung 5 orientierte erste Außenkante 191 des vierten Statorsektors 414 sind abschließend mit einer entlang der ersten Richtung 5 orientierten und der ersten Außenkante 41 gegenüberliegenden dritten Außenkante 43 der Statorfläche 3 angeordnet. Eine entlang der zweiten Richtung 6 orientierte zweite Außenkante 172 des zweiten Statorsektors 412 und eine entlang der zweiten Richtung 6 orientierte zweite Außenkante 192 des vierten Statorsektors 414 sind abschließend mit einer entlang der zweiten Richtung 6 orientierten und der zweiten Außenkante 42 gegenüberliegenden vierten Außenkante 44 der Statorfläche 3 angeordnet.

Im Inneren der Statoreinheit 400 sind die Statorsektoren 411, 412, 413, 414 aneinander anschließend angeordnet. Die Statorsektoren 411, 412, 413, 414 weisen jeweils zwei Innenkanten auf, wobei jeweils eine der Innenkanten entlang der ersten Richtung 5 und eine der Innenkanten entlang der zweiten Richtung 6 orientiert ist.

Eine entlang der zweiten Richtung 6 orientierte erste Innenkante 163 des ersten Statorsektors 411 ist an einer entlang der zweiten Richtung 6 orientierten ersten Innenkante 173 des zweiten Statorsektors 412 angeordnet. Eine entlang der ersten Richtung 5 orientierte zweite Innenkante 174 des zweiten Statorsektors 412 ist an einer entlang der ersten Richtung 5 orientierten zweiten Innenkante 194 des vierten Statorsektors 414 angeordnet. Eine entlang der zweiten Richtung 6 orientierte erste Innenkante 183 des dritten Statorsektors 413 ist an einer entlang der zweiten Richtung 6 orientierten ersten Innenkante 193 des vierten Statorsektors 414 angeordnet. Eine entlang der ersten Richtung 5 orientierte zweite Innenkante 184 des dritten Statorsektors 413 ist an einer entlang der ersten Richtung 5 orientierten zweiten Innenkante 164 des ersten Statorsektors 411 angeordnet.

Bei dem Statormodul 2 liegen die ersten Innenkanten 163, 173, 183, 193 der Statorsektoren 411, 412, 413, 414 jeweils auf einer entlang der zweiten Richtung 6 orientierten ersten Linie und die zweiten Innenkanten 164, 174, 184, 194 liegen auf einer entlang der ersten Richtung 5 orientierten zweiten Linie. Die ersten Innenkanten 163, 173 des ersten und zweiten Statorsektors 411, 412 sind fluchtend mit den ersten Innenkanten 183, 193 des dritten und vierten Statorsektors 413, 414 auf der ersten Linie angeordnet. Die zweiten Innenkanten 164, 184 des ersten und dritten Statorsektors 411, 413 sind fluchtend mit den zweiten Innenkanten 174, 194 des zweiten und vierten Statorsektors 412, 414 auf der zweiten Linie angeordnet.

Die erste Linie verläuft senkrecht zu der zweiten Linie. Die erste Linie ist in der ersten Richtung 5 in der Mitte des Statormoduls 2 und der Statoreinheit 400 zwischen dem ersten Statorsektor 411 und dem zweiten Statorsektor 412, sowie zwischen dem dritten Statorsektor 413 und dem vierten Statorsektor 414 angeordnet. Insbesondere ist die erste Linie mittig zwischen der zweiten und der vierten Außenkante 42, 44 der Statorfläche 3 und des Statormoduls 2 angeordnet. Die erste Linie bildet eine entlang der zweiten Richtung 6 orientierte erste Mittellinie der Statorfläche 3 und des Statormoduls 2. Die zweite Linie ist in der zweiten Richtung 6 in der Mitte des Statormoduls 2 und der Statoreinheit 400 zwischen dem ersten Statorsektor 411 und dem dritten Statorsektor 413, sowie zwischen dem zweiten Statorsektor 412 und dem vierten Statorsektor 414 angeordnet. Insbesondere ist die zweite Linie mittig zwischen der ersten und der dritten Außenkante 41, 43 der Statorfläche 3 und des Statormoduls 2 angeordnet. Die zweite Linie bildet eine entlang der ersten Richtung 5 orientierte zweite Mittellinie der Statorfläche 3 und des Statormoduls 2.

Auf der ersten Linie ist zwischen dem ersten Statorsektor 411 und dem zweiten Statorsektor 412 eine erste Kontaktstruktur 421 und zwischen dem dritten Statorsektor 413 und dem vierten Statorsektor 414 eine dritte Kontaktstruktur 423 angeordnet. Auf der zweiten Linie ist zwischen dem zweiten Statorsektor 412 und dem vierten Statorsektor 414 eine zweite Kontaktstruktur 422 und zwischen dem ersten Statorsektor 411 und dem dritten Statorsektor 413 eine vierte Kontaktstruktur 424 angeordnet. Die erste und die dritte Kontaktstruktur 421, 423 weisen jeweils auf der zweiten Linie nebeneinander angeordnete Anschlusspunkte auf. Die zweite und die vierte Kontaktstruktur 422, 424 weisen jeweils auf der ersten Linie nebeneinander angeordnete Anschlusspunkte auf. Die Anschlusspunkte können jeweils als Kontaktlöcher bzw. Vias (vertical interconnect access) in der Statoreinheit 400 ausgebildet sein und leitfähig beschichtete Durchgangsöffnungen durch die Statoreinheit 400 umfassen. Die erste, zweite, dritte und vierte Kontaktstruktur 421, 422, 423, 424 bilden zusammen eine kreuzförmige Kontaktanordnung 420 aus, die in der ersten und zweiten Richtung 5, 6 entlang der Mittellinien der Statoreinheit 400 ausgerichtet ist.

Innerhalb der Statorsektoren 411, 412, 413, 414 sind die Spulenleiter 402 in mehreren übereinanderliegenden Statorlagen oder Statorebenen angeordnet, wobei jede der Statorlagen lediglich Spulenleiter 402 aufweist, die entweder im Wesentlichen entlang der ersten Richtung 5 oder im Wesentlichen entlang der zweiten Richtung 6 ausgedehnt sind. Von der Ausdehnung der Spulenleiter 402 abgesehen und soweit im Folgenden keine Unterschiede beschrieben werden, sind die Statorsektoren 411, 412, 413, 414 auf den unterschiedlichen Statorlagen identisch ausgebildet. Bei der in Fig. 17 dargestellten Statoreinheit 400 des Statormoduls 2 umfasst die Statorlage an der Statorfläche 3 lediglich Spulenleiter 402, welche im Wesentlichen entlang der ersten Richtung 5 ausgedehnt sind.

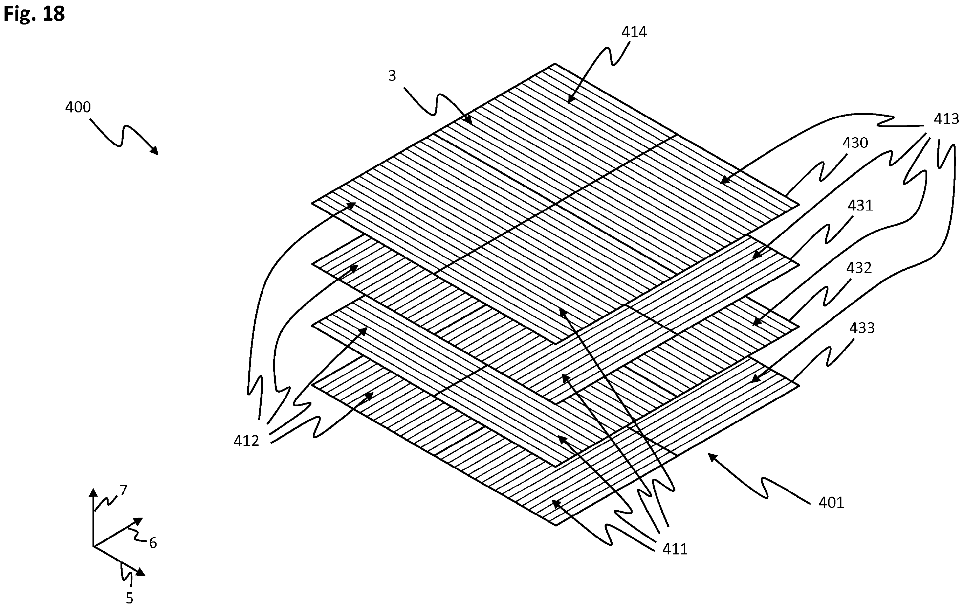

Die in Fig. 17 sichtbare Statorlage an der Statorfläche 3 bildet eine erste Statorlage der Statoreinheit 400. In der vertikalen Richtung 7 unterhalb der ersten Statorlage umfasst die Statoreinheit 400 mindestens noch eine zweite Statorlage. **Fig. 18** zeigt eine schematische perspektivische Darstellung einer Explosionsansicht der Statoreinheit 400 mit den einzelnen Statorlagen. In Fig. 18 sind die zwischen den Statorsektoren 411, 412, 413, 414 angeordneten Kontaktstrukturen 421, 422, 423, 424 nicht dargestellt.

Die Statoreinheit 400 umfasst in der vertikalen Richtung 7 unter der an der Statorfläche 3 angeordneten ersten Statorlage 430 eine zweite Statorlage 431, unter der zweiten Statorlage 431 eine dritte Statorlage 432 und unter der dritten Statorlage 432 eine vierte Statorlage 433. Soweit im Folgenden keine Unterscheide beschrieben werden, sind die zweite, dritte und vierte Statorlage 431, 432, 433 ausgebildet wie die in Fig. 17 dargestellte erste Statorlage 430 an der Statorfläche 3 der Statoreinheit 400. Die übereinander angeordneten Statorlagen 430, 431, 432, 433 sind jeweils elektrisch isoliert voneinander ausgebildet. Beispielsweise können die Statorlagen 430, 431, 432, 433 jeweils als voneinander isolierte Leiterbahnlagen einer mehrlagigen Leiterplatte ausgebildet sein.

In der zweiten Statorlage 431 und der vierten Statorlage 433 sind die Spulenleiter 402, anders als bei der ersten und dritten Statorlage 430, 432, im Wesentlichen entlang der zweiten Richtung 6 ausgedehnt. Die Statorsektoren 411, 412, 413, 414 weisen in allen Statorlagen 430, 431, 432, 433 jeweils die gleichen Abmessungen auf. Insbesondere weisen übereinanderliegende Statorsektoren 411, 412, 413, 414 in allen Statorlagen 430, 431, 432, 433 in der ersten Richtung 5 und in der zweiten Richtung 6 jeweils gleiche Abmessungen auf. Die Spulenleiter 402 der einzelnen Statorsektoren 411, 412, 413, 414 sind in der zweiten, dritten und vierten Statorlage 431, 432, 433, wie in der ersten Statorlage 430, jeweils elektrisch isoliert von den Spulenleitern 402 der übrigen Statorsektoren 411, 412, 413, 414 ausgebildet.

Alternative, nicht dargestellte Ausführungsformen der Statoreinheit 400 können unter den Statorlagen 430, 431, 432, 433 in der vertikalen Richtung 7 untereinander angeordnete weitere Statorlagen umfassen. Dabei können jeweils abwechselnd Statorlagen mit im Wesentlichen entlang der ersten Richtung 5 ausgedehnten Spulenleitern 402 und Statorlagen mit im Wesentlichen entlang der zweiten Richtung 6 ausgedehnten Spulenleitern 402 übereinander angeordnet sein.

Die in Fig. 17 dargestellten Anschlusspunkte der Kontaktstrukturen 421, 422, 423, 424 sind zur elektrisch leitenden Kontaktierung der Spulenleiter 402 ausgebildet. Die zwischen dem ersten Statorsektor 411 und dem zweiten Statorsektor 412 angeordnete erste Kontaktstruktur 421 umfasst alle Anschlusspunkte von Spulenleitern 402, die in dem ersten und zweiten Statorsektor 411, 412 in den Statorlagen 430, 432 mit im Wesentlichen entlang der ersten Richtung 5 orientierten Spulenleitern 402 angeordnet sind. Insbesondere umfasst die erste Kontaktstruktur 421 alle Anschlusspunkte der Spulenleiter 402, die in dem ersten und zweiten Statorsektor 411, 412 in der ersten und dritten Statorlage 430, 432 angeordnet sind.

Die zwischen dem dritten Statorsektor 413 und dem vierten Statorsektor 414 angeordnete dritte Kontaktstruktur 423 umfasst alle Anschlusspunkte von Spulenleitern 402, die in dem dritten und vierten Statorsektor 413, 414 in den Statorlagen 430, 432 mit im Wesentlichen entlang der ersten Richtung 5 orientierten Spulenleitern 402 angeordnet sind. Insbesondere umfasst die dritte Kontaktstruktur 423 alle Anschlusspunkte der Spulenleiter 402, die in dem dritten und vierten Statorsektor 413, 414 in der ersten und dritten Statorlage 430, 432 angeordnet sind.

Die zwischen dem zweiten Statorsektor 412 und dem vierten Statorsektor 414 angeordnete zweite Kontaktstruktur 422 umfasst alle Anschlusspunkte von Spulenleitern 402, die in dem zweiten und vierten Statorsektor 412, 414 in den Statorlagen 431, 433 mit im Wesentlichen entlang der zweiten Richtung 6 orientierten Spulenleitern 402 angeordnet sind. Insbesondere umfasst die zweite Kontaktstruktur 422 alle Anschlusspunkte der Spulenleiter 402, die in dem zweiten und vierten Statorsektor 412, 414 in der zweiten und vierten Statorlage 431, 433 angeordnet sind.

Die zwischen dem ersten Statorsektor 411 und dem dritten Statorsektor 413 angeordnete vierte Kontaktstruktur 424 umfasst alle Anschlusspunkte von Spulenleitern 402, die in dem ersten und dritten Statorsektor 411, 413 in den Statorlagen 431, 433 mit im Wesentlichen entlang der zweiten Richtung 6 orientierten Spulenleitern 402 angeordnet sind. Insbesondere umfasst die vierte Kontaktstruktur 424 alle Anschlusspunkte der Spulenleiter 402, die in dem ersten und dritten Statorsektor 411, 413 in der zweiten und vierten Statorlage 431, 433 angeordnet sind.

Die Anschlusspunkte aller Spulenleiter 402, die entlang der ersten Richtung 5 ausgedehnt sind, sind auf der entlang der zweiten Richtung 6 orientierten ersten Linie angeordnet. Die Anschlusspunkte aller Spulenleiter 402, die entlang der zweiten Richtung 6 orientiert sind, sind auf der entlang der ersten Richtung 5 orientierten zweiten Linie angeordnet.

Die Spulenleiter 402 in den einzelnen Statorsektoren 411, 412, 413, 414 können jeweils zu Mehrphasensystemen mit einem gemeinsamen Sternpunkt zusammengeschaltet sein. Der Sternpunkt kann auf der Statoreinheit 400 ausgebildet sein. Insbesondere können die Spulenleiter 402 zu Dreiphasensystemen mit einem gemeinsamen Sternpunkt zusammengeschaltet sein. Die Dreiphasensysteme können jeweils sechs benachbarte Spulenleiter 402 umfassen. Die Anzahl benachbarter Spulenleiter in einem der Dreiphasensysteme kann auch jeweils drei, zwölf oder ein anderes Vielfaches von drei betragen.

Die Mehrphasensysteme können auf der Statoreinheit 400 derart kontaktierbar sein, dass jedes der Mehrphasensysteme unabhängig von den übrigen Mehrphasensystemen mit einem Antriebsstrom beaufschlagbar ist. Alternativ können auch jeweils zwei oder mehr der Mehrphasensysteme auf der Statoreinheit 400 derart miteinander verbunden sein, dass die verbundenen Mehrphasensysteme jeweils zusammen mit einem gemeinsamen Antriebsstrom beaufschlagt werden. Beispielsweise können die verbundenen Mehrphasensysteme auf der Statoreinheit 400 seriell oder parallel geschaltet sein.

Die Statorsektoren 411, 412, 413, 414 können, wie in den Figuren 17 und 18 dargestellt, in jeder Statorlage 430, 431, 432, 433 jeweils achtzehn Spulenleiter 402 umfassen. Jeweils sechs benachbarte Spulenleiter 402 können zu einem Dreiphasensystem verschaltet sein und die Statorsektoren 411, 412, 413, 414 können jeweils drei in der ersten Richtung 5 nebeneinanderliegende Dreiphasensysteme und jeweils drei in der zweiten Richtung 6 nebeneinanderliegende Dreiphasensysteme umfassen. Dabei können Spulenleiter 402, die im Wesentlichen in der gleichen Richtung 5, 6 ausgedehnt sind und in den Statorlagen 430, 431, 432, 433 übereinander liegen, in Serie zu einem gemeinsamen Dreiphasensystem verschaltet sein. Die Spulenleiter 402 können dabei derart verschaltet sein, dass in der vertikalen Richtung 7 übereinanderliegende Spulenleiter 402 jeweils mit dem gleichen Antriebsstrom beaufschlagt werden. Die Dreiphasensysteme weisen damit drei Phasen auf, die aus in den Statorlagen 430, 431, 432, 433 übereinanderliegenden Spulenleitern 402 zusammengeschaltet sind.

Beispielsweise können in den einzelnen Statorlagen 430, 431, 432, 433 jeweils alle übereinanderliegenden und parallel ausgerichteten Spulenleiter 402 in Serie geschaltet sein. Insbesondere können die Spulenleiter 402 von in der ersten Statorlage 430 und in der dritten Statorlage 432 übereinander liegenden Dreiphasensystemen, sowie die Spulenleiter 402 von in der zweiten Statorlage 431 und in der vierten Statorlage 433 übereinander liegenden Dreiphasensystemen jeweils seriell zu einem gemeinsamen Dreiphasensystem verschaltet sein. Dabei können jeweils alle in der vertikalen Richtung 7 übereinanderliegenden und parallel orientierten Spulenleiter 402 der ersten und dritten Statorlage 430, 432 und der zweiten und vierten Statorlage 431, 433 in Serie geschaltet sein.

Bei einer Verschaltung der Spulenleiter 402 zu Dreiphasensystemen mit gemeinsamen Sternpunkt können die drei freien Anschlüsse der einzelnen Phasen jeweils mit einem der Anschlusspunkte elektrisch leitend verbunden sein. Umfassen die Statorsektoren 411, 412, 413, 414 jeweils drei Dreiphasensysteme in der ersten Richtung 5 und drei Dreiphasensysteme in der zweiten Richtung 6 mit jeweils sechs Spulenleitern 402, so weisen die Statorsektoren 411, 412, 413, 414 jeweils achtzehn Anschlüsse auf, die mit achtzehn Anschlusspunkten der Kontaktanordnung 420 verbunden sind. Die erste, zweite, dritte und vierte Kontaktstruktur 421, 422, 423, 424 umfassen dann jeweils achtzehn Anschlusspunkte.

Eine elektrisch leitende Verbindung zwischen den Anschlusspunkten und den Spulenleitern 402 der Phasen der Mehrphasensysteme kann in einer beliebigen Statorlage 430, 431, 432, 433 der Statoreinheit 400 erfolgen. Insbesondere kann eine elektrisch leitende Verbindung zwischen einem der Anschlusspunkte und einem der Spulenleiter 402 in den Statorlagen 431, 432 bestehen, die in der vertikalen Richtung 7 im Inneren der Statoreinheit 400 angeordnet sind. Die im Inneren der Statoreinheit 400 angeordneten Statorlagen 431, 432 bilden Innenlagen der Statoreinheit 400, während die an der Statorfläche 3 und an einer der Statorfläche 3 gegenüberliegenden Bodenfläche 401 der Statoreinheit 400 angeordneten Statorlagen 430, 433 Außenlagen der Statoreinheit 400 bilden. Die Innenlagen sind damit zwischen den Außenlagen angeordnet. Bei der in Fig. 18 dargestellten Statoreinheit 400 bilden die erste Statorlage 430 und die vierte Statorlage 433 jeweils Außenlagen und die zweite Statorlage 431 und die dritte Statorlage 432 jeweils Innenlagen der Statoreinheit 400.

Anstatt die Spulenleiter 402 zu Mehrphasensystemen zu verschalten, können bei alternativen, nicht dargestellten Ausführungsformen der Statoreinheit 400 die Spulenleiter 402 oder übereinander liegende und jeweils seriell geschaltete Spulenleiter 402 mehrerer Statorlagen 430, 431, 432, 433 auch separat an jeweils eigene Anschlusspunkte angeschlossen sein. Insbesondere kann jeder der Spulenleiter 402 einzeln und unabhängig von allen anderen Spulenleitern 402 mit einem der Anschlusspunkte verbunden und über den jeweiligen Anschlusspunkt mit einem elektrischen Antriebsstrom beaufschlagbar sein.

Die Statoreinheit 400 ist an den Außenkanten 30 der Statorfläche 3 frei von Anschlusspunkten oder Kontaktstrukturen. Insbesondere werden die Spulenleiter 402 der Statoreinheit 400 ausschließlich über die im Inneren, insbesondere auf den Mittellinien, der Statoreinheit 400 angeordnete erste, zweite, dritte und vierte Kontaktstruktur 421, 422, 423, 424 und deren Anschlusspunkte kontaktiert. Die Statoreinheit 400 ist dazu ausgebildet, dass die Spulenleiter 402 ausschließlich über die auf den Mittellinien der Statorfläche 3 angeordneten Anschlusspunkte mit einem Antriebsstrom beaufschlagt werden.

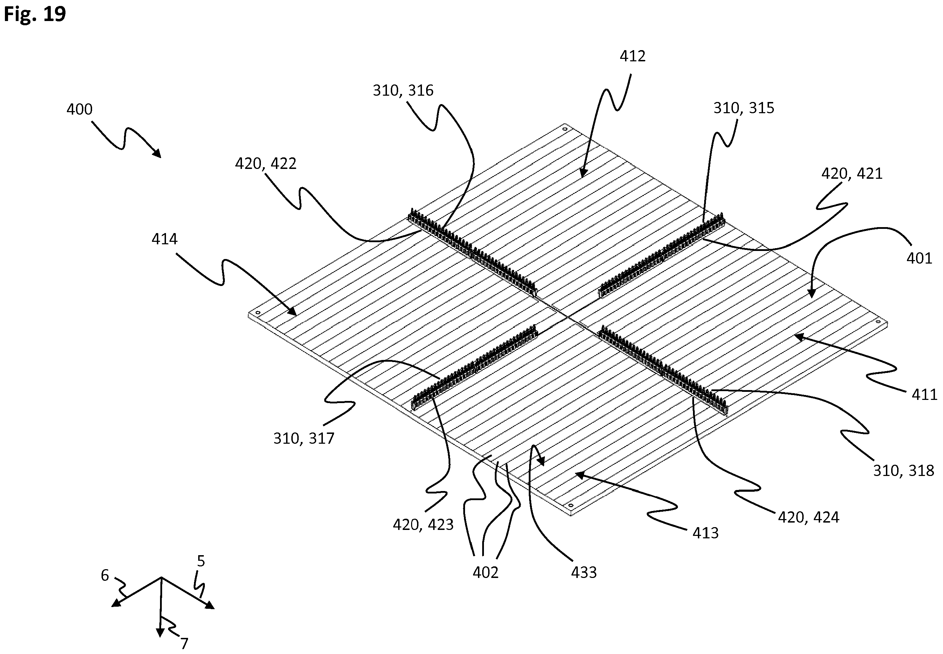

**Fig. 19** zeigt eine schematische perspektivische Darstellung der Unterseite der Statoreinheit 400. Die der Statorfläche 3 gegenüberliegende Bodenfläche 401 der Statoreinheit 400 ist eben ausgebildet. An der Bodenfläche 401 sind die Spulenleiter 402 der vierten Statorlage 433 angeordnet. Die Statoreinheit 400 kann an ihrer Unterseite frei von elektronischen Bauelementen oder Komponenten sein. Die kreuzförmige Kontaktanordnung 420 ist von der Unterseite der Statoreinheit 400 aus kontaktierbar. Beispielsweise können die Kontaktlöcher der Kontaktanordnung 420 an der Unterseite der Statoreinheit 400 freiliegen.

Die Statoreinheit 400 und das Leistungsmodul 300 sind über eine vierte Verbindungsleitung 310 elektrisch leitend miteinander verbunden. Die vierte Verbindungsleitung 310 führt von der Oberseite des Leistungsmoduls 300 auf die Unterseite und die Bodenfläche 401 der Statoreinheit 400.

Über die vierte Verbindungsleitung 310 ist die Kontaktanordnung 420 der Statoreinheit 400 mit einer in Fig. 16 dargestellten Anschlussanordnung 311, 312, 313, 314 des Leistungsmoduls 300 elektrisch leitend verbunden. Die Anschlussanordnung 311, 312, 313, 314 des Leistungsmoduls 300 kann, wie die Kontaktanordnung 420 der Statoreinheit 400 kreuzförmig ausgebildet sein. Die Anschlussanordnung 311, 312, 313, 314 des Leistungsmoduls 300 kann beispielsweise leitfähig beschichtete Durchgangsöffnungen bzw. Kontaktlöcher umfassen. Die Kontaktlöcher der Anschlussanordnung 311, 312, 313, 314 des Leistungsmoduls 300 können ausgebildet sein wie die Kontaktlöcher der Kontaktanordnung 420 der Statoreinheit 400. Die Kontaktlöcher der Anschlussanordnung 311, 312, 313, 314 des Leistungsmoduls 300 können direkt unter den Kontaktlöchern der Kontaktanordnung 420 der Statoreinheit 400 angeordnet und zu den Kontaktlöchern der Kontaktanordnung 420 der Statoreinheit 400 fluchtend ausgerichtet sein, so dass jedem Kontaktloch in der Statoreinheit 400 ein mit dem betreffenden Kontaktloch in der Statoreinheit 400 ausgerichtetes Kontaktloch in dem Statormodul 300 gegenüberliegt und umgekehrt.

Wie in Fig. 16 dargestellt ist, ist die kreuzförmige Anschlussanordnung 311, 312, 313, 314 des Leistungsmoduls 300 entlang der in der ersten Richtung 5 und der zweiten Richtung 6 verlaufenden Mittellinien des Leistungsmoduls 300 angeordnet. Insbesondere ist die kreuzförmige Anschlussanordnung 311, 312, 313, 314 des Leistungsmoduls 300 mittig auf den Balken des kreuzförmig ausgebildeten Leistungsmoduls 300 angeordnet. Insbesondere umfasst das Leistungsmodul 300 eine erste Anschlussanordnung 311, die in der ersten Richtung 5 mittig auf dem entlang der zweiten Richtung 6 ausgerichteten Balken des Leistungsmoduls 300 angeordnet ist, eine zweite Anschlussanordnung 312, die in der zweiten Richtung 6 mittig auf dem entlang der ersten Richtung 5 ausgerichteten Balken des Leistungsmoduls 300 angeordnet ist, eine dritte Anschlussanordnung 313, die in der ersten Richtung 5 mittig auf dem entlang der zweiten Richtung 6 ausgerichteten Balken des Leistungsmoduls 300 und der ersten Anschlussanordnung 311 gegenüberliegend angeordnet ist, und eine vierte Anschlussanordnung 314, die in der zweiten Richtung 6 mittig auf dem entlang der ersten Richtung 5 ausgerichteten Balken des Leistungsmoduls 300 und der zweiten Anschlussanordnung 312 gegenüberliegend angeordnet ist.

Die erste Anschlussanordnung 311 ist auf der zweiten Moduleinheit 322 des Leistungsmoduls 300, die zweite Anschlussanordnung 312 auf der dritten Moduleinheit 324, die dritte Anschlussanordnung 313 auf der vierten Moduleinheit 326 und die vierte Anschlussanordnung 314 auf der ersten Moduleinheit 320 angeordnet. Die Anschlussanordnungen 311, 312, 313, 314 sind jeweils mittig auf den Moduleinheiten 320, 322, 324, 326, insbesondere mittig auf den rechteckigen Teilen der Moduleinheiten 320, 322, 324, 326 angeordnet.

Die erste Anschlussanordnung 311 des Leistungsmoduls 300 ist unterhalb der ersten Kontaktstruktur 421 der Statoreinheit 400, die zweite Anschlussanordnung 312 des Leistungsmoduls 300 ist unterhalb der zweiten Kontaktstruktur 422 der Statoreinheit 400, die dritte Anschlussanordnung 313 des Leistungsmoduls 300 ist unterhalb der dritten Kontaktstruktur 423 der Statoreinheit 400 und die vierte Anschlussanordnung 314 des Leistungsmoduls 300 ist unterhalb der vierten Kontaktstruktur 424 der Statoreinheit 400 angeordnet. Die Anschlussanordnungen 311, 312, 313, 314 des Leistungsmoduls 300 sind parallel zu der jeweils darüber liegenden Kontaktstruktur 421, 422, 423, 424 der Statoreinheit 400 ausgerichtet.

Die vierte Verbindungsleitung 310 ist kreuzförmig ausgebildet. Die vierte Verbindungsleitung 310 umfasst ein in Fig. 19 dargestelltes Kontaktmittel 315, 316, 317, 318, über das die Anschlussanordnung 311, 312, 313, 314 des Leistungsmoduls 300 elektrisch leitend mit der Kontaktstruktur 421, 422, 423, 424 der Statoreinheit 400 verbunden ist. Das Kontaktmittel 315, 316, 317, 318 kann, wie in Fig. 19 dargestellt ist, ein erstes Kontaktmittel 315, welches die erste Anschlussanordnung 311 des Leistungsmoduls 300 mit der ersten Kontaktstruktur 421 der Statoreinheit 400 verbindet, ein zweites Kontaktmittel 316, welches die zweite Anschlussanordnung 312 des Leistungsmoduls 300 mit der zweiten Kontaktstruktur 422 der Statoreinheit 400 verbindet, ein drittes Kontaktmittel 317, welches die dritte Anschlussanordnung 313 des Leistungsmoduls 300 mit der dritten Kontaktstruktur 423 der Statoreinheit 400 verbindet, und ein viertes Kontaktmittel 318, welches die vierte Anschlussanordnung 314 des Leistungsmoduls 300 mit der vierten Kontaktstruktur 424 der Statoreinheit 400 verbindet, umfassen.

Die vierte Verbindungsleitung 310 kann eine oder mehrere kreuzförmig angeordnete Stiftleisten umfassen. Insbesondere können die Kontaktmittel 315, 316, 317, 318, wie es in den Figuren 6 und 19 dargestellt ist, jeweils eine Stiftleiste umfassen. Die Stiftleisten umfassen nebeneinander angeordnete elektrisch leitende Stifte, die als gerade, runde Zylinder ausgebildet sein können. Die Stifte sind in die Kontaktlöcher der Anschlussanordnung 311, 312, 313, 314 des Leistungsmoduls 300 und in die gegenüberliegenden Kontaktlöcher der Kontaktanordnung 420 der Statoreinheit 400 eingreifend angeordnet, um eine elektrisch leitende Verbindung zwischen den Kontaktstrukturen 421, 422, 423, 424 und den Anschlussanordnungen 311, 312, 313, 314 herzustellen. Die Stiftleisten umfassenden Kontaktmittel 315, 316, 317, 318 können insbesondere als Einpressverbinder oder Pressfitverbinder ausgebildet sein, welche in die Kontaktlöcher in der Statoreinheit 400 und/oder in die Kontaktlöcher in dem Leistungsmodul 300 eingepresst sind.

Insbesondere kann jede Moduleinheit 320, 322, 324, 326 des Leistungsmoduls 300 über jeweils genau eines der Kontaktmittel 315, 316, 317, 318 mit genau einer der Kontaktstrukturen 421, 422, 423, 424 der Statoreinheit 400 elektrisch leitend verbunden sein. Die zweite Moduleinheit 322 ist über das erste Kontaktmittel 315 mit der ersten Kontaktstruktur 421 der Statoreinheit 400, die dritte Moduleinheit 324 ist über das zweite Kontaktmittel 316 mit der zweiten Kontaktstruktur 422 der Statoreinheit 400, die vierte Moduleinheit 326 ist über das dritte Kontaktmittel 317 mit der dritten Kontaktstruktur 423 der Statoreinheit 400 und die erste Moduleinheit 320 ist über das vierte Kontaktmittel 318 mit der vierten Kontaktstruktur 424 der Statoreinheit 400 verbunden.

Die erste Moduleinheit 320 ist über die vierte Verbindungsleitung 310 mit den entlang der zweiten Richtung 6 orientierten Spulenleitern 402 des ersten und dritten Statorsektors 411, 413 elektrisch leitend verbunden. Die zweite Moduleinheit 322 ist über die vierte Verbindungsleitung 310 mit den entlang der ersten Richtung 5 orientierten Spulenleitern 402 des ersten und zweiten Statorsektors 411, 412 elektrisch leitend verbunden. Die dritte Moduleinheit 324 ist über die vierte Verbindungsleitung 310 mit den entlang der zweiten Richtung 6 orientierten Spulenleitern 402 des zweiten und vierten Statorsektors 412, 414 elektrisch leitend verbunden. Die vierte Moduleinheit 326 ist über die vierte Verbindungsleitung 310 mit den entlang der ersten Richtung 5 orientierten Spulenleitern 402 des dritten und vierten Statorsektors 413, 414 elektrisch leitend verbunden.

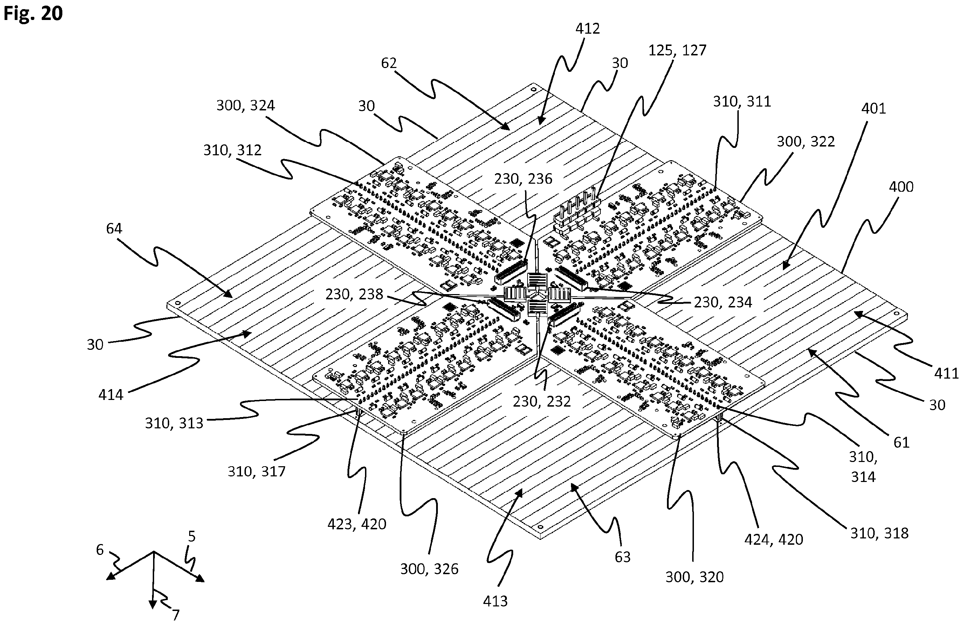

**Fig. 20** zeigt eine schematische perspektivische Darstellung der Unterseite des Leistungsmoduls 300 und der Statoreinheit 400, wobei das Leistungsmodul 300 mit der Statoreinheit 400 über die vierte Verbindungsleitung 310 verbunden ist. In Fig. 20 sind die an der Unterseite des Leistungsmoduls 300 angeordneten elektronischen Komponenten dargestellt.

Die vierte Verbindungsleitung 310 kann als eine mechanisch feste oder starre Verbindung zwischen dem Leistungsmodul 300 und der Statoreinheit 400 ausgebildet sein. Zugleich kann die vierte Verbindungsleitung 310 elastisch genug ausgebildet sein, um unterschiedliche thermische Ausdehnungskoeffizienten von Statoreinheit 400 und Leistungsmodul 300 ohne Verlust der elektrischen Kontaktierung auszugleichen. Eine mechanisch feste und starre Verbindung bei gleichzeitigem Ausgleich unterschiedlicher thermischer Ausdehnungskoeffizienten kann unter anderem erreicht werden, wenn die vierte Verbindungsleitung 310 Kontaktmittel 315, 316, 317, 318 aufweist, die Stiftleisten oder Einpressverbinder umfassen.

Die Statoreinheit 400 und das Leistungsmodul 300 können in der vertikalen Richtung 7 in einem festgelegten Abstand voneinander angeordnet sein und die vierte Verbindungsleitung 310 kann dazu ausgebildet sein, die Statoreinheit 400 und das Leistungsmodul 300 über den Abstand hinweg elektrisch leitend zu verbinden. Der Abstand kann derart bemessen sein, dass zwischen der Statoreinheit 400 und dem Leistungsmodul 300 ausreichend Bauraum für in Fig. 15 nicht dargestellte elektronische Komponenten auf der Oberseite des Leistungsmoduls 300 verfügbar ist. Einen derart bemessenen Abstand stellt insbesondere die vierte Verbindungsleitung 310 mit als Stiftleisten oder Einpressverbindern ausgebildeten Kontaktmitteln 315, 316, 317, 318 bereit. Der Abstand kann alternativ oder zusätzlich derart bemessen sein, dass eine elektromagnetische Kopplung zwischen den Spulenleitern 402 der Statoreinheit 400 und Leiterflächen oder Leiterbahnen auf dem Leistungsmodul 300 minimiert wird. Dies ist unter anderem bei der vierten Verbindungsleitung 310 mit als Stiftleisten oder Einpressverbindern ausgebildeten Kontaktmitteln 315, 316, 317, 318 der Fall. Der Abstand kann beispielsweise zwischen 2,5 mm und 10mm, insbesondere 5mm betragen.

Bei alternativen, nicht dargestellten Ausführungsformen des Statormoduls 2 kann das Kontaktmittel 315, 316, 317, 318 auch einen elektrischen Steckverbinder oder mehrere elektrische Steckverbinder umfassen, welche die Anschlussanordnung 311, 312, 313, 314 des Leistungsmoduls 300 und die Kontaktanordnung 420 der Statoreinheit 400 elektrisch leitend verbinden. Auch Kontaktmittel 315, 316, 317, 318 mit elektrischen Steckverbindern können dazu ausgebildet sein, die Statoreinheit 400 und das Leistungsmodul 300 über den für die Anordnung elektronischer Komponenten benötigten Abstand hinweg zu verbinden und/oder eine für den Ausgleich unterschiedlicher thermischer Ausdehnungskoeffizienten benötigte Elastizität aufzuweisen und/oder eine mechanisch feste Verbindung zwischen Statoreinheit 400 und Leistungsmodul 300 herzustellen. Bei weiteren alternativen Ausführungsformen des Statormoduls 2 kann das Kontaktmittel 315, 316, 317, 318 auch als eine Lötverbindung ausgebildet sein, wobei die Anschlussanordnung 311, 312, 313, 314 des Leistungsmoduls 300 und die Kontaktanordnung 420 der Statoreinheit 400 als Lötkontaktflächen ausgebildet und über die Lötverbindung elektrisch leitend verbunden sind.

Wie in **Fig. 20** dargestellt ist, überdeckt das kreuzförmige Leistungsmodul 300 die Bodenfläche 401 der Statoreinheit 400 im Bereich der kreuzförmigen Kontaktanordnung 420 der Statoreinheit 400. Insbesondere überdeckt das Leistungsmodul 300 die Kontaktanordnung 420 selbst. Über dem ersten Statorsektor 411 ist ein erster Freiraum 61 ausgebildet. Zusätzlich können, wie in Fig. 20 dargestellt ist, über dem zweiten Statorsektor 412 ein zweiter Freiraum 62, über dem dritten Statorsektor 413 ein dritter Freiraum 63 und über dem vierten Statorsektor 414 ein vierter Freiraum 64 ausgebildet sein. An den Freiräumen 61, 62, 63, 64 wird die Bodenfläche 401 der Statoreinheit 400 nicht durch das Leistungsmodul 300 überdeckt und die Bodenfläche 401 der Statoreinheit 400 ist an den Freiräumen 61, 62, 63, 64 von der Unterseite des Leistungsmoduls 300 und der Oberseite 551 des Modulgehäuses 500 aus zugänglich.

In den Freiräumen 61, 62, 63, 64 können mehr als 30% der Bodenfläche 401 der Statoreinheit 400 von der Unterseite des Leistungsmoduls 300 und der Oberseite 551 des Modulgehäuses 500 aus zugänglich sein. Insbesondere können mehr als 40%, mehr als 50%, insbesondere 52% bis 56%, insbesondere 54% der Bodenfläche 401 der Statoreinheit 400 in den Freiräumen 61, 62, 63, 64 zugänglich sein.

Die Freiräume 61, 62, 63, 64 sind über den Statorsektoren 411, 412, 413, 414 jeweils in Eckbereichen der rechteckigen Statoreinheit 400 angeordnet, wobei die Eckbereiche jeweils an die entlang der ersten Richtung 5 und an die entlang der zweiten Richtung 6 verlaufenden Außenkanten 30 der Statoreinheit 400 angrenzen. Die Freiräume 61, 62, 63, 64 sind rechteckig ausgebildet und erstrecken sich in der ersten und zweiten Richtung 5, 6 jeweils zwischen einer der Außenkanten 30 der Statoreinheit 400 und einer Außenkante des Leistungsmoduls 300.

Der erste Freiraum 61 grenzt an die erste Moduleinheit 320 und an die zweite Moduleinheit 322 an. Der erste Freiraum 61 befindet sich oder erstreckt sich in der ersten Richtung 5 zwischen der zweiten Moduleinheit 322 und einer entlang der zweiten Richtung 6 verlaufenden Außenkante 30 der Statorfläche 3 und in der zweiten Richtung 6 zwischen der ersten Moduleinheit 320 und einer entlang der ersten Richtung 5 verlaufenden Außenkante 30 der Statorfläche 3. Der zweite Freiraum 62 grenzt an die zweite Moduleinheit 322 und an die dritte Moduleinheit 324 an. Der zweite Freiraum 62 befindet sich oder erstreckt sich in der ersten Richtung 5 zwischen der zweiten Moduleinheit 322 und einer entlang der zweiten Richtung 6 verlaufenden Außenkante 30 der Statorfläche 3 und in der zweiten Richtung 6 zwischen der dritten Moduleinheit 324 und einer entlang der ersten Richtung 5 verlaufenden Außenkante 30 der Statorfläche 3.

Der dritte Freiraum 63 grenzt an die erste Moduleinheit 320 und an die vierte Moduleinheit 326 an. Der dritte Freiraum 63 befindet sich oder erstreckt sich in der ersten Richtung 5 zwischen der vierten Moduleinheit 326 und einer entlang der zweiten Richtung 6 verlaufenden Außenkante 30 der Statorfläche 3 und in der zweiten Richtung 6 zwischen der ersten Moduleinheit 320 und einer entlang der ersten Richtung 5 verlaufenden Außenkante 30 der Statorfläche 3. Der vierte Freiraum 64 grenzt an die dritte Moduleinheit 324 und an die vierte Moduleinheit 326 an. Der vierte Freiraum 64 befindet sich oder erstreckt sich in der ersten Richtung 5 zwischen der vierten Moduleinheit 326 und einer entlang der zweiten Richtung 6 verlaufenden Außenkante 30 der Statorfläche 3 und in der zweiten Richtung 6 zwischen der dritten Moduleinheit 324 und einer entlang der ersten Richtung 5 verlaufenden Außenkante 30 der Statorfläche 3.

Die Statoreinheit 400 und das an der Unterseite der Statoreinheit 400 angeordnete Leistungsmodul 300 sind an der Oberseite 551 des Modulgehäuses 500 oder des Gehäusedeckels 510 angeordnet. Die Statoreinheit 400 liegt an den Außenkanten 30 der Statorfläche 3 und an den Seitenflächen 32 der Statoreinheit 400 auf dem Gehäusedeckel 510 auf. Insbesondere liegt die Statoreinheit 400 an den Außenkanten 30 der Statorfläche 3 und an den Seitenflächen 32 der Statoreinheit 400 auf dem an der Oberseite 551 des Gehäusedeckels 510 ausgebildeten Rand 513 auf.

Das Leistungsmodul 300 ist in dem von dem Rand 513 umgebenen Bauraum 514 an der Oberseite 551 des Gehäusedeckels 510 angeordnet. Insbesondere ist das Leistungsmodul 300 in der ersten und zweiten Richtung 5, 6 zwischen den an der Oberseite 551 des Gehäusedeckels 510 ausgebildeten Wärmeleitstrukturen 530 angeordnet und eingebettet. Die auf dem Rand 513 aufliegende Statoreinheit 400 deckt den Bauraum 514 für das Leistungsmodul 300 auf dessen Oberseite ab.

Die Wärmeleitstrukturen 530 sind jeweils in den an der Unterseite der Statoreinheit 400 befindlichen Freiräumen 61, 62, 63, 64 angeordnet. Die Bodenfläche 401 der Statoreinheit 400 liegt in den Freiräumen 61, 62, 63, 64 jeweils an den an der Oberseite 551 des Modulgehäuses 500 angeordneten Wärmeleitstrukturen 530 an. Insbesondere liegt die Bodenfläche 410 der Statoreinheit 400 in den Freiräumen 61, 62, 63, 64 jeweils auf den ebenen Auflageflächen der Wärmeleitstrukturen 530 auf.

Zwischen dem Modulgehäuse 500 und der Statoreinheit 400 besteht eine wärmeleitende Verbindung. Die wärmeleitende Verbindung kann insbesondere dadurch hergestellt sein, dass die Bodenfläche 401 der Statoreinheit 400 an den Auflageflächen der Wärmeleitstrukturen 530 anliegt.

Die Statoreinheit 400 und das Leistungsmodul 300 können mit dem Modulgehäuse 500 über eine Klebeverbindung verbunden sein. Insbesondere können die Statoreinheit 400 und das Leistungsmodul 300 mit dem Gehäusedeckel 510 mittels einer Vergussmasse vergossen sein. Beispielsweise kann der Bauraum 514 mit dem in dem Bauraum 514 befindlichen Leistungsmodul 300 zwischen der Statoreinheit 400 und dem Gehäusedeckel 510 mit der Vergussmasse vergossen sein. Die Vergussmasse kann elektrisch isolierend ausgebildet sein. Über die Klebeverbindung und/oder die Vergussmasse können die Statoreinheit 400 und des Statorgehäuse 500 ebenfalls wärmeleitend verbunden sein. Die Vergussmasse kann eine Wärmeleitfähigkeit von mehr als 0,3W/m•K, insbesondere von mehr als 0,5W/m•K, insbesondere von 0,61W/m•K aufweisen.

Wie in Fig. 14 dargestellt ist, weist das Modulgehäuse 500, insbesondere der Gehäusedeckel 510, eine Einfüllöffnung 516 auf, über die die Vergussmasse in den Bauraum 514 einbringbar ist. Die Einfüllöffnung 516 kann an einer der Seitenflächen 34 des Modulgehäuses 500 angeordnet sein. Insbesondere kann die Einfüllöffnung 516 an der Seitenfläche 34 im Bereich des umlaufenden Rands 513 an der Oberseite 551 des Modulgehäuses 500 oder Gehäusedeckels 510 ausgebildet sein. Die Einfüllöffnung 516 stellt eine Verbindung zwischen dem Äußeren des Statormoduls 2 und dem an der Oberseite 551 des Modulgehäuses 500 ausgebildeten Bauraum 514 zwischen Statoreinheit 400 und Modulgehäuse 500 dar.

Ein Verfahren zum Einbringen der Vergussmasse in den Bauraum 514 kann ein Anordnen der Statoreinheit 400 und des mit der Statoreinheit 400 über die vierte Verbindungsleitung 310 verbundenen Leistungsmoduls 300 an der Oberseite 551 des Modulgehäuses 500 umfassen. Das Leistungsmodul 300 kann dabei in dem Bauraum 514 angeordnet werden. Außerdem kann bei dem Anordnen der Bauraum 514 an dem umlaufenden Rand 513 durch die an dem Rand 513 anliegende Statoreinheit 400 verschlossen werden. Das Verfahren kann anschließend ein Einfüllen der Vergussmasse in den Bauraum über die Einfüllöffnung 516 umfassen. Vor dem Einfüllen kann das Verfahren ein Aufstellen des Modulgehäuses 500 und der Statoreinheit 400 umfassen, bei dem das Modulgehäuse 500 in eine Position gebracht wird, in der die Einfüllöffnung 516 bezogen auf die Schwerkraftrichtung nach oben ausgerichtet ist. Insbesondere kann das Modulgehäuse 500 derart angeordnet werden, dass das Modulgehäuse 500 auf einer der Seitenfläche 34 mit der Einfüllöffnung 516 gegenüberliegenden Seitenfläche 34 auf einer Unterlage aufliegt. Anschließend kann das Verfahren ein Aushärten der Vergussmasse umfassen.

Die Einfüllöffnung 516 kann in der ersten oder der zweiten Richtung 5, 6 mittig an der Seitenfläche 34 des Modulgehäuses 500 angeordnet sein. Zusätzlich zu der Einfüllöffnung 516 kann das Modulgehäuse 500 weitere Einfüllöffnungen 517 umfassen. Die weiteren Einfüllöffnungen 517 können an der gleichen Seitenfläche 34 des Modulgehäuses 500 angeordnet sein wie die Einfüllöffnung 516. Beispielsweise kann das Modulgehäuse 500, wie in Fig. 14 dargestellt ist, zwei weitere Einfüllöffnungen 517 umfassen. Die weiteren Einfüllöffnungen 517 können jeweils zwischen der Einfüllöffnung 516 und dem Rand der betreffenden Seitenfläche 34 zu beiden Seiten der Einfüllöffnung 516 angeordnet sein. Die weiteren Einfüllöffnungen 517 können beispielsweise im Bereich der Wärmeleitstrukturen 530 an der Seitenfläche 34 des Modulgehäuses 500 ausgebildet sein.

In der vertikalen Richtung 7 ist zwischen der Statoreinheit 400 und dem Sensormodul 200 eine elektromagnetische Schirmschicht angeordnet. Die Schirmschicht ist dazu ausgebildet, auf der Statoreinheit 400 erzeugte elektromagnetische Felder von dem Sensormodul 200 abzuschirmen. Insbesondere ist die Schirmschicht dazu ausgebildet, elektromagnetische Wechselfelder von dem Sensormodul 200 abzuschirmen. Die abzuschirmenden elektromagnetischen Felder können insbesondere durch die in den Spulenleitern 402 fließenden Antriebsströme erzeugt werden. Bei dem Statormodul 2 wird die elektromagnetische Schirmschicht zwischen der Statoreinheit 400 und dem Sensormodul 200 durch den zwischen der Statoreinheit 400 und dem Sensormodul 200 angeordneten Gehäusedeckel 510 gebildet.

Die erste Verbindungsleitung 120 kann als eine mechanisch starre Verbindung zwischen dem Anschlussmodul 100 und dem Leistungsmodul 300 ausgeführt sein. Alternativ oder zusätzlich kann die zweite Verbindungsleitung 125 als eine mechanisch starre Verbindung zwischen dem Anschlussmodul 100 und dem Leistungsmodul 300 ausgebildet sein. Alternativ oder zusätzlich kann die dritte Verbindungsleitung 230 als eine mechanisch starre Verbindung zwischen dem Sensormodul 200 und dem Leistungsmodul 300 ausgebildet sein. Alternativ oder zusätzlich kann die vierte Verbindungsleitung 310 als eine mechanisch starre Verbindung zwischen dem Leistungsmodul 300 und der Statoreinheit 400 ausgebildet sein. Alternativ kann jede der Verbindungsleitungen 120, 125, 230, 310 auch als eine mechanisch flexible Verbindung mit einer flexiblen Leitung, beispielsweise mittels eines Kabels, ausbildet sein. Gegenüber einer einstückigen, kreuzförmigen Ausführung des Leistungsmoduls 300 entsteht in Bezug auf die Platine oder Leiterplatte des Leistungsmoduls 300 bei der in den Fig. 15, 16 und 20 dargestellten Ausführungsform des Leistungsmoduls 300 weniger Verschnitt bei der Herstellung der vier Moduleinheiten 320, 322, 324, 326. Außerdem können die einzelnen Pressfitverbinder, die jeweils eine der Moduleinheiten 320, 322, 324, 326 mit der Statoreinheit 400 verbinden, bei der Ausbildung der vierten Verbindungsleitung 310 jeweils einzeln und nacheinander mit der betreffenden Moduleinheit 320, 322, 324, 326 und der Statoreinheit 400 verpresst werden. Dadurch kann während des Verpressens ein Verkanten der Kontaktmittel 315, 316, 317, 318, wie es bei einem gleichzeitigen Verpressen mehrerer Kontaktmittel 315, 316, 317, 318 leicht auftreten kann, vermieden werden.

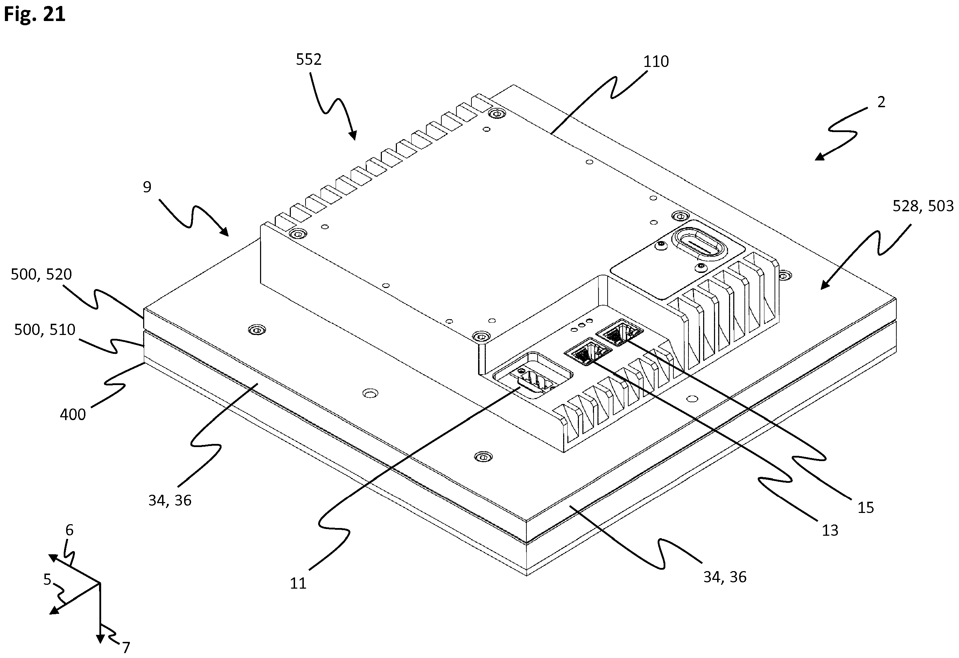

**Fig. 21** zeigt eine schematische perspektivische Darstellung der Unterseite 9 des Statormoduls 2. An der Unterseite 9 des Statormoduls 2 ist die Modulabdeckung 110 an dem Modulgehäuse 500 angeordnet. An der Unterseite 9 des Statormoduls 2 liegt die Unterseite 552 des Modulgehäuses 500 teilweise frei. Insbesondere liegt die Bodenfläche 528 des Gehäusebodens 520 an der Unterseite 9 des Statormoduls 2 teilweise frei.

Der an der Unterseite 9 freiliegende Teil des Statormoduls 2 oder der Bodenfläche 528 bildet eine Auflagefläche 503 des Modulgehäuses 500 und des Statormoduls 2. Die Auflagefläche 503 ist eben ausgebildet. Die Auflagefläche 503 ist in einem an der Bodenfläche 528 an die Seitenflächen 34 des Modulgehäuses 500 und an die Seitenflächen 36 des Statormoduls 2 angrenzenden Randbereich der Bodenfläche 528 angeordnet. Die Auflagefläche 503 ist zwischen der Modulabdeckung 110 und den Seitenflächen 34, 36 angeordnet.

Die Auflagefläche 503 kann, wie in Fig. 21 dargestellt, um die Modulabdeckung 110 umlaufend ausgebildet sein. Alternativ kann die Auflagefläche 503 auch nur an zwei einander in der ersten Richtung 5 oder in der zweiten Richtung 6 gegenüberliegenden Seiten der Modulabdeckung 110 zwischen der Modulabdeckung 110 und den Seitenflächen 34, 36 ausgebildet sein.

Die Auflagefläche 503 des Statormoduls 2 kann auf einem das Statormodul 2 tragenden und in Fig. 21 nicht dargestellten Träger oder Maschinenbett aufliegend angeordnet werden. Insbesondere kann die Auflagefläche 503 flächig auf dem Träger oder dem Maschinenbett aufliegend angeordnet werden. Über die Auflagefläche 503 kann eine wärmeleitende Verbindung zwischen dem Statormodul 2 und dem Träger oder Maschinenbett bestehen. Der Träger oder das Maschinenbett kann eine Kühlvorrichtung zur Kühlung der Auflagefläche 503 umfassen.

Die Breiten der Auflagefläche 503 an in der ersten Richtung 5 gegenüberliegenden Seiten des Statormoduls 2 können gleich groß sein. Alternativ oder zusätzlich können die Breiten der Auflagefläche 503 an in der zweiten Richtung 6 gegenüberliegenden Seiten des Statormoduls 2 gleich groß sein. Die Breiten der Auflagefläche 503 an den in der ersten Richtung 5 gegenüberliegenden Seiten des Statormoduls 2 und an den in der zweiten Richtung 6 gegenüberliegenden Seiten des Statormoduls 2 können, wie in Fig. 21 dargestellt, unterschiedlich groß sein. Sie können aber auch gleich groß sein.

Die Auflagefläche 503 kann zwischen den Seitenflächen 34, 36 und der Modulabdeckung 110 in der ersten und/oder der zweiten Richtung 5, 6 jeweils eine Breite von mehr als 5%, beispielsweise von 10%, oder von mehr als 15%, beispielsweise von 20%, der Gesamtbreite der Bodenfläche 528 aufweisen. Insbesondere kann die Auflagefläche 503 zwischen den Seitenflächen 34, 36 und der Modulabdeckung 110 in der ersten Richtung 5 jeweils eine Breite von mehr als 15%, beispielsweise von 20%, der Gesamtbreite der Bodenfläche 528 aufweisen und in der zweiten Richtung 6 jeweils eine Breite von mehr als 5%, aber weniger als 15%, beispielsweise von 10%, der Gesamtbreite der Bodenfläche 528. Alternativ können in der zweiten Richtung 6 die Breiten der Auflagefläche 503 genau 5% oder weniger als 5% der Gesamtbreite der Bodenfläche 528 in der zweiten Richtung 6 betragen. Insbesondere kann an den entlang der ersten Richtung 5 verlaufenden Seitenflächen 34, 36 keine Auflagefläche ausgebildet sein, so dass die Breiten der Auflagefläche 503 in der zweiten Richtung 6 genau 0% der Gesamtbreite der Bodenfläche 528 in der zweiten Richtung 6 beträgt und die Modulabdeckung 110 in der zweiten Richtung 6 bündig mit den Außenkanten 34, 36 abschließt. Die Auflagefläche 503 kann insgesamt eine Fläche von mehr als 25%, insbesondere von mehr als 50% der gesamten Fläche der Bodenfläche 528 umfassen.

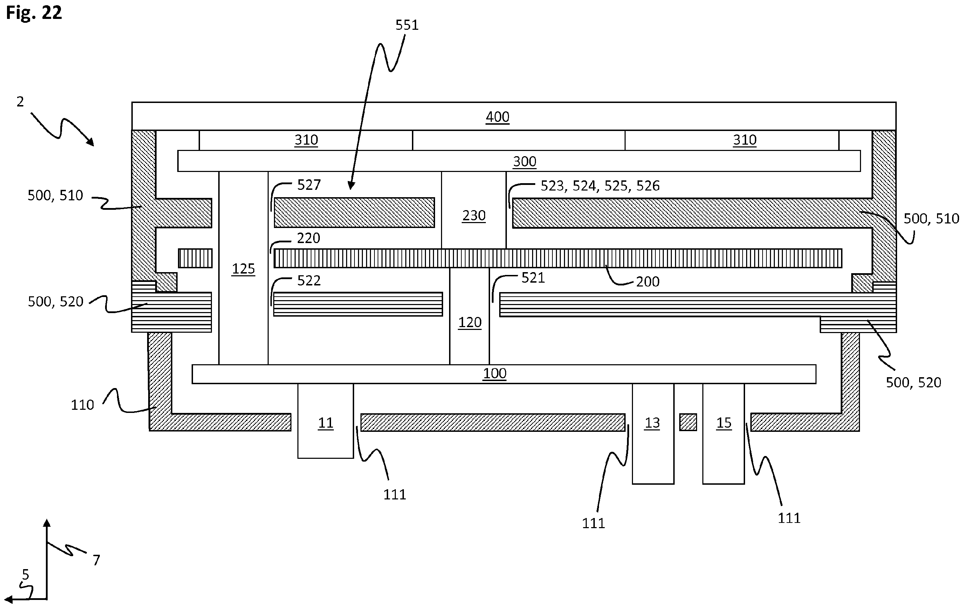

**Fig. 22** zeigt eine stark vereinfachte schematische Darstellung einer geschnittenen Seitenansicht des Statormoduls 2 mit dem Verlauf der Verbindungsleitungen 120, 125, 230, 310. Diese Ansicht dient zur Erläuterung der Verbindung der einzelnen Komponenten und Verbindungsleitungen untereinander, entspricht jedoch nicht maßstabsgetreu der räumlichen Anordnung der einzelnen Komponenten und Verbindungsleitungen gemäß einer der zuvor beschriebenen Figuren 1 bis 21.

An den Durchbrüchen 111 an der Unterseite der Modulabdeckung 110 liegen die Anschlussmittel 11, 13, 15 zum Anschluss der Energieversorgungsleitung 10, der Eingangsleitung 12 des Datennetzwerks 16 und der Ausgangsleitung 14 des Datennetzwerks 16 frei. Die Anschlussmittel 11, 13, 15 sind an der Unterseite des Anschlussmoduls 100 angeordnet. Von der Oberseite des Anschlussmoduls 100 führt die erste Verbindungsleitung 120 auf die Unterseite des Sensormoduls 200. Die erste Verbindungsleitung 120 ist durch die erste Verbindungsöffnung 521 in dem Gehäuseboden 520 des Modulgehäuses 500 geführt.

Von der Oberseite des Sensormoduls 200 ist die dritte Verbindungsleitung 230 auf die Unterseite des Leistungsmoduls 300 geführt. Die dritte Verbindungsleitung 230 ist durch die dritte, vierte, fünfte und sechste Verbindungsöffnung 523, 524, 525, 526 in dem Gehäusedeckel 510 des Modulgehäuses 500 geführt. Die vierte Verbindungsleitung 310 ist von der Oberseite des Leistungsmoduls 300 an die Unterseite der Statoreinheit 400 geführt.

Zusätzlich zu der ersten und dritten Verbindungsleitung 120, 230 ist die zweite Verbindungsleitung 125 von der Oberseite des Anschlussmoduls 100 an die Unterseite des Leistungsmoduls 300 geführt. Die zweite Verbindungsleitung 125 ist durch die zweite Verbindungsöffnung 522 in dem Gehäuseboden 520 des Modulgehäuses 500, durch den Verbindungsausschnitt 220 in dem Sensormodul 200 und durch die siebte Verbindungsöffnung 527 in dem Gehäusedeckel 510 des Modulgehäuses 500 geführt.

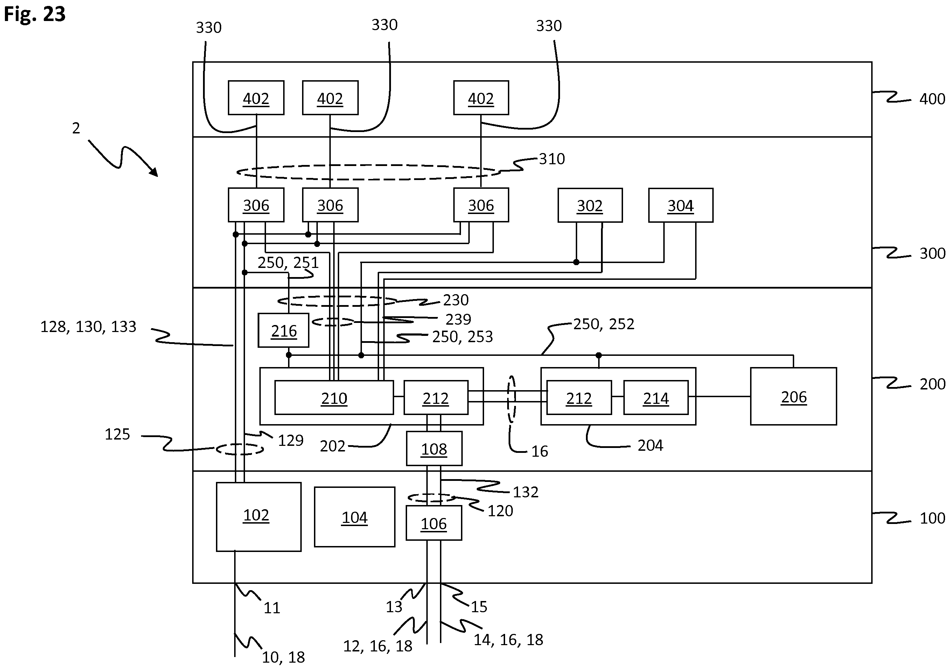

**Fig. 23** zeigt eine schematische Darstellung eines Blockschaltbildes des Statormoduls 2 mit einer elektrischen Verschaltung der einzelnen Module 100, 200, 300, 400 des Statormoduls 2.

Das Anschlussmodul 100 ist dazu ausgebildet, eine Antriebsenergie zur Erzeugung der Antriebsströme für die Spulenleiter 402 bereitzustellen. Das Anschlussmodul 100 ist dazu ausgebildet, die Antriebsenergie aus elektrischer Energie zu gewinnen, die über die an das erste Anschlussmittel 11 angeschlossene Energieversorgungsleitung 10 bereitgestellt wird. Das Anschlussmodul 100 ist dazu ausgebildet, die Antriebsenergie als eine Gleichspannung oder einen Gleichstrom zur Verfügung zu stellen. Über das erste Anschlussmittel 11 kann elektrische Energie beispielsweise als eine einphasige oder als eine mehrphasige, insbesondere dreiphasige, Wechselspannung bereitgestellt werden. Die Wechselspannung kann eine Netzspannung sein. Die Phasen der Wechselspannung können jeweils einen Spannungseffektivwert zwischen 50V und 350V, insbesondere zwischen 90V und 265V, insbesondere von 230V und eine Frequenz von 50Hz aufweisen. Insbesondere kann das Anschlussmodul 100 dazu ausgebildet sein, mit jedem Spannungswert zwischen 90V und 265V betrieben zu werden.

Zur Bereitstellung der Antriebsenergie kann das Anschlussmodul 100, wie in Fig. 23 dargestellt, eine Umwandeleinheit 102 umfassen. Die Umwandeleinheit 102 ist mit dem Anschlussmittel 11 für den Anschluss der Energieversorgungsleitung 10 elektrisch leitend verbunden. Die Umwandeleinheit 102 ist dazu ausgebildet, die über die Energieversorgungsleitung 10 bereitgestellt elektrische Energie in die Antriebsenergie umzuwandeln. Die Umwandeleinheit 102 kann beispielsweise dazu ausgebildet sein, die über die Energieversorgungsleitung 10 als eine Wechselspannung bereitgestellte Energie in die Gleichspannung oder den Gleichstrom umzuwandeln. Die Umwandeleinheit 102 kann hierzu einen Gleichrichter oder ein AC/DC-Netzteil umfassen. Die Umwandeleinheit 102 kann an eine oder mehrere, insbesondere an alle Phasen der mehrphasigen Wechselspannung angeschlossen sein.

Die Umwandeleinheit 102 kann dazu ausgebildet sein, die Antriebsenergie als eine Gleichspannung von nicht mehr als 150V, insbesondere nicht mehr als 120V, insbesondere nicht mehr als 60V bereitzustellen. Die Antriebsenergie kann als eine Gleichspannung mit einer Spannung von nicht mehr als 10V, insbesondere mit einer Spannung von 6V bis 8V, beispielsweise mit einer Spannung von 6,2V, 6,5V, 7V oder 7,5V bereitgestellt werden. Eine Spannung von nicht mehr als 120V kann von der Umwandeleinheit 102 als eine Kleinspannung (extra low voltage, ELV) bereitgestellt werden. Eine Spannung von nicht mehr als 60V kann von der Umwandeleinheit 102 als eine Sicherheitskleinspannung (safety extra low voltage, SELV) oder als eine Schutzkleinspannung (protected extra low voltage, PELV) bereitgestellt werden.

Die Umwandeleinheit 102 kann bei alternativen, nicht dargestellten Ausführungsformen des Statormoduls 2 auch dazu ausgebildet sein, die Antriebsspannung aus einer als Gleichspannung über die Energieversorgungsleitung 10 bereitgestellten elektrischen Energie zu erzeugen und als Gleichspannung bereitzustellen. Die Umwandeleinheit 102 kann beispielsweise einen Spannungswandler, insbesondere einen Gleichspannungswandler, umfassen.

Das Anschlussmodul 100 kann einen elektrischen Energiespeicher 104 umfassen. Der Energiespeicher 104 ist dazu ausgebildet, elektrische Energie auch nach einem Wegfall der elektrischen Energie an dem ersten Anschlussmittel 11 bereitzustellen, um einen Notbetrieb des Planarantriebssystems 1 sicherzustellen. Das Planarantriebssystem 1 kann dazu ausgebildet sein, im Notbetrieb den Läufer 20 in eine sichere Position zu bewegen, auch wenn über das erste Anschlussmittel 11 keine elektrische Energie mehr zur Verfügung gestellt wird. Beispielsweise kann die sichere Position eine abgesenkte Position sein, in der der Läufer 20 auf der Statorfläche 2 aufliegt. Die sichere Position kann auch eine vorbestimmte Position über der Statorfläche 3 des Statormoduls 2 oder eines neben dem Statormodul 2 angeordneten weiteren Statormoduls 2 sein. Der Energiespeicher 104 kann dazu ausgebildet sein, mit der Antriebsenergie gespeist zu werden.

Der Energiespeicher 104 kann in dem Modulgehäuse 500 angeordnet sein, insbesondere kann der Energiespeicher 104, wie es in Fig. 23 dargestellt ist, an dem Anschlussmodul 100 angeordnet sein. Alternativ kann der Energiespeicher 104 aber auch teilweise oder vollständig außerhalb des Modulgehäuses 500 angeordnet sein. Beispielsweise kann der Energiespeicher 104 zwischen der Energieversorgungsleitung 10 und dem Anschlussmittel 11 für die Energieversorgungsleitung 10 angeschlossen sein. Der Energiespeicher 104 kann als eine unterbrechungsfreie Stromversorgung (USV) oder als Teil einer unterbrechungsfreien Stromversorgung (USV) ausgebildet sein.

Das Anschlussmodul 100 ist dazu ausgebildet, die Antriebsenergie über eine Antriebsenergieleitung 128 bereitzustellen. Das Anschlussmodul 100 und die Umwandeleinheit 102 sind mit der Antriebsenergieleitung 128 elektrisch leitend verbunden. Das Anschlussmodul 100 ist dazu ausgebildet, die die Antriebsenergie führenden Teile des Statormoduls 2, insbesondere die Antriebsenergieleitung 128, galvanisch von dem ersten Anschlussmittel 11 zu trennen. Das Anschlussmodul 100 kann hierzu eine Isolationseinheit umfassen. Die Isolationseinheit kann als ein Transformator, ein Stromwandler oder ein Spannungswandler ausgebildet sein. Die Isolationseinheit kann in der Umwandeleinheit 102 integriert sein oder die Umwandeleinheit 102 kann als Isolationseinheit fungieren. Die Isolationseinheit kann auch getrennt von der Umwandeleinheit 102 ausgeführt und beispielsweise zwischen dem ersten Anschlussmittel 11 und der Umwandeleinheit 102 angeordnet sein.

Über die Antriebsenergieleitung 128 sind das Anschlussmodul 100 und die Umwandeleinheit 102 mit dem Leistungsmodul 300 elektrisch leitend verbunden. Das Leistungsmodul 300 weist eine Stromerzeugungseinheit 306 auf, die dazu ausgebildet ist, den den Läufer 20 antreibenden Antriebsstrom aus der Antriebsenergie zu erzeugen. Die Stromerzeugungseinheit 306 ist an die Antriebsenergieleitung 128 angeschlossen und über die Antriebsenergieleitung 128 elektrisch leitend mit dem Anschlussmodul 100 und der Umwandeleinheit 102 verbunden.

Die Stromerzeugungseinheit 306 ist dazu ausgebildet, aus der als Gleichspannung über die Antriebsenergieleitung 128 bereitgestellten Antriebsenergie den als Wechselstrom an die Spulenleiter 402 angelegten Antriebsstrom zu erzeugen. Die Stromerzeugungseinheit 306 kann dazu ausgebildet sein, den Antriebsstrom als einen gepulsten Antriebsstrom, insbesondere als einen pulsweitenmodulierten Antriebsstrom bereitzustellen. Zur Erzeugung des Antriebsstroms kann die Stromerzeugungseinheit 306 Schalteinheiten, insbesondere Transistoren, umfassen.

Das Leistungsmodul 300 kann, wie in Fig. 23 dargestellt, neben der Stromerzeugungseinheit 306 noch weitere Stromerzeugungseinheiten 306 aufweisen. Das Leistungsmodul 300 kann dazu ausgebildet sein, für jeden einzeln bestrombaren Spulenleiter 402 jeweils einen separaten Antriebsstrom zu erzeugen. Insbesondere kann das Leistungsmodul 300 für jeden einzeln zu bestromenden Spulenleiter 402 jeweils eine eigene Stromerzeugungseinheit 306 aufweisen. Beispielsweise kann das Leistungsmodul 300 für jede einzelne Phase der Mehrphasensysteme der Statoreinheit 400 jeweils eine separate Stromerzeugungseinheit 306 aufweisen, um als Antriebsstrom einen Phasenstrom für die entsprechende Phase zu erzeugen. Beispielsweise kann das Leistungsmodul 300 für jede der drei Phasen eines Dreiphasensystems aus zusammengeschalteten Spulenleitern 402 je eine Stromerzeugungseinheit 306 aufweisen. Die Stromerzeugungseinheiten 306 können als elektronische Bauteile, insbesondere als integrierte Schaltungen, ausgebildet sein, welche auf der Leiterplatte oder den Leiterplatten des Leistungsmoduls 300 angeordnet sind.

Jeder Statorsektor 411, 412, 413, 414 kann jeweils eine erste Anzahl von Mehrphasensystemen umfassen, deren Spulenleiter 402 entlang der ersten Richtung 5 ausgedehnt sind, und eine zweite Anzahl von Mehrphasensystemen umfassen, deren Spulenleiter 402 entlang der zweiten Richtung 6 ausgedehnt sind. Die erste und zweite Anzahl kann gleich sein. Die Mehrphasensysteme können jeweils eine dritte Anzahl einzelner Phasen umfassen. Das Leistungsmodul 300 kann für jede der einzelnen Phasen der Mehrphasensysteme jeweils eine Stromerzeugungseinheit 306 umfassen. Insgesamt kann das Leistungsmodul 300 also pro Statorsektor 411, 412, 413, 414 eine Gesamtzahl von Stromerzeugungseinheiten 306 umfassen, die der Summe aus dem Produkt der ersten und dritten Anzahl und dem Produkt der zweiten und dritten Anzahl entspricht.

Die Spulenleiter 402 der Statoreinheit 400 können beispielsweise insgesamt zu vierundzwanzig Dreiphasensystemen zusammengeschaltet sein, wobei jeder Statorsektor 411, 412, 413, 414 jeweils sechs Dreiphasensysteme umfasst. Von den sechs Dreiphasensystemen eines Sektors 411, 412, 413, 414 können jeweils drei aus in der ersten Richtung 5 ausgedehnten Spulenleitern 402 und jeweils drei aus in der zweiten Richtung 6 ausgedehnten Spulenleitern 402 bestehen. Bei einer Statoreinheit 400 mit vierundzwanzig Dreiphasensystemen kann das Leistungsmodul 300 zweiundsiebzig Stromerzeugungseinheiten 306 zur Erzeugung von zweiundsiebzig Antriebs- bzw. Phasenströmen umfassen.

Die Antriebsenergieleitung 128 ist durch das Modulgehäuse 500 geführt und von dem Sensormodul 200 elektrisch isoliert ausgebildet. Insbesondere ist die Antriebsenergieleitung 128 von dem Anschlussmodul 100 durch den Gehäuseboden 520 in das Modulgehäuse 500, durch den Verbindungsausschnitt 220 des Sensormoduls 200 und durch den Gehäusedeckel 510 an das Leistungsmodul 300 geführt. Die Antriebsenergieleitung 128 kann, wie in Fig. 23 dargestellt, als Teil der zweiten Verbindungsleitung 125 ausgebildet sein, so dass die zweite Verbindungsleitung 125 die Antriebsenergieleitung 128 umfasst.

Wie in Fig. 15 dargestellt ist, kontaktiert die zweite Verbindungsleitung 125 und damit die Antriebsenergieleitung 128 das Leistungsmodul 300 über das zweite Koppelelement 127 auf der zweiten Moduleinheit 322. Von der zweiten Moduleinheit 322 ist die Antriebsenergieleitung 128 über die Anschlussmittel 321, 323, 325, 327 auf die übrigen Moduleinheiten 320, 324, 326 geführt. Insbesondere ist die Antriebsenergieleitung 128 über das erste Anschlussmittel 321 auf die erste Moduleinheit 320 und über das zweite Anschlussmittel 323 auf die dritte Moduleinheit 324 geführt. Von der dritten Moduleinheit 324 ist die Antriebsenergieleitung 128 über das dritte Anschlussmittel 325 auf die vierte Moduleinheit 326 geführt. Zusätzlich oder alternativ ist die Antriebsenergieleitung 128 von der ersten Moduleinheit 320 über das vierte Anschlussmittel 327 auf die vierte Moduleinheit 326 geführt.

Die Moduleinheiten 320, 322, 324, 326 umfassen jeweils alle Stromerzeugungseinheiten 306, die für die Erzeugung der Antriebsströme für die mit der jeweiligen Moduleinheit 320, 322, 324, 326 verbundenen Spulenleiter 402 notwendig sind. Die erste Moduleinheit 320 umfasst alle Stromerzeugungseinheiten 306, die die Antriebsströme in den entlang der zweiten Richtung 6 ausgerichteten Spulenleitern 402 des ersten und dritten Statorsektors 411, 413 erzeugen. Die zweite Moduleinheit 322 umfasst alle Stromerzeugungseinheiten 306, die die Antriebsströme in den entlang der ersten Richtung 5 ausgerichteten Spulenleitern 402 des ersten und zweiten Statorsektors 411, 412 erzeugen. Die dritte Moduleinheit 324 umfasst alle Stromerzeugungseinheiten 306, die die Antriebsströme in den entlang der zweiten Richtung 6 ausgerichteten Spulenleitern 402 des zweiten und vierten Statorsektors 412, 414 erzeugen. Die vierte Moduleinheit 326 umfasst alle Stromerzeugungseinheiten 306, die die Antriebsströme in den entlang der ersten Richtung 5 ausgerichteten Spulenleitern 402 des dritten und vierten Statorsektors 413, 414 erzeugen.

Jede der vier Moduleinheiten 320, 322, 324, 326 kann jeweils eine Gesamtzahl von Stromerzeugungseinheiten 306 umfassen, die dem Doppelten des Produkts aus der ersten Anzahl von Mehrphasensystemen mit entlang der ersten Richtung 5 ausgedehnten Spulenleitern 402 und der dritten Anzahl von einzelnen Phasen pro Mehrphasensystem oder dem Doppelten des Produkts aus der zweiten Anzahl von Mehrphasensystemen mit entlang der zweiten Richtung 6 ausgedehnten Spulenleitern 402 und der dritten Anzahl von einzelnen Phasen pro Mehrphasensystem entspricht.

Jede der Moduleinheiten 320, 322, 324, 326 kann jeweils achtzehn Stromerzeugungseinheiten 306 zur Erzeugung von achtzehn Antriebsströmen umfassen. Die achtzehn Antriebsströme können als je drei Phasen von sechs Dreiphasensystemen erzeugt werden.

Die Stromerzeugungseinheiten 306 sind zur Übertragung der Antriebsströme über Antriebsstromleitungen 330 mit den Spulenleitern 402 der Statoreinheit 400 verbunden. Die Antriebsstromleitungen 330 sind als Teil der vierten Verbindungsleitung 310 ausgeführt. Die Antriebsstromleitungen 330 sind jeweils über die Kontaktmittel 315, 316, 317, 318 der vierten Verbindungsleitung 310 geführt. Die Stromerzeugungseinheiten 306 der ersten Moduleinheit 320 sind über die in dem vierten Kontaktmittel 318 geführten Antriebsstromleitungen 330 mit den in der zweiten Richtung 6 orientierten Spulenleitern 402 des ersten und dritten Statorsektors 411, 413 verbunden. Die Stromerzeugungseinheiten 306 der zweiten Moduleinheit 322 sind über die in dem ersten Kontaktmittel 315 geführten Antriebsstromleitungen 330 mit den in der ersten Richtung 5 orientierten Spulenleitern 402 des ersten und zweiten Statorsektors 411, 412 verbunden. Die Stromerzeugungseinheiten 306 der dritten Moduleinheit 324 sind über die in dem zweiten Kontaktmittel 316 geführten Antriebsstromleitungen 330 mit den in der zweiten Richtung 6 orientierten Spulenleitern 402 des zweiten und vierten Statorsektors 412, 414 verbunden. Die Stromerzeugungseinheiten 306 der vierten Moduleinheit 326 sind über die in dem dritten Kontaktmittel 317 geführten Antriebsstromleitungen 330 mit den in der ersten Richtung 5 orientierten Spulenleitern 402 des dritten und vierten Statorsektors 413, 414 verbunden.

Das Statormodul 2 kann einen Zwischenkreis 130, insbesondere einen Gleichspannungs-Zwischenkreis, umfassen, über den die Antriebsenergie als eine Zwischenkreisspannung 133 bereitgestellt wird. Insbesondere kann die Antriebsenergie über den Zwischenkreis 130 als eine Gleichspannung bereitgestellt werden. Der Zwischenkreis 130 ist auf der Antriebsenergieleitung 128 ausgebildet, so dass die Antriebsenergieleitung 128 die Zwischenkreisspannung 133 führt. Zusätzlich kann der Zwischenkreis 130 auf dem Anschlussmodul 100 und auf dem Leistungsmodul 300 ausgeführt sein. Insbesondere kann der Zwischenkreis 130 auf den Anschlussmitteln 321, 323, 325, 327 des Leistungsmoduls 300 ausgebildet sein, so dass die Zwischenkreisspannung 133 über die Anschlussmittel 321, 323, 325, 327 übertragen wird.

Der Zwischenkreis 130 kann einen elektrischen Zwischenkreisspeicher 131 zur Speicherung elektrischer Energie umfassen. Der Zwischenkreisspeicher 131 kann dazu ausgebildet sein, Spannungs- und/oder Lastspitzen in dem Zwischenkreis 130 auszugleichen. Der Zwischenkreisspeicher 131 kann als ein Kondensator oder als mehrere Kondensatoren ausgebildet sein. Der Zwischenkreisspeicher 131 kann auf dem Anschlussmodul 100 ausgebildet sein. Beispielsweise kann der Zwischenkreisspeicher 131, wie in Fig. 7 und 8 dargestellt, als an dem Anschlussmodul 100 angeordnete Kondensatoren ausgebildet sein.

Die Stromerzeugungseinheiten 306 können an den Zwischenkreis 130 angeschlossen und dazu ausgebildet sein, als Wechselrichter den Antriebsstrom aus der Zwischenkreisspannung 133 zu erzeugen. Die Umwandeleinheit 102 kann ebenfalls an den Zwischenkreis 130 angeschlossen und dazu ausgebildet sein, als ein Gleichrichter oder als ein Spannungswandler die Zwischenkreisspannung 133 aus der über das erste Anschlussmittel 11 bereitgestellten elektrischen Energie zu erzeugen.

Das Statormodul 2 kann dazu ausgebildet sein, Antriebsströme mit einer Stromstärke von mehr als 5A, insbesondere von mehr als 10A zu erzeugen. Die Stromstärke der Antriebsströme kann beispielsweise 20A im Dauerbetrieb betragen. Bei einem eine Leiterplatte umfassenden Leistungsmodul 300 kann eine Metallisierungsdicke der den Antriebsstrom führenden Leiterbahnen 35pm bis 200µm, insbesondere 50µm bis 100µm, insbesondere 70µm betragen. Insbesondere kann eine, mehrere oder alle Leiterbahnlagen des Leistungsmoduls 300 die gleiche Metallisierungsdicke wie die den Antriebsstrom führenden Leiterbahnen aufweisen.

Das Anschlussmodul 100 ist dazu ausgebildet, eine für die Erzeugung der Antriebsströme aus der Antriebsenergie benötigte Betriebsenergie bereitzustellen. Die Betriebsenergie kann beispielsweise für den Betrieb der Stromerzeugungseinheiten 306 bereitgestellt werden. Falls die Stromerzeugungseinheiten 306 Schaltelemente umfassen, kann die Betriebsenergie beispielsweise für den Betrieb der Schaltelemente bereitgestellt werden. Falls die Schaltelemente als Transistoren ausgebildet sind, kann die Betriebsenergie zur Ansteuerung der Transistoren, insbesondere zur Erzeugung eines Gatestroms oder einer Gatespannung der Transistoren, bereitgestellt werden.

Die Betriebsenergie kann beispielsweise als eine Gleichspannung bereitgestellt werden. Die Betriebsenergie kann, wie die Antriebsenergie, als eine Spannung von nicht mehr als 150V, insbesondere nicht mehr als 120V, insbesondere nicht mehr als 60V bereitgestellt werden. Die Betriebsenergie kann als eine Gleichspannung mit einer Spannung von nicht mehr als 20V, insbesondere mit einer Spannung von 5V bis 15V, etwa mit einer Spannung von 10V, bereitgestellt werden. Die Betriebsenergie kann, wie die Antriebsenergie, als eine Kleinspannung (ELV), als eine Sicherheitskleinspannung (SELV) oder als eine Schutzkleinspannung (PELV) bereitgestellt werden.

Die Umwandeleinheit 102 kann, wie in Fig. 23 dargestellt, dazu ausgebildet sein, die Betriebsenergie bereitzustellen. Alternativ kann das Statormodul 2, insbesondere das Anschlussmodul 100, auch eine weitere Umwandeleinheit aufweisen. Die weitere Umwandeleinheit kann dazu ausgebildet sein, die Betriebsenergie bereitzustellen. Die weitere Umwandeleinheit kann ausgebildet sein wie die Umwandeleinheit 102. Die Umwandeleinheit 102 und die weitere Umwandeleinheit müssen dabei nicht identisch ausgebildet sein. Beispielsweise kann die Umwandeleinheit 102 als ein Gleichrichter und die weitere Umwandeleinheit als ein Spannungswandler zur Umwandlung von Gleichspannungen oder als ein DC/DC-Wandler ausgebildet sein.

Das Anschlussmodul 100 und die auf dem Leistungsmodul 300 angeordneten Stromerzeugungseinheiten 306 sind über eine Betriebsenergieleitung 129 miteinander verbunden. Über die Betriebsenergieleitung 129 wird die Betriebsenergie bereitgestellt und zu den Stromerzeugungseinheiten 306 übertragen. Die Betriebsenergieleitung 129 ist elektrisch isoliert von der Antriebsenergieleitung 128 ausgebildet. Wie die Antriebsenergieleitung 128, kann die Betriebsenergieleitung 129 galvanisch getrennt von dem ersten Anschlussmittel 11 ausgebildet sein. Bei alternativen Ausführungsformen des Statormoduls 2 kann auch lediglich die Antriebsenergieleitung 128 galvanisch getrennt von dem ersten Anschlussmittel 11 ausgebildet sein und die Betriebsenergieleitung 129 kann ohne galvanische Trennung mit dem ersten Anschlussmittel 11 verbunden sein. Insbesondere bei einer als DC/DC-Wandler oder als Spannungswandler ausgebildeten weiteren Anschlusseinheit kann eine galvanische Trennung zwischen Betriebsenergieleitung 129 und erstem Anschlussmittel 11 entfallen.

Das Anschlussmodul 100 kann hierzu eine zwischen dem Anschlussmittel 11 und der Betriebsenergieleitung 129 angeordnete Isolationseinheit umfassen. Die Isolationseinheit kann als ein Transformator, ein Stromwandler oder ein Spannungswandler ausgebildet sein. Die Isolationseinheit kann in der Umwandeleinheit 102 oder in der weiteren Umwandeleinheit integriert sein oder die Umwandeleinheit 102 oder die weitere Umwandeleinheit kann als Isolationseinheit fungieren. Die Isolationseinheit kann auch getrennt von der Umwandeleinheit 102 oder der weiteren Umwandeleinheit ausgeführt sein.

Die Betriebsenergieleitung 129 ist durch das Modulgehäuse 500 geführt und von dem in dem Modulgehäuse 500 angeordneten Sensormodul 200 elektrisch isoliert ausgeführt. Die Betriebsenergieleitung 129 ist, wie die Antriebsenergieleitung 128, als Teil der zweiten Verbindungsleitung 125 ausgebildet. Die zweite Verbindungsleitung 125 umfasst einen oder mehrere Leiter, welche die Antriebsenergieleitung 128 bilden, und einen oder mehrere weitere Leiter, welche die Betriebsenergieleitung 129 bilden. Die Verbindungsleitung 125 kann beispielsweise fünf Leiter umfassen.

Bei dem Statormodul 2 ist die zweite Verbindungsleitung 125 als eine einzelne Steckverbindung ausgeführt, wobei die Steckverbindung bzw. die Koppelelemente 126, 127 der Steckverbindung voneinander isolierte Leiter für die Antriebsenergieleitung 128 und die Betriebsenergieleitung 129 umfassen. Bei alternativen Ausführungsformen des Statormoduls 2 kann die zweite Verbindungsleitung 125 auch mehrere Steckverbindungen oder Kabelverbindungen aufweisen und die Antriebsenergieleitung 128 und die Betriebsenergieleitung 129 können auf getrennten Steckverbindungen oder Kabelverbindungen ausgeführt sein.

Das Sensormodul 200 umfasst eine Antriebssteuereinheit 210, welche dazu ausgebildet ist, Steuersignale zur Steuerung der Stromerzeugungseinheiten 306 zu erzeugen. Die Stromerzeugungseinheiten 306 sind dazu ausgebildet, auf Grundlage der Steuersignale die Antriebsströme zu erzeugen. Beispielsweise kann die Antriebssteuereinheit 210 dazu ausgebildet sein, mittels der Steuersignale Sollwerte für die Antriebsströme an die Stromerzeugungseinheiten 306 zu übermitteln. Die Antriebssteuereinheit 210 kann, wie in Fig. 23 dargestellt, in der auf dem Sensormodul 200 angeordneten ersten Verarbeitungseinheit 202 angeordnet sein.

Die Antriebssteuereinheit 210 des Sensormoduls 200 und die Stromerzeugungseinheiten 306 des Leistungsmoduls 300 sind für die Übertragung der Steuersignale über eine Steuerleitung 239 miteinander verbunden. Die Steuerleitung 239 ist von dem Sensormodul 200 in dem Modulgehäuse 500 durch die Oberseite 551 des Modulgehäuses 500 und den Gehäusedeckel 510 geführt.

Die Steuerleitung 239 kann als Teil der dritten Verbindungsleitung 230 ausgebildet sein. Die Steuerleitung 239 kann für jede Moduleinheit 320, 322, 324, 326 des Leistungsmoduls 300 je eine Teilleitung umfassen, welche das Sensormodul 200 mit der betreffenden Moduleinheit 320, 322, 324, 326 verbindet. Die Teilleitungen sind parallel zueinander von dem Sensormodul 200 auf das Leistungsmodul 300 geführt. Bei dem Statormodul 2 ist das Sensormodul 200 über eine erste Teilleitung der Steuerleitung 239 mit der ersten Moduleinheit 320, über eine zweite Teilleitung der Steuerleitung 239 mit der zweiten Moduleinheit 322, über eine dritte Teilleitung der Steuerleitung 239 mit der dritten Moduleinheit 324 und über eine vierte Teilleitung der Steuerleitung 239 mit der vierten Moduleinheit 326 verbunden.

Bei der dritten Verbindungsleitung 230 umfassen die vier Teilleitungen jeweils eine der vier Steckverbindungen der dritten Verbindungsleitung 230. Die erste Teilleitung umfasst die erste Steckverbindung mit dem ersten Koppelelement 231 und dem ersten Gegenelement 232, die zweite Teilleitung umfasst die zweite Steckverbindung mit dem zweiten Koppelelement 233 und dem zweiten Gegenelement 234, die dritte Teilleitung umfasst die dritte Steckverbindung mit dem dritten Koppelelement 235 und dem dritten Gegenelement 236 und die vierte Teilleitung umfasst die vierte Steckverbindung mit dem vierten Koppelelement 237 und dem vierten Gegenelement 238.

Über die einzelnen Teilleitungen der Steuerleitung 239 werden die Steuersignale für diejenigen Stromerzeugungseinheiten 306 übertragen, die auf der mit der betreffenden Teilleitung verbundenen Moduleinheit 320, 322, 324, 326 angeordnet sind. Die Stromerzeugungseinheiten 306 der einzelnen Moduleinheiten 320, 322, 324, 325 sind jeweils mit der auf die betreffende Moduleinheit 320, 322, 324, 326 führenden Teilleitung zur Übertragung der Steuersignale verbunden.

Über die erste Teilleitung werden die Steuersignale für die auf der ersten Moduleinheit 320 angeordneten Stromerzeugungseinheiten 306, über die zweite Teilleitung werden die Steuersignale für die auf der zweiten Moduleinheit 322 angeordneten Stromerzeugungseinheiten 306, über die dritte Teilleitung werden die Steuersignale für die auf der dritten Moduleinheit 324 angeordneten Stromerzeugungseinheiten 306 und über die vierte Teilleitung werden die Steuersignale für die auf der vierten Moduleinheit 326 angeordneten Stromerzeugungseinheiten 306 übertragen. Die auf der ersten Moduleinheit 320 angeordneten Stromerzeugungseinheiten 306 sind mit der ersten Teilleitung, die auf der zweiten Moduleinheit 322 angeordneten Stromerzeugungseinheiten 306 sind mit der zweiten Teilleitung, die auf der dritten Moduleinheit 324 angeordneten Stromerzeugungseinheiten 306 sind mit der dritten Teilleitung und die auf der vierten Moduleinheit 326 angeordneten Stromerzeugungseinheiten 306 sind mit der vierten Teilleitung verbunden.

Das Sensormodul 200 weist eine Positionsverarbeitungseinheit 214 auf. Die Positionsverarbeitungseinheit 214 ist dazu ausgebildet, die von den Positionserfassungseinheiten 206 gewonnenen Informationen über die Position des Läufers 20 aus den Positionserfassungseinheiten 206 einzulesen und zu verarbeiten. Beispielsweise kann die Positionsverarbeitungseinheit 214 Eingänge aufweisen, über welche Sensorsignale der Positionserfassungseinheiten 206 eingelesen werden. Die Positionsverarbeitungseinheit 214 kann dazu ausgebildet sein, die eingelesenen Sensorsignale zu Kommunikationsdaten zu verarbeiten, die zur Übertragung über das mit dem Statormodul 2 verbundene Datennetzwerk 16 geeignet sind. Die Positionsverarbeitungseinheit 214 kann, wie in Fig. 23 dargestellt, in der zweiten Verarbeitungseinheit 204 des Sensormoduls 200 angeordnet sein.

Die Antriebssteuereinheit 210 und die Positionsverarbeitungseinheit 214 sind mit dem externen Datennetzwerk 16 verbunden. Die Positionsverarbeitungseinheit 214 ist dazu ausgebildet, die von der Positionserfassungseinheit 206 gewonnenen Positionsinformationen über das Datennetzwerk 16 auszutauschen. Die Antriebssteuereinheit 210 ist dazu ausgebildet, über das externe Datennetzwerk 16 Steuerdaten zur Ansteuerung der Stromerzeugungseinheiten 306 auszutauschen. Die Steuerdaten können beispielsweise die Sollwerte für die Antriebsströme in den einzelnen Spulenleitern 402 umfassen. Die Positionsinformationen und die Steuerdaten können beispielsweise mit einer an das Datennetzwerk 16 angeschlossenen übergeordneten Steuereinheit oder mit mehreren derartigen Steuereinheiten ausgetauscht werden.

Die Antriebssteuereinheit 210 und die Positionsverarbeitungseinheit 214 können, wie in Fig. 23 dargestellt, jeweils über eine Anschalteinheit 212 mit dem externen Datennetzwerk 16 verbunden sein. Die Anschalteinheiten 212 sind dazu ausgebildet, den Zugriff der jeweils angeschlossenen Einheit, also der Antriebssteuereinheit 210 oder der Positionsverarbeitungseinheit 214, auf das Datennetzwerk 16 zu steuern. Die Anschalteinheiten 212 können dazu ausgebildet sein, die für die Kommunikation über das Datennetzwerk 16 benötigten Adressen zu verwalten. Beispielsweise können die Anschalteinheiten 212 dazu ausgebildet sein, Adressinformationen aus über das Datennetzwerk 16 empfangenen Daten auszulesen und Adressinformationen in über das Datennetzwerk 16 zu sendende Daten einzufügen. Die Anschalteinheiten 212 können auch dazu ausgebildet sein, die über das Datennetzwerk 16 übertragenen Daten mittels eingefügter Sicherungsdaten abzusichern. Die Anschalteinheiten 212 können die Funktionen der Sicherungsschicht (data link layer) des Datennetzwerks 16 implementieren. Die Anschalteinheiten 212 können einen media access controller (MAC) umfassen oder als media access controller ausgebildet sein.

Die Antriebssteuereinheit 210 und die Positionsverarbeitungseinheit 214 oder die Anschalteinheiten 212 der Antriebssteuereinheit 210 und der Positionsverarbeitungseinheit 214 können über eine Übertragungseinheit 108 mit dem zweiten Anschlussmittel 13 für die Eingangsleitung 12 und dem dritten Anschlussmittel 15 für die Ausgangsleitung 14 des externen Datennetzwerks 16 verbunden sein. Die Übertragungseinheit 108 kann dazu ausgebildet sein, die über das Datennetzwerk 16 zu übertragenden Daten in die für die Datenübertragung über die Anschlussmittel 13, 15 verwendeten Datensignale umzuwandeln und umgekehrt. Insbesondere kann die Übertragungseinheit 108 die für die Übertragung der Datensignale verwendete Signalkodierung erzeugen. Bei den Datensignalen kann es sich um die für die Übertragung einzelner Bits genutzten elektrischen oder optischen Signale handeln. Die Übertragungseinheit 108 kann die Funktionen der Bitübertragungsschicht (physical layer, PHY) des Datennetzwerks 16 implementieren. Die Übertragungseinheit 108 kann als ein PHY-Chip ausgebildet sein oder einen PHY-Chip umfassen.

Die Antriebssteuereinheit 210 und die Positionsverarbeitungseinheit 214 können der Reihe nach mit dem Datennetzwerk 16 verbunden sein. Dabei kann die Antriebssteuereinheit 210, wie in Fig. 23 dargestellt, zwischen den Anschlussmitteln 13, 15 der Eingangs- und Ausgangsleitung 12, 14 und der Positionsverarbeitungseinheit 214 an das Datennetzwerk 16 angeschlossen sein. Es kann aber auch die Positionsverarbeitungseinheit 214 zwischen den Anschlussmitteln 13, 15 der Eingangs- und Ausgangsleitung 12, 14 und der Antriebssteuereinheit 210 an das Datennetzwerk 16 angeschlossen sein.

Die Übertragungseinheit 108 kann zwischen den Anschlussmitteln 13, 15 und der Antriebssteuereinheit 210 und der Positionsverarbeitungseinheit 214 an das Datennetzwerk 16 angeschlossen sein. Insbesondere können sowohl die Antriebssteuereinheit 210, als auch die Positionsverarbeitungseinheit 214 gemeinsam über die Übertragungseinheit 108 mit den Anschlussmitteln 13, 15 verbunden sein. Dabei kann die Antriebssteuereinheit 210, wie in Fig. 23 dargestellt, zwischen der Übertragungseinheit 108 und der Positionsverarbeitungseinheit 214 an das Datennetzwerk 16 angeschlossen sein. Es kann aber auch die Positionsverarbeitungseinheit 214 zwischen der Antriebssteuereinheit 210 und der Übertragungseinheit 108 an das Datennetzwerk 16 angeschlossen sein.

Das Datennetzwerk 16 kann zwischen der Übertragungseinheit 108 und der Antriebssteuereinheit 210 und der Positionsverarbeitungseinheit 214 mittels medienunabhängiger Schnittstellen (media-independent interfaces, MII) realisiert sein. Zur Datenübertragung kann zwischen der Übertragungseinheit 108, der Antriebssteuereinheit 210 und der Positionsverarbeitungseinheit 214 low-voltage differential sampling (LVDS) genutzt werden.

Das Datennetzwerk 16 kann als ein Feldbus, etwa als ein EtherCAT-, Profibus- oder Interbus-Feldbus, ausgebildet sein. Die Datenübertragung über das Datennetzwerk 16 kann gemäß dem EtherCAT-Standard erfolgen. Auf der Eingangsleitung 12 und auf der Ausgangsleitung 14 des Datennetzwerks und/oder zwischen der Übertragungseinheit 108 und den Anschalteinheiten 212 kann die Datenübertragung insbesondere jeweils gemäß dem Ethernet-Standard erfolgen.

Die Datenübertragung über das Datennetzwerk 16 kann nach dem Master-Slave-Prinzip erfolgen. Dabei können die Antriebssteuereinheit 210 und die Positionsverarbeitungseinheit 214 jeweils als Slave-Einheiten an den Feldbus angeschlossen sein. Insbesondere können die Anschalteinheiten 212 jeweils als Slave-Anschaltungen ausgebildet sein.

Für die Übertragung der Steuerdaten und/oder der Positionsinformationen über das Datennetzwerk 16 ist das Sensormodul 200, insbesondere die Positionsverarbeitungseinheit 214 und/oder die Antriebssteuereinheit 210, über eine Datenleitung 132 mit dem Anschlussmodul 100 und dem externen Datennetzwerk 16, insbesondere mit den Anschlussmitteln 13, 15 des externen Datennetzwerks 16, verbunden. Die Datenleitung 132 kann, wie in Fig. 23 dargestellt, zwischen der Übertragungseinheit 108 und den Anschlussmitteln 13, 15 für die Eingangs- und Ausgangsleitung 12, 14 angeordnet sein. Die Übertragungseinheit 108 kann auf dem Sensormodul 200 angeordnet sein. Bei alternativen Ausführungsformen der Statoreinheit 2 kann die Datenleitung 132 aber auch zwischen der Übertragungseinheit 108 und den Anschalteinheiten 212 angeordnet sein und die Übertragungseinheit 108 kann auf dem Anschlussmodul 100 angeordnet sein.

Die Datenleitung 132 ist von dem Anschlussmodul 100 durch die Unterseite 552 des Modulgehäuses 500 und den Gehäuseboden 520 in das Modulgehäuse 500 und auf das Sensormodul 200 geführt. Die Datenleitung 132 ist als Teil der ersten Verbindungsleitung 120 ausgebildet. Neben der Datenleitung 132 kann die erste Verbindungsleitung 120 eine elektrische Verbindung zwischen dem Sensormodul 200 und dem Lüfter 112 umfassen. Insbesondere kann der Lüfter 112 über die erste Verbindungsleitung 120 mit der Antriebssteuereinheit 210 verbunden sein, um durch die Antriebssteuereinheit 210 gesteuert oder geregelt zu werden. Außerdem kann die erste Verbindungsleitung 120 eine elektrische Verbindung zwischen dem Sensormodul 200 und auf dem Anschlussmodul 100 angeordneten Temperatursensoren und/oder Statusanzeigen, insbesondere Status-LEDs, umfassen. Beispielsweise kann die Antriebssteuereinheit 210 mit den auf der Anschlusseinheit 100 angeordneten Temperatursensoren und/oder Statusanzeigen verbunden sein und mit den Temperatursensoren und/oder Statusanzeigen Signale austauschen.

Das Sensormodul 200 kann galvanisch getrennt von den Anschlussmitteln 13, 15 für die Eingangs- und Ausgangsleitung 12, 14 ausgebildet sein. Zur galvanischen Trennung kann das Statormodul 2 eine Isoliereinheit 106 umfassen, welche zwischen den Anschlussmitteln 13, 15 und dem Sensormodul 200 angeordnet ist. Die Isoliereinheit 106 kann, wie in Fig. 23 dargestellt, auf dem Anschlussmodul 100 angeordnet sein. Die Isoliereinheit 106 kann zwischen den Anschlussmitteln 13, 15 für die Eingangs- und Ausgangsleitung 12, 14 und der Datenleitung 132 angeordnet sein. Die Isoliereinheit 106 kann zwischen den Anschlussmitteln 13, 15 für die Eingangs- und Ausgangsleitung 12, 14 und der Übertragungseinheit 108 angeordnet sein. Die Isoliereinheit 106 kann einen oder mehrere Übertrager oder einen oder mehrere Optokoppler umfassen.

Die Isoliereinheit 106 und/oder die Isolationseinheit für die galvanische Trennung der Umwandeleinheit 102 und/oder die Umwandeleinheit 102 können magnetische, insbesondere ferromagnetische, Materialien enthalten. Wenn die Isoliereinheit 106 und/oder die Isolationseinheit für die galvanische Trennung der Umwandeleinheit 102 und/oder die Umwandeleinheit 102 jeweils auf dem Anschlussmodul 100 angeordnet sind, befinden sich die genannten Einheiten in großem Abstand zu den Antriebsmagneten des Läufers 20. Dadurch wird eine Beeinflussung der Bewegung des Läufers 20 durch die magnetischen Materialien gering gehalten.

Die Antriebssteuereinheit 210 und die Positionsverarbeitungseinheit 214 sind dazu ausgebildet, jeweils als eigenständige Kommunikationsteilnehmer über das externe Datennetzwerk 16 zu kommunizieren. Hierzu sind die Antriebssteuereinheit 210 und die Positionsverarbeitungseinheit 214 jeweils als eigenständige Kommunikationsteilnehmer an das Datennetzwerk 16 angeschlossen. Insbesondere sind die Antriebssteuereinheit 210 und die Positionsverarbeitungseinheit 214 jeweils dazu ausgebildet, an das Datennetzwerk 16 als Teilnehmer mit jeweils einer eigenen Netzwerkadresse angeschlossen zu sein. Für den jeweils eigenständigen Anschluss an das Datennetzwerk 16 kann sowohl die Antriebssteuereinheit 210, als auch die Positionsverarbeitungseinheit 214 die Anschalteinheit 212 aufweisen. Die teilnehmereigenen Netzwerkadressen können jeweils in den Anschalteinheiten 212 hinterlegt sein. Die Anschalteinheiten 212 können jeweils als EtherCAT IP cores ausgebildet sein.

Das Statormodul 2 kann, wie in Fig. 23 dargestellt, einen Stromsensor 302 und/oder einen Temperatursensor 304 umfassen. Das Statormodul 2 kann auch mehrere Stromsensoren 302 und/oder mehrere Temperatursensoren 304 umfassen. Die Stromsensoren 302 und/oder die Temperatursensoren 304 können auf dem Leistungsmodul 300 angeordnet sein. Insbesondere kann jede der Moduleinheiten 320, 322, 324, 326 des Leistungsmoduls 300 Stromsensoren 302 und/oder Temperatursensoren 304 umfassen. Die Stromsensoren 302 und/oder die Temperatursensoren 304 können alternativ oder zusätzlich auch auf dem Sensormodul 200 und/oder dem Anschlussmodul 100 angeordnet sein.

Der Stromsensor 302 ist dazu ausgebildet, eine Stromstärke eines in dem Statormodul 2 fließenden elektrischen Stroms zu erfassen und ein die Stromstärke repräsentierendes Stromsignal zu erzeugen. Beispielsweise kann der Stromsensor 302 die Stromstärke eines oder mehrerer der Antriebsströme erfassen. Der Stromsensor 302 kann auch die Stromstärke auf der Antriebsenergieleitung 128 erfassen. Der Temperatursensor 304 ist dazu ausgebildet, eine Temperatur des Statormoduls 2 zu erfassen und ein die erfasste Temperatur repräsentierendes Temperatursignal zu erzeugen. Die Temperatur kann beispielsweise an einer Leiterbahn oder einer elektronischen Komponente des Leistungsmoduls 300 und/oder des Sensormoduls 200 und/oder des Anschlussmoduls 100 erfasst werden.

Der Stromsensor 302 und/oder der Temperatursensor 304 des Leistungsmoduls 300 sind mit der auf dem Sensormodul 200 angeordneten Antriebssteuereinheit 210 über Sensorleitungen verbunden. Die Sensorleitungen sind als ein Teil der dritten Verbindungsleitung 230 zwischen dem Leistungsmodul 300 und dem Sensormodul 200 ausgebildet. Insbesondere kann das Sensormodul 200 mit jeder Moduleinheit 320, 322, 324, 326 über mindestens eine separate Sensorleitung verbunden sein. Die erste Steckverbindung mit dem ersten Koppelelement 231 und dem ersten Gegenelement 232 umfasst jeweils eine auf die erste Moduleinheit 320 führende Sensorleitung, die zweite Steckverbindung mit dem zweiten Koppelelement 233 und dem zweiten Gegenelement 234 umfasst jeweils eine auf die zweite Moduleinheit 322 führende Sensorleitung, die dritte Steckverbindung mit dem dritten Koppelelement 235 und dem dritten Gegenelement 236 umfasst jeweils eine auf die dritte Moduleinheit 324 führende Sensorleitung und die vierte Steckverbindung mit dem vierten Koppelelement 237 und dem vierten Gegenelement 238 umfasst jeweils eine auf die vierte Moduleinheit 326 führende Sensorleitung.

Ein auf dem Anschlussmodul 100 angeordneter Stromsensor und/oder ein auf dem Anschlussmodul 100 angeordneter Temperatursensor kann mit der auf dem Sensormodul 200 angeordneten Antriebssteuereinheit 210 ebenfalls über eine oder mehrere Sensorleitungen verbunden sein. Die Sensorleitungen können jeweils als Teil der ersten Verbindungsleitung 120 ausgebildet sein. Beispielsweise kann die erste Verbindungsleitung 120 neben den Leitern für die Datenleitung 132 separate Leiter für die Sensorleitungen umfassen.

Die Antriebssteuereinheit 210 ist dazu ausgebildet, die Stromsignale und/oder die Temperatursignale aus den Sensoren 302, 304 auszulesen. Beispielsweise kann die Antriebssteuereinheit 210 Eingänge aufweisen, welche mit den Sensoren 302, 304 zum Einlesen der Daten verbunden sind. Die Antriebssteuereinheit 210 ist dazu ausgebildet, die Stromsignale und/oder die Temperatursignale zu verarbeiten und/oder in Kommunikationsdaten für eine Übertragung der gemessenen Strom- und/oder Temperaturwerte über das Datennetzwerk 16 umzuwandeln.

Das Statormodul 2 ist dazu ausgebildet, eine Versorgungsenergie für den Betrieb elektronischer Komponenten des Statormoduls 2 bereitzustellen. Die Versorgungsenergie kann beispielsweise für den Betrieb der Positionserfassungseinheiten 206 und/oder der Positionsverarbeitungseinheit 214 und/oder der Antriebssteuereinheit 210 und/oder der Stromsensoren 302 und/oder der Temperatursensoren 304 bereitgestellt werden. Die Versorgungsenergie kann als eine Versorgungsspannung bereitgestellt werden. Die Versorgungsenergie kann als eine Gleichspannung mit einer Spannung von nicht mehr als 20V, insbesondere mit einer Spannung von 2,5V bis 15V, etwa mit einer Spannung von 5V oder 10V, bereitgestellt werden. Die Versorgungsenergie kann, wie die Antriebsenergie und die Betriebsenergie, als eine Kleinspannung (ELV), als eine Sicherheitskleinspannung (SELV) oder als eine Schutzkleinspannung (PELV) bereitgestellt werden.

Das Statormodul 2 kann dazu ausgebildet sein, die Versorgungsenergie aus der Betriebsenergie zu erzeugen. Das Statormodul 2 kann, wie in Fig. 23 dargestellt, eine Energieerzeugungseinheit 216 aufweisen, die die Versorgungsenergie aus der Betriebsenergie erzeugt. Die Energieerzeugungseinheit 216 kann beispielsweise als ein DC/DC-Wandler oder als ein Spannungswandler ausgebildet sein.

Das Statormodul 2 weist zur Bereitstellung der Versorgungsenergie eine Versorgungsleitung 250 auf. Insbesondere sind die mit der Versorgungsenergie versorgten elektronischen Komponenten, beispielsweise die Positionserfassungseinheiten 206 und/oder die Positionsverarbeitungseinheit 214 und/oder die Antriebssteuereinheit 210 und/oder der Stromsensor 302 und/oder der Temperatursensor 304, mit der Versorgungsleitung 250 elektrisch leitend verbunden. Außerdem ist die Energieerzeugungseinheit 216 mit der Versorgungsleitung 250 verbunden.

Die auf dem Sensormodul 200 angeordneten und mit der Versorgungsenergie versorgten elektronischen Komponenten, also insbesondere die Positionserfassungseinheiten 206 und/oder die Positionsverarbeitungseinheit 214 und/oder die Antriebssteuereinheit 210, werden von dem Leistungsmodul 300 aus mit der Versorgungsenergie versorgt. Insbesondere sind das Leistungsmodul 300 und das Sensormodul 200 zur Bereitstellung der Versorgungsenergie über die Versorgungsleitung 250 miteinander verbunden. Die Versorgungsleitung 250 ist von dem Leistungsmodul 300 aus auf das Sensormodul 200 und zu den auf dem Sensormodul 200 angeordneten elektronischen Komponenten geführt.

Die Versorgungsleitung 250 weist einen ersten Teil 251 auf. Der erste Teil 251 der Versorgungsleitung 250 ist von dem Leistungsmodul 300 auf das Sensormodul 200 geführt. Insbesondere ist der erste Teil 251 der Versorgungsleitung 250 von dem Leistungsmodul 300 durch die Oberseite 551 des Modulgehäuses 500 und des Gehäusedeckels 510 auf das Sensormodul 200 in dem Modulgehäuse 500 geführt.

Wie in Fig. 23 dargestellt ist, kann die Versorgungsenergie von dem Sensormodul 200 erzeugt werden. Insbesondere kann die Energieerzeugungseinheit 216 zur Erzeugung der Versorgungsenergie auf dem Sensormodul 200 angeordnet sein. Zur Bereitstellung der Versorgungsenergie ist dann die Energieerzeugungseinheit 216 über den ersten Teil 251 der Versorgungsleitung 250 mit dem Leistungsmodul 300 verbunden. Der erste Teil 251 der Versorgungsleitung 250 kann auf dem Leistungsmodul 300 an die Betriebsenergieleitung 129 angeschlossen sein. Auf dem Sensormodul 200 kann der erste Teil 251 der Versorgungsleitung 250 an einen Eingang der Energieerzeugungseinheit 216 angeschlossen sein. In diesem Fall führt der erste Teil 251 der Versorgungsleitung 250 die Betriebsenergie.

Der erste Teil 251 der Versorgungsleitung 250 kann als ein Teil der dritten Verbindungsleitung 230 ausgebildet sein. Der erste Teil 251 der Versorgungsleitung 250 kann über die erste Teilleitung und/oder die zweite Teilleitung und/oder die dritte Teilleitung und/oder die vierte Teilleitung der dritten Verbindungsleitung 230 geführt sein. Insbesondere kann der erste Teil 251 der Versorgungsleitung 250 ausschließlich über die auf die zweite Moduleinheit 322 führende zweite Teilleitung geführt sein. Der erste Teil 251 der Versorgungsleitung 250 kann auf der zweiten Moduleinheit 322 mit der von der Anschlusseinheit 100 auf die zweite Moduleinheit 322 geführten Betriebsenergieleitung 129 verbunden sein.

Den auf dem Sensormodul 200 angeordneten und mit der Versorgungsenergie versorgten elektronischen Komponenten wird die Versorgungsenergie über einen die Versorgungsenergie führenden zweiten Teil 252 der Versorgungsleitung 250 zugeführt. Insbesondere sind die auf dem Sensormodul 200 angeordneten und mit der Versorgungsenergie versorgten elektronischen Komponenten an den zweiten Teil 252 der Versorgungsleitung 250 angeschlossen. Der zweite Teil 252 der Versorgungsleitung 250 ist auf dem Sensormodul 200 ausgebildet. Der zweite Teil 252 der Versorgungsleitung 250 kann an die auf dem Sensormodul 200 angeordnete Energieerzeugungseinheit 216 angeschlossen sein, etwa an einen die Versorgungsenergie bereitstellenden Ausgang der Energieerzeugungseinheit 216. Die auf dem Sensormodul 200 angeordneten und mit der Versorgungsenergie versorgten elektronischen Komponenten sind über den zweiten Teil 252 der Versorgungsleitung 250 mit der Energieerzeugungseinheit 216 elektrisch leitend verbunden.

Neben den auf dem Sensormodul 200 angeordneten elektronischen Komponenten können auch auf dem Leistungsmodul 300 angeordnete elektronische Komponenten des Statormoduls 2, insbesondere die an dem Leistungsmodul 300 angeordneten Stromsensoren 302 und/oder Temperatursensoren 304, an die Versorgungsleitung 250 angeschlossen sein. Den auf dem Leistungsmodul 300 angeordneten und mit der Versorgungsenergie versorgten elektronischen Komponenten wird die Versorgungsenergie über einen dritten Teil 253 der Versorgungsleitung 250 zugeführt. Insbesondere sind die auf dem Leistungsmodul 300 angeordneten elektronischen Komponenten an den dritten Teil 253 der Versorgungsleitung 250 angeschlossen.

Der dritte Teil 253 der Versorgungsleitung 250 ist von dem Leistungsmodul 300 auf das Sensormodul 200 geführt. Insbesondere ist der dritte Teil 253 der Versorgungsleitung 250 von dem Leistungsmodul 300 durch die Oberseite 551 des Modulgehäuses 500 und des Gehäusedeckels 510 auf das Sensormodul 200 in dem Modulgehäuse 500 geführt. Auf dem Sensormodul 200 kann der dritte Teil 253 der Versorgungsleitung 250, wie in Fig. 23 dargestellt, mit dem zweiten Teil 252 der Versorgungsleitung 250 elektrisch leitend verbunden sein. Außerdem kann der dritte Teil 253 der Versorgungsleitung 250 mit der auf dem Sensormodul 200 angeordneten Energieerzeugungseinheit 216 elektrisch leitend verbunden sein.

Der dritte Teil 253 der Versorgungsleitung 250 kann als ein Teil der dritten Verbindungsleitung 230 ausgebildet sein. Der dritte Teil 253 der Versorgungsleitung 250 kann über die erste Teilleitung und/oder die zweite Teilleitung und/oder die dritte Teilleitung und/oder die vierte Teilleitung der dritten Verbindungsleitung 230 geführt sein. Insbesondere kann der dritte Teil 253 der Versorgungsleitung 250 vier Stränge umfassen, wobei die Teilleitungen der dritten Verbindungsleitung 230 jeweils einen der Stränge umfassen. Ein erster Strang des dritten Teils 253 der Versorgungsleitung 250 kann von der ersten Teilleitung der dritten Verbindungsleitung 230, ein zweiter Strang des dritten Teils 253 der Versorgungsleitung 250 von der zweiten Teilleitung, ein dritter Strang des dritten Teils 253 der Versorgungsleitung 250 von der dritten Teilleitung und ein vierter Strang des dritten Teils 253 der Versorgungsleitung 250 von der vierten Teilleitung umfasst sein.

An die jeweils in einer der Teilleitungen der dritten Verbindungsleitung 230 geführten Stränge des dritten Teils 253 der Versorgungsleitung 250 sind jeweils diejenigen elektronischen Komponenten angeordnet, die auf der an die betreffende Teilleitung der dritten Verbindungsleitung 230 angeschlossenen Moduleinheit 320, 322, 324, 326 angeordnet sind. Der erste Strang des dritten Teils 253 der Versorgungsleitung 250 ist an die auf der ersten Moduleinheit 320 angeordneten und mit der Versorgungsenergie versorgten Komponenten angeschlossen, der zweite Strang des dritten Teils 253 der Versorgungsleitung 250 ist an die auf der zweiten Moduleinheit 322 angeordneten und mit der Versorgungsenergie versorgten Komponenten angeschlossen, der dritte Strang des dritten Teils 253 der Versorgungsleitung 250 ist an die auf der dritten Moduleinheit 324 angeordneten und mit der Versorgungsenergie versorgten Komponenten angeschlossen und der vierte Strang des dritten Teils 253 der Versorgungsleitung 250 ist an die auf der vierten Moduleinheit 326 angeordneten und mit der Versorgungsenergie versorgten Komponenten angeschlossen.

Alternativ kann der dritte Teil 253 der Versorgungsleitung 250 auch nur über eine der Teilleitungen der dritten Verbindungsleitung 250 mit einer der Moduleinheiten 320, 322, 324, 326 des Leistungsmoduls 300 verbunden sein. Der dritte Teil 253 der Versorgungsleitung 250 kann dann von der betreffenden Moduleinheit 320, 322, 324, 326 über die Verbindungsmittel 321, 323, 325, 327 auf die übrigen Moduleinheiten 320, 322, 324, 326 geführt und dort mit den mit der Versorgungsenergie versorgten elektrischen Komponenten verbunden sein.

Bei einer alternativen Ausführungsform des Statormoduls 2 kann auch das Leistungsmodul 300 dazu ausgebildet sein, die Versorgungsenergie zu erzeugen. Insbesondere kann die Energieerzeugungseinheit 216 auch auf dem Leistungsmodul 300 angeordnet sein. Die Energieerzeugungseinheit 216 kann beispielsweise auf der mit der zweiten Verbindungsleitung 125 verbundenen zweiten Moduleinheit 322 des Leistungsmoduls 300 angeordnet sein. Die auf dem Leistungsmodul 300 angeordneten Energieerzeugungseinheit 216 kann über eine auf dem Leistungsmodul 300 angeordnete Zuleitung direkt mit der Betriebsenergieleitung 129 auf dem Leistungsmodul 300 verbunden sein. Die Zuleitung führt dann die Betriebsenergie. Der erste Teil 251 der Versorgungsleitung 250 kann dann an den die Versorgungsenergie bereitstellenden Ausgang der Energieerzeugungseinheit 216 angeschlossen sein und die Versorgungsenergie führen. Auf dem Sensormodul 200 kann der zweite Teil 252 und gegebenenfalls der dritte Teil 253 der Versorgungsleitung 250 direkt an den von dem Leistungsmodul 300 auf das Sensormodul 200 geführten ersten Teil 251 der Versorgungsleitung 250 angeschlossen sein.

Alternativ können die auf dem Leistungsmodul 300 angeordneten und mit der Versorgungsenergie versorgten elektronischen Komponenten auch direkt auf dem Leistungsmodul 300 an den ersten Teil 251 der Versorgungsleitung 250 angeschlossen sein. Dabei kann der dritte Teil 253 der Versorgungsleitung 250 auf dem Leistungsmodul 300 ausgeführt sein. Beispielsweise können die auf der zweiten Moduleinheit 322 angeordneten und mit der Versorgungsenergie versorgten elektronischen Komponenten über den dritten Teil 253 der Versorgungsleitung 250 direkt an die ebenfalls auf der zweiten Moduleinheit 322 angeordnete Energieerzeugungseinheit 216 angeschlossen sein. Der dritte Teil 253 der Versorgungsleitung 250 kann zur Anbindung der auf der ersten Moduleinheit 320 angeordneten und mit der Versorgungsenergie versorgten elektronischen Komponenten über das erste Verbindungsmittel 321, zur Anbindung der auf der dritten Moduleinheit 324 angeordneten und mit der Versorgungsenergie versorgten elektronischen Komponenten über das zweite Verbindungsmittel 323 und zur Anbindung der auf der vierten Moduleinheit 326 angeordneten und mit der Versorgungsenergie versorgten elektronischen Komponenten über das erste und vierte Verbindungsmittel 321, 327 oder das zweite und dritte Verbindungsmittel 323, 325 geführt sein.

Bei einer weiteren alternativen Ausführungsform des Statormoduls 2 kann auch das Anschlussmodul 100 dazu ausgebildet sein, die Versorgungsenergie zu erzeugen. Insbesondere kann die Energieerzeugungseinheit 216 auf dem Anschlussmodul 100 angeordnet sein oder die Umwandeleinheit 102 dazu ausgebildet sein, die Versorgungsenergie bereitzustellen. Beispielsweise kann das Anschlussmodul 100 oder die Energieerzeugungseinheit 216 oder die Umwandeleinheit 102 dazu ausgebildet sein, die Versorgungsenergie aus der über das erste Anschlussmittel 11 bereitgestellten elektrischen Energie zu erzeugen. Die Umwandeleinheit 102 kann hierzu einen Gleichrichter und/oder einen Transformator umfassen.

Wenn die Versorgungsenergie auf dem Anschlussmodul 100 erzeugt wird, kann der erste Teil 251 der Versorgungsleitung 250, wie es bereits im Zusammenhang mit Betriebsenergieleitung 129 beschrieben wurde, von dem Leistungsmodul 300 auf das Anschlussmodul 100 geführt sein. Dabei kann der erste Teil 251 der Versorgungsleitung 250 von dem Leistungsmodul 300, durch die Oberseite 551 des Modulgehäuses 500, durch das Innere des Modulgehäuses 500 und durch die Unterseite 552 des Modulgehäuses 500 auf das Anschlussmodul 100 geführt sein. Insbesondere kann der durch das Modulgehäuse 500 geführte erste Teil 251 der Versorgungsleitung 250 elektrisch isoliert von dem Sensormodul 200 ausgeführt sein.

Bei einer auf dem Anschlussmodul 100 erzeugten Versorgungsenergie können die auf dem Leistungsmodul 300 angeordneten und mit der Versorgungsenergie versorgten elektronischen Komponenten, sowie die auf dem Sensormodul 200 angeordneten und mit der Versorgungsenergie versorgten elektronischen Komponenten auf die gleiche Weise an die Versorgungsleitung 250 angeschlossen sein, wie es im Zusammenhang mit der auf dem Leistungsmodul 300 erzeugten Versorgungsenergie beschrieben wurde.

Das Anschlussmodul 100 kann auch dazu ausgebildet sein, die Versorgungsenergie aus einer weiteren externen Energiequelle, die dem Anschlussmodul 100 neben der über das erste Anschlussmittel 11 bereitgestellten elektrischen Energie zugeführt wird, zu erzeugen. Beispielsweise kann die Versorgungsenergie zusammen mit der Betriebsenergie aus einer extern zugeführten Versorgungsspannung erzeugt werden. Die Versorgungsenergie und die Betriebsenergie können aber auch jeweils separat durch zwei getrennte weitere Umwandeleinheiten oder die Umwandeleinheit 102 und die Energieerzeugungseinheit 216 zur Verfügung gestellt werden.

Die Betriebsenergie für die Stromerzeugungseinheiten 306 und die Versorgungsenergie für die elektronischen Komponenten des Statormoduls 2 können auch mittels einer einzelnen Energiequelle, beispielsweise mittels einer einzelnen Spannungsquelle, erzeugt werden. Insbesondere kann der erste Teil 251 der Versorgungsleitung 250 zusammen mit der Betriebsenergieleitung 129 auf gemeinsamen, zwischen dem Leistungsmodul 300 und dem Anschlussmodul 100 geführten Leitern ausgeführt sein und an die gemeinsame Energiequelle angeschlossen sein.

Bei alternativen Ausführungsformen des Statormoduls 2 können die mit der Versorgungsenergie versorgten elektronischen Komponenten über die Versorgungsleitung 250 auch direkt und ohne die Energieerzeugungseinheit 216 an die Betriebsenergieleitung 129 angeschlossen sein. In diesem Fall wird mit der Betriebsenergie auch zugleich die Versorgungsenergie bereitgestellt und die Betriebsenergieleitung bildet zugleich einen durch das Modulgehäuse 500 geführten und von dem Sensormodul 200 in dem Modulgehäuse 500 isoliert ausgebildeten Teil des ersten Teils 251 der Versorgungsleitung 250.

Insgesamt kann das Sensormodul 200 damit ausschließlich über die zwischen dem Leistungsmodul 300 und dem Sensormodul 200 angeordnete dritte Verbindungsleitung 230 mit der für den Betrieb der elektronischen Komponenten des Sensormoduls 200 benötigten Versorgungsenergie versorgt werden. Ebenso kann eine Masseverbindung zwischen dem Anschlussmodul 100 und dem Sensormodul 200 ausschließlich über die zweite Verbindungsleitung 125, das Leistungsmodul 300 und die dritte Verbindungsleitung 230 bestehen. Insbesondere kann eine Masseverbindung zwischen der Umwandeleinheit 102 und der Antriebssteuereinheit 210 und/oder der Positionsverarbeitungseinheit 214 und/oder den Positionserfassungseinheiten 206 ausschließlich über die zweite Verbindungsleitung 125, das Leistungsmodul 300 und die dritte Verbindungsleitung 230 bestehen. Die erste Verbindungsleitung 120 zwischen dem Anschlussmodul 100 und dem Sensormodul 200 kann elektrisch isoliert von dem Massepotential auf dem Anschlussmodul 100 und/oder dem Massepotential auf dem Sensormodul 200 ausgebildet sein.

Bei dem Statormodul 2 besteht eine direkte elektrische Verbindung zwischen dem an die externe Energieversorgungsleitung 10 angeschlossenen Anschlussmodul 100 an der Unterseite 552 des Modulgehäuses 500 und dem auf der Oberseite 551 des Modulgehäuses 500 angeordneten Leistungsmodul 300 mit den Stromerzeugungseinheiten 306. Diese direkte elektrische Verbindung wird über die zweite Verbindungsleitung 125 realisiert. Damit kann die für die Erzeugung der Antriebsströme benötigte elektrische Energie direkt und ohne Umweg über weitere Module der Statoreinheit 2, insbesondere ohne Umweg über das Sensormodul 200, an die Stromerzeugungseinheiten 306 geleitet werden. Die zweite Verbindungsleitung 125 kann auf einfache Art und Weise dazu ausgelegt sein, hohe Stromstärken zu übertragen. Bei einer direkten Weiterleitung der Antriebsenergie von dem Anschlussmodul 100 zu den Stromerzeugungseinheiten 306 können elektrische Verluste besonders klein gehalten werden.

Eine Zuführung der für den Betrieb der elektronischen Komponenten des Sensormoduls 200 benötigten elektrischen Energie über das Leistungsmodul 300 ermöglicht es, neben der Masseverbindung über das Leistungsmodul 300 und die zweite Verbindungsleitung 125 auf eine zusätzliche weitere Masseverbindung zwischen dem Anschlussmodul 100 und dem Sensormodul 200 zu verzichten. Dadurch wird eine Störung der elektronischen Komponenten des Sensormoduls 200 und/oder des Leistungsmoduls 300 durch Ausbildung einer Masseschleife (ground loop) verhindert.

Bei dem Statormodul 2 sind nacheinander zunächst die Statoreinheit 400, dann das Leistungsmodul 300, dann das Sensormodul 200 und schließlich das Anschlussmodul 100 in der vertikalen Richtung 7 übereinander angeordnet. Insbesondere ist das Leistungsmodul 300 in der vertikalen Richtung 7 über dem Sensormodul 200 angeordnet. Bei alternativen Ausführungsformen des Statormoduls 2 kann das Leistungsmodul 300 in der vertikalen Richtung 7 auch unter dem Sensormodul angeordnet sein. Beispielsweise kann das Leistungsmodul 300 an der Unterseite 552 des Modulgehäuses 500 angeordnet sein. Die vierte Verbindungsleitung 310 kann dann, analog zu der Antriebsenergieleitung 128 von der Unterseite 552 des Modulgehäuses 500 durch das Innere des Modulgehäuses 500 an die Oberseite 551 des Modulgehäuses 500 und an die Statoreinheit 400 geführt sein. Die vierte Verbindungsleitung 310 kann dann elektrisch isoliert von dem in dem Inneren des Modulgehäuses 500 angeordneten Sensormodul 200 ausgebildet sein.

Bei einer Anordnung des Leistungsmoduls 300 unter dem Sensormodul 200 kann die vierte Verbindungsleitung 310 anstatt als eine Pressfitverbindung als eine Kabelverbindung ausgebildet sein. Wie bei dem Statormodul 2, kann die vierte Verbindungsleitung 310 auch bei einer Anordnung des Leistungsmoduls 300 unterhalb des Sensormoduls 200 die Statoreinheit 400 an der entlang der Mittellinien ausgebildeten kreuzförmigen Kontaktanordnung 420 kontaktieren.

Bei dem Statormodul 2 sind die durch das Anschlussmodul 100, das Sensormodul 200, das Leistungsmodul 300 und die Statoreinheit 400 gebildeten Einzelmodule jeweils als flache in der ersten und zweiten Richtung 5, 6 ausgedehnte Platten ausgebildet. Indem die plattenförmigen Einzelmodule in der vertikalen Richtung 7 übereinander angeordnet sind, kann eine besonders flache Bauform des Statormoduls 2 realisiert werden.

Bei dem Statormodul 2 sind das Anschlussmodul 100, das Sensormodul 200 und das Leistungsmodul 300 jeweils derart bemessen und ausgeformt, dass sich weder das Anschlussmodul 100, noch das Sensormodul 200, noch das Leistungsmodul 300 in der ersten Richtung 5 und in der zweiten Richtung 6 vollständig über die gesamte Breite des Statormoduls 2 erstreckt und in der ersten und zweiten Richtung 5, 6 die gesamte Querschnittsfläche des Statormoduls 2 abdeckt. Die lediglich unvollständige Abdeckung der Querschnittsfläche kann, wie bei dem Leistungsmodul 300, durch eine kreuzförmige Form und die aus der kreuzförmigen Form resultierenden Freiräume 61, 62, 63, 64 erreicht werden. Wie bei dem Sensormodul 200, kann die unvollständige Abdeckung der Querschnittsfläche durch die in dem Randbereich 242 angeordneten Gehäusedurchlässe 240 erreicht werden. Wie bei dem Anschlussmodul 100, kann die unvollständige Abdeckung der Querschnittsfläche dadurch erreicht werden, dass die Abmessungen eines Moduls in der ersten und/oder zweiten Richtung 5, 6 kleiner sind als die Abmessungen, die das Statormodul 2 in der Ebene des betreffenden Moduls aufweist.

Die lediglich unvollständige Abdeckung der Querschnittsflächen des Statormoduls 2 in den Ebenen des Anschlussmoduls 100, des Sensormoduls 200 und des Leistungsmoduls 300 ermöglicht es, eine wärmleitende Verbindung zwischen der Statoreinheit 400 an der Oberseite 8 des Statormoduls 2 oder der Bodenfläche 401 der Statoreinheit und der Auflagefläche 503 an der Unterseite 9 des Statormoduls 2 zu realisieren. Die wärmeleitende Verbindung kann dabei über großflächige Kontaktflächen hergestellt sein.

### Bezugszeichenliste

- 1: Planarantriebssystem
- 2: Statormodul
- 3: Statorfläche
- 5: erste Richtung
- 6: zweite Richtung
- 7: vertikale Richtung
- 8: Oberseite des Statormoduls
- 9: Unterseite des Statormoduls
- 10: Energieversorgungsleitung
- 11: Anschlussmittel
- 12: Eingangsleitung
- 13: Anschlussmittel
- 14: Ausgangsleitung
- 15: Anschlussmittel
- 16: Datennetzwerk
- 20: Läufer
- 30: Außenkante der Statorfläche
- 32: Seitenfläche der Statoreinheit
- 34: Seitenfläche des Modulgehäuses
- 36: Seitenfläche des Statormoduls
- 41: erste Außenkante der Statorfläche
- 42: zweite Außenkante der Statorfläche
- 43: dritte Außenkante der Statorfläche
- 44: vierte Außenkante der Statorfläche
- 50: Planarantriebssystem
- 61: erster Freiraum
- 62: zweiter Freiraum
- 63: dritter Freiraum
- 64: vierter Freiraum
- 100: Anschlussmodul
- 102: Umwandeleinheit
- 104: Energiespeicher
- 106: Isoliereinheit
- 108: Übertragungseinheit
- 110: Modulabdeckung
- 111: Durchbruch
- 112: Lüfter
- 120: erste Verbindungsleitung
- 121: erstes Koppelelement
- 122: zweites Koppelelement
- 125: zweite Verbindungsleitung
- 126: erstes Koppelelement
- 127: zweites Koppelelement
- 128: Antriebsenergieleitung
- 129: Betriebsenergieleitung
- 130: Zwischenkreis
- 131: Zwischenkreisspeicher
- 132: Datenleitung
- 133: Zwischenkreisspannung
- 161: erste Außenkante
- 162: zweite Außenkante
- 163: erste Innenkante
- 164: zweite Innenkante
- 171: erste Außenkante
- 172: zweite Außenkante
- 173: erste Innenkante
- 174: zweite Innenkante
- 181: erste Außenkante
- 182: zweite Außenkante
- 183: erste Innenkante
- 184: zweite Innenkante
- 191: erste Außenkante
- 192: zweite Außenkante
- 193: erste Innenkante
- 194: zweite Innenkante
- 200: Sensormodul
- 202: erste Verarbeitungseinheit
- 204: zweite Verarbeitungseinheit
- 206: Positionserfassungseinheit
- 210: Antriebssteuereinheit
- 212: Anschalteinheit
- 214: Positionsverarbeitungseinheit
- 216: Energieerzeugungseinheit
- 220: Verbindungsausschnitt
- 230: dritte Verbindungsleitung
- 231: erstes Koppelelement
- 232: erstes Gegenelement
- 233: zweites Koppelelement
- 234: zweites Gegenelement
- 235: drittes Koppelelement
- 236: drittes Gegenelement
- 237: viertes Koppelelement
- 238: viertes Gegenelement
- 239: Steuerleitung
- 240: Gehäusedurchlass
- 241: Steg
- 242: Randbereich
- 243: Mittenbereich
- 250: Versorgungsleitung
- 251: erster Teil
- 252: zweiter Teil
- 253: Zuleitung
- 265: Isolationsschicht
- 300: Leistungsmodul
- 302: Stromsensor
- 304: Temperatursensor
- 306: Stromerzeugungseinheit
- 310: vierte Verbindungsleitung
- 311: erste Anschlussanordnung
- 312: zweite Anschlussanordnung
- 313: dritte Anschlussanordnung
- 314: vierte Anschlussanordnung
- 315: erstes Kontaktmittel
- 316: zweites Kontaktmittel
- 317: drittes Kontaktmittel
- 318: viertes Kontaktmittel
- 320: erste Moduleinheit
- 321: erstes Verbindungsmittel
- 322: zweite Moduleinheit
- 323: zweites Verbindungsmittel
- 324: dritte Moduleinheit
- 325: drittes Verbindungsmittel
- 326: vierte Moduleinheit
- 327: viertes Verbindungsmittel
- 330: Antriebsstromleitung
- 400: Statoreinheit
- 401: Bodenfläche
- 402: Spulenleiter
- 411: erster Statorsektor
- 412: zweiter Statorsektor
- 413: dritter Statorsektor
- 414: vierter Statorsektor
- 420: kreuzförmige Kontaktanordnung
- 421: erste Kontaktstruktur
- 422: zweite Kontaktstruktur
- 423: dritte Kontaktstruktur
- 424: vierte Kontaktstruktur
- 430: erste Statorlage
- 431: zweite Statorlage
- 432: dritte Statorlage
- 433: vierte Statorlage
- 500: Modulgehäuse
- 503: Auflagefläche
- 510: Gehäusedeckel
- 511: Aussparung
- 512: Rand an Unterseite des Gehäusedeckels
- 513: Rand an Oberseite des Gehäusedeckels
- 514: Bauraum für Leistungsmodul
- 516: Einfüllöffnung
- 517: weitere Einfüllöffnungen
- 520: Gehäuseboden
- 521: erste Verbindungsöffnung
- 522: zweite Verbindungsöffnung
- 523: dritte Verbindungsöffnung
- 524: vierte Verbindungsöffnung
- 525: fünfte Verbindungsöffnung
- 526: sechste Verbindungsöffnung
- 527: siebte Verbindungsöffnung
- 528: Bodenfläche
- 529: Aussparung
- 530: Wärmeleitstruktur
- 534: Oberfläche des Gehäusebodens
- 540: Wärmeleitelement
- 541: Deckfläche
- 542: Randbereich
- 543: Mittenbereich
- 544: Zwischenraum
- 551: Oberseite des Modulgehäuses
- 552: Unterseite des Modulgehäuses

## Patentansprüche

1. Statormodul (2) zum elektromagnetischen Antreiben eines Läufers (20) eines Planarantriebssystems (1), wobei das Statormodul (2) aufweist , ein (100), das dazu ausgebildet ist, eine Antriebsenergie bereitzustellen, ein Leistungsmodul (300), das eine Stromerzeugungseinheit (306) aufweist, die dazu ausgebildet ist, einen den Läufer (20) antreibenden Antriebsstrom aus der Antriebsenergie zu erzeugen, eine Statoreinheit (400), welche einen mit dem Antriebsstrom beaufschlagbaren Spulenleiter (402) zur Erzeugung eines den Läufer (20) antreibenden Magnetfeldes aufweist, und ein Sensormodul (200), das eine Positionserfassungseinheit (206) aufweist, die dazu ausgebildet ist, eine Position des Läufers (20) über der Statoreinheit (400) zu erfassen,
**dadurch gekennzeichnet, dass**
das Sensormodul (200) in einem Modulgehäuse (500) angeordnet ist und das Modulgehäuse (500) das Sensormodul (200) umschließt,
wobei die Statoreinheit (400) und das unter der Statoreinheit angeordnete Leistungsmodul (300) an einer Oberseite (551) auf einem Gehäusedeckel (510) des Modulgehäuses (500) angeordnet sind,
wobei das Anschlussmodul (100) an einer der Oberseite (551) gegenüberliegenden Unterseite (552) auf einem Gehäuseboden (520) des Modulgehäuses (500) angeordnet ist,
wobei die Stromerzeugungseinheit (306) des Leistungsmoduls (300) und das Anschlussmodul (100) über eine Antriebsenergieleitung (128) zur Übertragung der bereitgestellten Antriebsenergie verbunden sind,
wobei die Antriebsenergieleitung (128) durch das Modulgehäuse (500) führt, sich von dem Anschlussmodul (100) durch den Gehäuseboden (520) in das Modulgehäuse (500), durch einen Verbindungsausschnitt (220) des Sensormoduls (200) und durch den Gehäusedeckel (510) zu dem Leistungsmodul (300) erstreckt und von dem Sensormodul (200) in dem Modulgehäuse (500) elektrisch isoliert ausgebildet ist.

2. Statormodul (2) nach Anspruch 1,
wobei das Anschlussmodul (100) dazu ausgebildet ist, der Stromerzeugungseinheit (306) eine für die Erzeugung des Antriebsstroms aus der Antriebsenergie benötigte Betriebsenergie bereitzustellen,
wobei das Anschlussmodul (100) und die Stromerzeugungseinheit (306) über eine Betriebsenergieleitung (129) zur Übertragung der bereitgestellten Betriebsenergie verbunden sind,
wobei die Betriebsenergieleitung (129) durch das Modulgehäuse (500) führt und von dem Sensormodul (200) in dem Modulgehäuse (500) elektrisch isoliert ausgebildet ist.

3. Statormodul (2) nach einem der vorhergehenden Ansprüche,
wobei das Statormodul (2) dazu ausgebildet ist, eine für den Betrieb der Positionserfassungseinheit (206) benötigte Versorgungsenergie bereitzustellen,
wobei das Leistungsmodul (300) und das Sensormodul (200) zur Bereitstellung der Versorgungsenergie über eine Versorgungsleitung (250) miteinander verbunden sind,
wobei ein Teil (251) der Versorgungsleitung (250) von dem Leistungsmodul (300) durch die Oberseite (551) des Modulgehäuses (500) auf das Sensormodul (200) in dem Modulgehäuse (500) geführt ist.

4. Statormodul (2) nach einem der vorhergehenden Ansprüche,
wobei das Sensormodul (200) eine Antriebssteuereinheit (210) umfasst, die dazu ausgebildet ist, ein Steuersignal zur Steuerung der Stromerzeugungseinheit (306) zu erzeugen,
wobei die Antriebssteuereinheit (210) zur Übertragung des Steuersignals über eine durch die Oberseite (551) des Modulgehäuses (500) geführte Steuerleitung (239) mit der Stromerzeugungseinheit (306) des Leistungsmoduls (300) verbunden ist.

5. Statormodul (2) nach einem der vorhergehenden Ansprüche,
wobei das Anschlussmodul (100) dazu ausgebildet ist, an ein externes Datennetzwerk (16) angeschlossen zu werden,
wobei das Sensormodul (200) eine Positionsverarbeitungseinheit (214) aufweist, welche dazu ausgebildet ist, eine von der Positionserfassungseinheit (206) gewonnene Positionsinformation des Läufers (20) über das externe Datennetzwerk (16) auszutauschen,
wobei das Anschlussmodul (100) und das externe Datennetzwerk (16) für den Austausch der Positionsinformation über eine Datenleitung (132) mit der Positionsverarbeitungseinheit (214) des Sensormoduls (200) verbunden sind,
wobei die Datenleitung (132) von dem Anschlussmodul (100) durch die Unterseite (552) des Modulgehäuses (500) auf das Sensormodul (200) geführt ist.

6. Statormodul (2) nach den Ansprüchen 4 und 5,
wobei die Antriebssteuereinheit (210) dazu ausgebildet ist, über die Datenleitung (132) und das externe Datennetzwerk (16) Steuerdaten zur Ansteuerung der Stromerzeugungseinheit (306) auszutauschen,
wobei die Antriebssteuereinheit (210) und die Positionsverarbeitungseinheit (214) dazu ausgebildet sind, jeweils als eigenständige Kommunikationsteilnehmer über das externe Datennetzwerk (16) zu kommunizieren.

7. Statormodul (2) nach einem der vorhergehenden Ansprüche
mit einem Zwischenkreis (130), um die Antriebsenergie mittels einer Zwischenkreisspannung (133) als Gleichspannung bereitzustellen,
wobei die Stromerzeugungseinheit (306) an den Zwischenkreis (130) angeschlossen und dazu ausgebildet ist, als ein Wechselrichter den Antriebsstrom aus der Zwischenkreisspannung (133) zu erzeugen,
wobei der Zwischenkreis (130) auf dem Leistungsmodul (300), der Antriebsenergieleitung (128) und dem Anschlussmodul (100) angeordnet ist.

8. Statormodul (2) nach Anspruch 7,
wobei das Anschlussmodul (100) eine Umwandeleinheit (102) umfasst,
wobei die Umwandeleinheit (102) an den Zwischenkreis (130) angeschlossen und dazu ausgebildet ist, als ein Gleichrichter die Zwischenkreisspannung (133) aus einer über eine externe Energieversorgungsleitung (10) bereitgestellten elektrischen Versorgungsenergie zu erzeugen.

## Claims

1. Stator module (2) for electromagnetically driving a rotor (20) of a planar drive system (1), wherein the stator module (2) has
a connection module (100) which is designed to provide drive energy,
a power module (300) which has a current-generating unit (306) which is designed to generate a drive current, which drives the rotor (20), from the drive energy,
a stator unit (400) which has a coil conductor (402), to which the drive current can be applied, for generating a magnetic field which drives the rotor (20), and a sensor module (200) which has a position-detecting unit (206) which is designed to detect a position of the rotor (20) over the sensor unit (400),
**characterized in that**
the sensor module (200) is arranged in a module housing (500) and the module housing (500) encloses the sensor module (200),
wherein the stator unit (400) and the power module (300), which is arranged beneath the stator unit, are arranged on a top side (551) on a housing cover (510) of the module housing (500),
wherein the connection module (100) is arranged on a bottom side (552) on a housing base (520) of the module housing (500), which bottom side is situated opposite the top side (551),
wherein the current-generating unit (306) of the power module (300) and the connection module (100) are connected via a drive energy line (128) for transmitting the provided drive energy,
wherein the drive energy line (128) passes through the module housing (500), extends from the connection module (100), through the housing base (520), into the module housing (500), through a connecting cutout (220) of the sensor module (200) and through the housing cover (510), to the power module (300) and is designed in a manner electrically insulated from the sensor module (200) in the module housing (500).

2. Stator module (2) according to Claim 1,
wherein the connection module (100) is designed to provide the current-generating unit (306) with operating energy which is required for generating the drive current from the drive energy,
wherein the connection module (100) and the current-generating unit (306) are connected via an operating energy line (129) for transmitting the provided operating energy,
wherein the operating energy line (129) passes through the module housing (500) and is designed in a manner electrically insulated from the sensor module (200) in the module housing (500).

3. Stator module (2) according to either of the preceding claims,
wherein the stator module (2) is designed to provide supply energy which is required for operating the position-detecting unit (206),
wherein the power module (300) and the sensor module (200) are connected to one another via a supply line (250) for providing the supply energy,
wherein a portion (251) of the supply line (250) is passed from the power module (300), through the top side (551) of the module housing (500), to the sensor module (200) in the module housing (500).

4. Stator module (2) according to one of the preceding claims,
wherein the sensor module (200) comprises a drive control unit (210) which is designed to generate a control signal for controlling the current-generating unit (306),
wherein the drive control unit (210) is connected to the current-generating unit (306) of the power module (300) via a control line (239), which is passed through the top side (551) of the module housing (500), for transmitting the control signal.

5. Stator module (2) according to one of the preceding claims,
wherein the connection module (100) is designed to be connected to an external data network (16), wherein the sensor module (200) has a position-processing unit (214) which is designed to exchange an item of position information of the rotor (20), which item of position information is obtained from the position-detecting unit (206), via the external data network (16),
wherein the connection module (100) and the external data network (16) are connected to the position-processing unit (214) of the sensor module (200) via a data line (132) for exchanging the item of position information,
wherein the data line (132) is passed from the connection module (100), through the bottom side (552) of the module housing (500), to the sensor module (200).

6. Stator module (2) according to Claims 4 and 5,
wherein the drive control unit (210) is designed to exchange control data for actuating the current-generating unit (306) via the data line (132) and the external data network (16),
wherein the drive control unit (210) and the position-processing unit (214) are designed to communicate via the external data network (16) as independent communication subscribers in each case.

7. Stator module (2) according to one of the preceding claims,
comprising an intermediate circuit (130) in order to provide the drive energy as DC voltage by means of an intermediate circuit voltage (133),
wherein the current-generating unit (306) is connected to the intermediate circuit (130) and is designed to generate the drive current from the intermediate circuit voltage (133) as an inverter,
wherein the intermediate circuit (130) is arranged on the power module (300), the drive energy line (128) and the connection module (100).

8. Stator module (2) according to Claim 7,
wherein the connection module (100) comprises a conversion unit (102),
wherein the conversion unit (102) is connected to the intermediate circuit (130) and is designed to generate the intermediate circuit voltage (133) from electrical supply energy, which is provided via an external energy supply line (10), as a rectifier.

## Revendications

1. Module de stator (2) destiné à entraîner électromagnétiquement un rotor (20) d'un système d'entraînement planaire, dans lequel le module de stator (2) comporte (1)
un module de connexion (100) qui est conçu pour fournir une énergie d'entraînement,
un module de puissance (300) qui comporte une unité de production de courant (306) conçue pour produire un courant d'entraînement entraînant le rotor (20) à partir de l'énergie d'entraînement,
une unité de stator (400) qui comporte un conducteur de bobine (402) auquel peut être appliqué le courant d'entraînement pour la production d'un champ magnétique entraînant le rotor (20), et
un module de capteur (200) qui comporte une unité de détection de position (206) conçue pour détecter une position du rotor (20) au-dessus de l'unité de stator (400),
**caractérisé en ce que**
le module de capteur (200) est agencé dans un boîtier de module (500) et le boîtier de module (500) renferme le module de capteur (200),
dans lequel l'unité de stator (400) et le module de puissance (300) agencé sous l'unité de stator sont agencés contre une face supérieure (551) sur un capot de boîtier (510) du boîtier de module (500),
dans lequel le module de connexion (100) est agencé contre une face inférieure (552) opposée à la face supérieure (551) sur un fond de boîtier (520) du boîtier de module (500),
dans lequel l'unité de production de courant (306) du module de puissance (300) et le module de connexion (100) sont reliés par l'intermédiaire d'un câble d'énergie d'entraînement (128) pour la transmission de l'énergie d'entraînement fournie,
dans lequel le câble d'énergie d'entraînement (128) passe à travers le boîtier de module (500), s'étend du module de connexion (100) à travers le fond de boîtier (520) dans le boîtier de module (500), à travers une découpe de liaison (220) du module de capteur (200) et à travers le capot de boîtier (510) jusqu'au module de puissance (300) et est réalisé de manière électriquement isolée du module de capteur (200) dans le boîtier de module (500).

2. Module de stator (2) selon la revendication 1,
dans lequel le module de connexion (100) est conçu pour fournir à l'unité de production de courant (306) une énergie de fonctionnement nécessaire pour produire le courant d'entraînement à partir de l'énergie d'entraînement,
dans lequel le module de connexion (100) et l'unité de production de courant (306) sont reliés par l'intermédiaire d'un câble d'énergie de fonctionnement (129) pour la transmission de l'énergie de fonctionnement fournie,
dans lequel le câble d'énergie de fonctionnement (129) passe à travers le boîtier de module (500) et est conçu de manière électriquement isolée du module de capteur (200) dans le boîtier de module (500).

3. Module de stator (2) selon l'une des revendications précédentes,
dans lequel le module de stator (2) est conçu pour fournir une énergie d'alimentation nécessaire au fonctionnement de l'unité de détection de position (206),
dans lequel le module de puissance (300) et le module de capteur (200) sont reliés l'un à l'autre par l'intermédiaire d'un câble d'alimentation (250) pour la fourniture de l'énergie d'alimentation,
dans lequel une partie (251) du câble d'alimentation (250) est amenée à passer du module de puissance (300) à travers la face supérieure (551) du boîtier de module (500) jusqu'au module de capteur (200) dans le boîtier de module (500).

4. Module de stator (2) selon l'une des revendications précédentes,
dans lequel le module de capteur (200) comprend une unité de commande d'entraînement (210) qui est conçue pour produire un signal de commande destiné à commander l'unité de production de courant (306),
dans lequel l'unité de commande d'entraînement (210) est connectée à l'unité de production de courant (306) du module de puissance (300) pour la transmission du signal de commande par l'intermédiaire d'un câble de commande (239) passant à travers la face supérieure (551) du boîtier de module (500).

5. Module de stator (2) selon l'une des revendications précédentes,
dans lequel le module de connexion (100) est conçu pour être connecté à un réseau de données externe (16),
dans lequel le module de capteur (200) comporte une unité de traitement de position (214) qui est conçue pour échanger par l'intermédiaire du réseau de données externe (16) une information de position du rotor (20) obtenue de l'unité de détection de position (206),
dans lequel le module de connexion (100) et le réseau de données externe (16) sont reliés à l'unité de traitement de position (214) du module de capteur (200) par l'intermédiaire d'un câble de données (132) pour l'échange de l'information de position,
dans lequel le câble de données (132) est amené à passer du module de connexion (100) au module de capteur (200) à travers la face inférieure (552) du boîtier de module (500) .

6. Module de stator (2) selon les revendications 4 et 5,
dans lequel l'unité de commande d'entraînement (210) est conçue pour échanger des données de commande pour la commande de l'unité de production de courant (306) par l'intermédiaire du câble de données (132) et du réseau de données externe (16),
dans lequel l'unité de commande d'entraînement (210) et l'unité de traitement de position (214) sont chacune conçues pour communiquer en tant que participants indépendants à la communication par l'intermédiaire du réseau de données externe (16).

7. Module de stator (2) selon l'une des revendications précédentes,
pourvu d'un circuit intermédiaire (130) destiné à fournir l'énergie d'entraînement sous la forme d'une tension continue au moyen d'une tension de circuit intermédiaire (133),
dans lequel l'unité de production de courant (306) est connectée au circuit intermédiaire (130) et est conçue pour produire, en tant qu'onduleur, le courant d'entraînement à partir de la tension de circuit intermédiaire (133),
dans lequel le circuit intermédiaire (130) est agencé sur le module de puissance (300), le câble d'énergie d'entraînement (128) et le module de connexion (100).

8. Module de stator (2) selon la revendication 7,
dans lequel le module de connexion (100) comprend une unité de conversion (102),
dans lequel l'unité de conversion (102) est connectée au circuit intermédiaire (130) et est conçue pour produire, en tant que redresseur, la tension de circuit intermédiaire (133) à partir d'une énergie électrique d'alimentation fournie par l'intermédiaire d'un câble d'alimentation en énergie externe (10).
